(19) Europäisches Patentamt
European Patent Office
Office européen des brevets

(11) **EP 1 213 884 B1**

(12) **FASCICULE DE BREVET EUROPEEN**

(45) Date de publication et mention
de la délivrance du brevet:
**14.03.2007 Bulletin 2007/11**

(51) Int Cl.:
***H04L 25/03*** *(2006.01)*

(21) Numéro de dépôt: **01112095.3**

(22) Date de dépôt: **29.05.2001**

(54) **Procédé et dispositif d'estimation des valeurs successives de symboles numériques, en particulier pour l'égalisation d'un canal de transmission d'informations en téléphonie mobile**

Verfahren und Vorrichtung zur Schätzung der aufeinanderfolgenden Werte digitaler Symbole insbesondere für die Entzerrung eines Datenübertragungskanals in der Mobiltelephonie

Process and device of sucessive value estimations of numerical symbols, in particular for the equalization of a data communication channel of information in mobile telephony

(84) Etats contractants désignés:
**DE FR GB IT**

(30) Priorité: **04.12.2000 EP 00125395**

(43) Date de publication de la demande:
**12.06.2002 Bulletin 2002/24**

(73) Titulaire: **STMicroelectronics N.V.**
**1077 XX Amsterdam (NL)**

(72) Inventeur: **Chappaz, David**
**74160 Saint Julien en Genevois (FR)**

(74) Mandataire: **Dossmann, Gérard**
**Bureau Casalonga & Josse**
**Bayerstrasse 71/73**
**80335 München (DE)**

(56) Documents cités:
**EP-A- 0 858 196        US-A- 5 144 644**
**US-A- 5 375 129**

• **MUELLER S H ET AL: "REDUCED-STATE SOFT-OUTPUT TRELLIS-EQUALIZATION INCORPORATING SOFT FEEDBACK" GLOBAL TELECOMMUNICATIONS CONFERENCE (GLOBECOM),US,NEW YORK, IEEE, 18 novembre 1996 (1996-11-18), pages 95-100, XP000742133 ISBN: 0-7803-3337-3**

**Description**

L'invention concerne l'estimation des valeurs successives de symboles numériques pouvant prendre chacun M valeurs possibles différentes.

L'invention s'applique avantageusement mais non exclusivement à l'égalisation d'un canal de transmission d'informations, par exemple dans le domaine du téléphone mobile cellulaire, tel que celui prévu dans le système GSM.

Un canal de transmission véhicule des informations depuis un émetteur jusqu'à un récepteur via un moyen de propagation. Ce moyen de propagation peut être l'air dans le cas des téléphones mobiles cellulaires, ou bien tout autre moyen de propagation tel qu'un câble, par exemple, dans d'autres applications.

Un facteur fondamental de limitation des performances d'un système de communication numérique est le phénomène bien connu de l'homme du métier, dénommé « interférence inter-symboles ».

Une telle interférence inter-symboles provoque au niveau du récepteur une occupation temporelle de chaque symbole transmis (« bit », par exemple), supérieure à la durée initiale dudit symbole (encore appelée « temps bit », par exemple).

En d'autres termes, le signal reçu à un instant donné ne dépend pas d'un seul symbole (bit, par exemple), mais également des autres symboles (bits) émis qui s'étendent sur des durées supérieures à celles d'un temps-symbole (temps-bit).

En pratique, le signal reçu à un instant donné dépend des symboles considérés, mais également essentiellement des symboles adjacents.

Les causes des interférences inter-symboles sont multiples.

L'une d'entre elles est due notamment aux propagations multiples du signal entre l'émetteur et le récepteur lorsque le signal est réfléchi ou diffracté par différents obstacles, conduisant à la réception à plusieurs copies du signal, mutuellement décalées temporellement.

Par ailleurs, non seulement le moyen de propagation entre l'émetteur et le récepteur engendre ces interférences entre symboles, mais également les dispositifs d'émission-réception eux-mêmes (modulateur, filtre, ...).

Lors des communications avec interférences entre symboles, se pose le problème d'estimer la réponse impulsionnelle du canal de transmission. De la qualité de cette estimation, dépend la capacité que l'on a à supprimer l'interférence entre symboles, et donc à prendre les décisions correctes sur les symboles émis.

Généralement, l'estimation de la réponse impulsionnelle du canal, ou plus simplement « estimation de canal », s'effectue, dans le domaine du téléphone GSM notamment, en utilisant des techniques de moindre carré et en utilisant une séquence de symbole prédéterminée et connue de l'émetteur et du récepteur, et dénommée par l'homme du métier sous le vocable de « séquence d'apprentissage » («training sequence»). Cette séquence d'apprentissage est présente au sein de chaque train (« burst ») de symbole émis. Lorsque les caractéristiques du canal sont suffisamment bien estimées, on utilise les coefficients estimés de la réponse impulsionnelle du canal dans un traitement dit « d'égalisation », également bien connu de l'homme du métier, pour déchiffrer le signal reçu, c'est-à-dire retrouver les valeurs logiques des symboles (données) émis dans le train.

Le traitement d'égalisation est classiquement suivi par les traitements dits « de décodage de canal » destinés à corriger autant que faire se peut, d'éventuelles erreurs. Le décodage de canal est lui-même classiquement suivi d'un autre décodage, dit « décodage de source », destiné à reconstituer les informations (parole par exemple) initialement codées au niveau de l'émetteur.

Au niveau du récepteur, on reçoit un signal qui comporte des versions temporellement plus ou moins retardées du signal émis avec des gains pouvant être différents. Le traitement d'égalisation de canal consiste à inverser l'effet du canal pour obtenir des échantillons représentatifs d'un seul symbole. L'algorithme de Viterbi fait partie des traitements classiques et bien connus de l'homme du métier pour égaliser le canal lors des transmissions avec interférences entre symboles. Plus précisément, lorsque le canal de transmission a une réponse impulsionnelle à L coefficients par exemple, et délivre des échantillons numériques successifs correspondant à des symboles successivement émis pouvant prendre chacun M valeurs possibles différentes, l'estimation des valeurs successives des symboles en utilisant l'algorithme de Vitervbi comporte une progression étage par étage dans un treillis dont tous les états de tous les étages sont respectivement affectés de «métriques cumulées» selon une dénomination bien connue de l'homme du métier. Ces métriques cumulées sont par exemple des informations d'erreurs cumulées (par exemple calculées à l'aide d'une norme euclidienne) entre les valeurs observées et les valeurs attendues des échantillons (sur la base d'hypothèse sur les valeurs des symboles). Un dispositif pour une telle évaluation est décrite dans le document US-A-5 375 129.

Dans une implémentation classique, le nombre d'états du treillis est égal à $M^{L-1}$, M désignant le nombre de valeurs possibles différentes que peuvent prendre chacun des symboles, à l'étape n, c'est-à-dire à la prise en compte de l'échantillon de rang n, on prend $M^{L-1}$ décisions sur le symbole de rang n-L+1 (sachant qu'in fine, il faudra produire une et une seule décision, ce qui est obtenu par une remontée du chemin le plus probable). Chacune de ces décisions, encore couramment désignée par l'homme du métier sous la dénomination de « décision dure » («hard decision» en langue anglaise), est affectée d'un indice de confiance-symbole, ou «confiance ».

Par ailleurs, à chaque noeud ou état de l'étage de rang n, convergent M chemins ou transitions, respectivement issus de M états ou noeuds de l'étage précédent, et correspondant aux M différentes valeurs du symbole de rang n-L+1. Le chemin dit « survivant », selon une dénomination connue de l'homme du métier, permettant la progression dans le treillis d'un étage à l'autre, est choisi comme étant celui ayant la métrique cumulée minimale.

Après un retard suffisamment long, typiquement un retard correspondant à 5L échantillons, toutes les séquences survivantes sont supposées prendre la même décision dure avec une forte probabilité. On prend alors une décision sur le symbole de rang n-5L-(L-1). Plus précisément, pour connaître la décision dure et l'indice de confiance-symbole associé à cette décision, on remonte le chemin ayant la métrique cumulée minimale.

Outre le fait qu'un tel traitement d'estimation permet d'obtenir des décisions sur les symboles avec un retard relativement important, il est nécessaire de mémoriser pendant ce laps de temps, d'une part toutes les décisions dures intermédiaires le long des différents chemins survivants, et d'autre part tous les indices de confiance associés, pour retrouver finalement sur le symbole de rang n-5L-(L-1), sa valeur et son indice de confiance-symbole. Ces mémorisations sont faites dans deux tableaux, l'un de symboles, l'autre d'indices de confiance-symbole, qui comportent chacun $M^{L-1}$ lignes et 5L colonnes. Cette taille est d'autant plus importante que la modulation est d'ordre élevé, c'est-à-dire que M est grand.

L'invention vise à remédier à cet inconvénient.

Un but de l'invention est de proposer une estimation qui permette de prendre des décisions dures plus rapidement et qui ne nécessite quasiment pas de mémoire, comparativement à la taille-mémoire nécessaire dans l'art antérieur, pour l'élaboration des décisions et des indices de confiance-symbole correspondant à ces décisions.

L'invention a également pour but d'élaborer des indices de confiance-bits associés aux différents bits des symboles.

L'invention propose donc un procédé d'estimation de valeurs successives de symboles numériques pouvant prendre chacun M valeurs possibles différentes, à partir des valeurs successives d'échantillons numériques dont chacun résulte de la combinaison d'au plus L symboles successifs. Ce procédé comporte une progression étage par étage dans un treillis du type Viterbi ayant $M^k$ états, k étant inférieur ou égal à L-1, tous les états de tous les étages étant respectivement affectés de métriques cumulées.

Selon une caractéristique générale de l'invention, à la prise en compte de l'échantillon de rang n, on partitionne en M groupes toutes les transitions parvenant aux différents états de l'étage courant du treillis, chaque groupe contenant toutes les transitions issues des états de l'étage précédent associés à l'une des M valeurs possibles du symbole de rang n-k. On calcule pour ces différents états de l'étage courant du treillis les différentes métriques cumulées. On détermine dans chaque groupe celle des transitions qui conduit à l'état affecté d'une métrique cumulée extremale. Et, on prend une décision unique sur la valeur du symbole de rang n-k en détectant le groupe associé à l'extremum de ces M métriques cumulées extremales, cette décision unique étant affectée d'un indice de confiance-symbole élaboré à partir de ces M métriques cumulées extremales.

L'invention s'applique avantageusement mais non limitativement à l'égalisation d'un canal de transmission d'informations. Pour une telle application, le nombre L désigne alors également le nombre de coefficients de la réponse impulsionnelle du canal de transmission. Le canal de transmission délivre des échantillons numériques successifs correspondant à des symboles successivement émis pouvant prendre chacun M valeurs possibles différentes. Là encore, d'une façon analogue à ce qui a été évoqué ci-avant, selon l'invention, à la réception de l'échantillon de rang n, on partitionne en M groupes toutes les transitions parvenant aux différents états de l'étage courant du treillis du type Viterbi. Et, on effectue les mêmes traitements élémentaires que ceux qui viennent d'être évoqués, de façon à prendre une décision unique sur la valeur du symbole de rang n-k et à élaborer un indice de confiance-symbole affecté à cette décision unique.

L'invention s'applique à un treillis complet (k=L-1) ou à un treillis réduit (k<L-1).

Les métriques cumulées peuvent être des informations d'erreurs cumulées entre les valeurs observées et les valeurs attendues des échantillons (sur la base d'hypothèse sur les valeurs des symboles). Dans ce cas, selon un mode de mise en oeuvre du procédé selon l'invention, on détermine dans chaque groupe celle des transitions qui conduit à l'état affecté d'une métrique cumulée minimale. Et, on prend une décision unique sur la valeur du symbole de rang n-k en détectant le groupe associé à la plus faible de ces M métriques cumulées minimales. La décision unique est affectée d'un indice de confiance-symbole élaboré à partir de ces M métriques cumulées minimales.

Lorsque le nombre M est égal à 2, c'est-à-dire lorsqu'on est dans le cas d'une modulation binaire, la détection du groupe associé à la plus faible des deux métriques cumulées minimales comporte le calcul de la différence entre les deux métriques cumulées minimales. Le signe de cette différence fournit alors ladite décision unique sur la valeur du symbole de rang n-k. La valeur absolue de cette différence fournit la valeur dudit indice de confiance-symbole.

Dans le cas où M est supérieur à 2, par exemple pour une modulation 4 PSK ou 8 PSK, la détection du groupe associé à la plus faible des M métriques cumulées minimales comporte une première sélection de la plus faible de ces M métriques cumulées minimales. L'élaboration de l'indice de confiance-symbole affecté à ladite décision unique comporte une deuxième sélection, parmi les M-1 métriques cumulées minimales restantes non sélectionnée à l'issue de ladite première sélection, de la plus faible de ces M-1 métriques cumulées minimales restantes, et le calcul de la différence entre les deux métriques cumulées minimales respectivement issues de la première et de la deuxième sélections. La valeur positive de cette différence fournit la valeur dudit indice de confiance-symbole.

En variante, les métriques cumulées peuvent être des informations de ressemblance cumulées entre les valeurs observées et les valeurs attendues des échantillons (sur la base d'hypothèse sur les valeurs des symboles). Dans un tel cas, selon un mode de mise en oeuvre de l'invention, on détermine dans chaque groupe celle des transitions qui conduit à l'état affecté d'une métrique cumulée maximale, et on prend une décision unique sur la valeur du symbole de rang n-k en détectant le groupe associé à la plus grande de ces M métriques cumulées maximales. Cette décision unique est affectée d'un indice de confiance-symbole élaboré à partir de ces M métriques cumulées maximales.

Lorsque M est égal à 2, la décision du groupe associé à la plus grande des deux métriques cumulées maximales comporte le calcul de la différence entre les deux métriques cumulées maximales. Le signe de cette différence fournit ladite décision unique sur la valeur du symbole de rang n-k. La valeur absolue de cette différence fournit la valeur dudit indice de confiance-symbole.

Selon un mode de mise en oeuvre, lorsque M est supérieur à 2, la détection du groupe associé à la plus grande des M métriques cumulées maximales comporte une première sélection de la plus grande de ces M métriques cumulées maximales. L'élaboration de l'indice de confiance-symbole affecté à ladite décision unique comporte une deuxième sélection, parmi les M-1 métriques cumulées maximales restantes non sélectionnées à l'issue de ladite première sélection, de la plus grande de ces M-1 métriques cumulées maximales restantes, et le calcul de la différence entre les deux métriques cumulées maximales respectivement issues de la première et de la deuxième sélections, la valeur positive de cette différence fournissant la valeur dudit indice de confiance-symbole.

Comme indiqué ci-avant, l'un des buts de l'invention est d'élaborer un indice de confiance-bit pour chacun des bits du symbole de rang n-k élu à l'issue de ladite décision unique. Plus précisément, selon un mode de mise en oeuvre de l'invention, lorsque chaque symbole est formé de b bits, avec M égal à $2^b$, on élabore cet indice de confiance pour chacun des bits du symbole de rang n-k élu à l'issue de ladite décision unique, en utilisant ledit symbole élu et au moins un symbole auxiliaire élaboré à partir dudit symbole élu en complémentant au moins la valeur du bit considéré.

Plusieurs variantes sont possibles pour élaborer l'indice de confiance-bit pour un bit considéré du symbole élu.

Selon une première variante, dans laquelle les métriques cumulées sont des informations d'erreurs, cette élaboration de l'indice de confiance-bit pour un bit considéré du symbole élu, comporte :

- une première étape dans laquelle on élabore un seul symbole auxiliaire en complémentant uniquement la valeur du bit considéré tout en laissant inchangées les valeurs des autres bits du symbole élu,
- une deuxième étape dans laquelle on sélectionne la métrique cumulée minimale associée au groupe de transitions auquel appartient ledit symbole auxiliaire, et
- une troisième étape dans laquelle on effectue la différence entre la métrique cumulée minimale associée au groupe de transitions auquel appartient ledit symbole élu et la métrique cumulée minimale associée au groupe de transitions auquel appartient ledit symbole auxiliaire, le résultat de cette différence fournissant la valeur dudit indice de confiance-bit.

Selon une deuxième variante de l'invention, dans laquelle les métriques cumulées sont des informations d'erreurs, l'élaboration de l'indice de confiance-bit pour un bit considéré du symbole élu comporte :

- une première étape dans laquelle on élabore un ensemble de symboles auxiliaires en complémentant la valeur du bit considéré et en conférant respectivement aux autres bits du symbole élu toutes les valeurs possibles,
- une deuxième étape dans laquelle on sélectionne respectivement les métriques cumulées minimales associées aux groupes de transitions auxquels appartiennent respectivement les symboles auxiliaires,
- une troisième étape dans laquelle on sélectionne la plus faible des métriques cumulées minimales respectivement sélectionnées à la deuxième étape, et
- une quatrième étape dans laquelle on effectue la différence entre la métrique cumulée minimale associée au groupe de transitions auquel appartient ledit symbole élu et la métrique cumulée minimale sélectionnée à la troisième étape, le résultat de cette différence fournissant la valeur dudit indice de confiance-bit.

Selon une autre variante de l'invention, dans laquelle les métriques cumulées sont des informations de ressemblance, l'élaboration de l'indice de confiance-bit pour un bit considéré du symbole élu comporte :

- une première étape dans laquelle on élabore un seul symbole auxiliaire en complémentant uniquement la valeur du bit considéré tout en laissant inchangées les valeurs des autres bits du symbole élu,
- une deuxième étape dans laquelle on sélectionne la métrique cumulée maximale associée au groupe de transitions auquel appartient ledit symbole auxiliaire, et

- une troisième étape dans laquelle on effectue la différence entre la métrique cumulée maximale associée au groupe de transitions auquel appartient ledit symbole auxiliaire, le résultat de cette différence fournissant la valeur dudit indice de confiance-bit.

Selon encore une autre variante de l'invention, dans laquelle les métriques cumulées sont toujours des informations de ressemblance, l'élaboration de l'indice de confiance-bit pour un bit considéré du symbole élu comporte :

- une première étape dans laquelle on élabore un ensemble de symboles auxiliaires en complémentant la valeur du bit considéré et en conférant respectivement aux autres bits du symbole élu toutes les valeurs possibles,
- une deuxième étape dans laquelle on sélectionne respectivement les métriques cumulées maximales associées aux groupes de transitions auxquels appartiennent respectivement les symboles auxiliaires,
- une troisième étape dans laquelle on sélectionne la plus grande des métriques cumulées maximales respectivement sélectionnées à la deuxième étape, et
- une quatrième étape dans laquelle on effectue la différence entre la métrique cumulée maximale associée au groupe de transitions auquel appartient ledit symbole élu et la métrique cumulée maximale sélectionnée à la troisième étape, le résultat de cette différence fournissant la valeur dudit indice de confiance-bit.

L'invention a également pour objet un dispositif d'estimation des valeurs successives de symboles numériques pouvant prendre chacun M valeurs possibles différentes. Ce dispositif comporte des moyens de réception aptes à recevoir des valeurs successives d'échantillons numériques dont chacun résulte de la combinaison d'au plus L symboles successifs, et des moyens d'estimation aptes à estimer les valeurs successives des symboles en progressant étage par étage dans un treillis du type Viterbi ayant $M^k$ états, $k \leq L-1$, tous les états de tous les étages étant respectivement affectés de métriques cumulées.

Selon une caractéristique générale de l'invention, les moyens d'estimation comportent :

- des moyens de partitionnement aptes, à la prise en compte de l'échantillon de rang n, à partitionner en M groupes toutes les transitions parvenant aux différents états de l'étage courant du treillis, chaque groupe contenant toutes les transitions issues des états de l'étage précédent associés à l'une des M valeurs possibles du symbole de rang n-k,
- des moyens de calcul aptes à calculer pour ces différents états de l'étage courant du treillis les différentes métriques cumulées,
- des moyens de détermination aptes à déterminer dans chaque groupe celle des transitions qui conduit à l'état affecté de la métrique cumulée extremale,
- des moyens de prise de décision aptes à prendre une unique décision sur la valeur du symbole de rang n-k en détectant le groupe associé à l'extremum de ces M métriques cumulées extremales, et
- des premiers moyens d'élaboration aptes à élaborer, à partir de ces M métriques cumulées extremales, un indice de confiance-symbole affecté à cette décision unique.

L'invention a également pour objet un dispositif d'égalisation d'un canal de transmission d'informations, comportant une mémoire contenant L coefficients représentatifs de la réponse impulsionnelle du canal de transmission, des moyens de réception aptes à recevoir des échantillons numériques successifs correspondant à des symboles successivement émis, pouvant prendre chacun M valeurs possibles différentes, et un bloc d'égalisation comportant des moyens d'estimation aptes à estimer les valeurs successives des symboles en progressant étage par étage dans un treillis du type Viterbi ayant $M^k$ états, $k \leq L-1$, tous les états de tous les étages étant respectivement affectés de métriques cumulées.

Selon une caractéristique générale de l'invention, les moyens d'estimation comportent :

- des moyens de partitionnement aptes, à la réception de l'échantillon de rang n, à partitionner en M groupes toutes les transitions parvenant aux différents états de l'étage correspondant courant du treillis, chaque groupe contenant toutes les transitions issues des états de l'étage précédent associés à l'une des M valeurs possibles du symbole de rang n-k,
- des moyens de calcul aptes à calculer pour ces différents états de l'étage courant du treillis les différentes métriques cumulées,
- des moyens de détermination aptes à déterminer dans chaque groupe celle des transitions qui conduit à l'état affecté d'une métrique cumulée extremale,
- des moyens de prise de décision aptes à prendre une unique décision sur la valeur du symbole de rang n-k en détectant le groupe associé à l'extremum de ces M métriques cumulées extremales, et
- des premiers moyens d'élaboration aptes à élaborer, à partir de ces M métriques cumulées extremales, un indice de confiance symbole affecté à cette décision unique.

Selon un mode de réalisation, dans lequel les métriques cumulées sont des informations d'erreurs cumulées entre les valeurs observées et les valeurs attendues des échantillons (sur la base d'hypothèse sur les valeurs des symboles), les moyens de détermination sont aptes à déterminer dans chaque groupe celle des transitions qui conduit à l'état affecté d'une métrique cumulée minimale. Les moyens de prise de décision sont aptes à prendre une décision unique sur la valeur du symbole de rang n-k en détectant le groupe associé à la plus faible de ces M métriques cumulées minimales. Les premiers moyens d'élaboration sont alors aptes à élaborer l'indice de confiance-symbole à partir de ces M métriques cumulées minimales.

Selon un mode de réalisation de l'invention, dans lequel M est égal à 2, les moyens de prise de décision comportent un soustracteur apte à calculer la différence entre les deux métriques cumulées minimales, le signe de cette différence fournissant ladite décision unique sur la valeur du symbole de rang n-k. Les premiers moyens d'élaboration comportent ledit soustracteur, la valeur absolue de la différence calculée par le soustracteur fournissant la valeur dudit indice de confiance-symbole.

Selon un mode de réalisation de l'invention, dans lequel M est supérieur à 2, les moyens de prise de décision comportent des premiers moyens de sélection aptes à effectuer une première sélection de la plus faible de ces M métriques cumulées minimales. Les premiers moyens d'élaboration comportent des deuxièmes moyens de sélection aptes à effectuer une deuxième sélection, parmi les M-1 métriques cumulées minimales restantes non sélectionnées à l'issue de ladite première sélection, de la plus faible de ces M-1 métriques cumulées minimales restantes, et un soustracteur apte à calculer la différence entre les deux métriques cumulées minimales respectivement issues de la première et de la deuxième sélections, la valeur positive de cette différence fournissant la valeur dudit indice de confiance-symbole.

Selon un mode de réalisation de l'invention, dans lequel les métriques cumulées sont des informations de ressemblances cumulées entre les valeurs observées et les valeurs attendues des échantillons (sur la base d'hypothèse sur les valeurs des symboles), les moyens de détermination sont aptes à déterminer dans chaque groupe celle des transitions qui conduit à l'état affecté d'une métrique cumulée maximale. Les moyens de prise de décision sont aptes à prendre une décision unique sur la valeur du symbole de rang n-k en détectant le groupe associé à la plus grande de ces M métriques cumulées maximales. Et, les premiers moyens d'élaboration sont aptes à élaborer l'indice de confiance-symbole à partir de ces M métriques cumulées maximales.

Lorsque M est égal à 2 et que les métriques sont des informations de ressemblance, les moyens de prise de décision comportent avantageusement un soustracteur apte à calculer la différence entre les deux métriques cumulées maximales, le signe de cette différence fournissant ladite décision unique sur la valeur du symbole de rang n-k. Les premiers moyens d'élaboration comportent avantageusement ledit soustracteur, la valeur absolue de la différence calculée par le soustracteur fournissant la valeur dudit indice de confiance-symbole.

Selon un mode de réalisation de l'invention, lorsque M est supérieur à 2 et que les métriques sont des informations de ressemblance, les moyens de prise de décision comportent des premiers moyens de sélection aptes à effectuer une première sélection de la plus grande de ces M métriques cumulées maximales. Les premiers moyens d'élaboration comportent des deuxièmes moyens de sélection aptes à effectuer une deuxième sélection, parmi les M-1 métriques cumulées maximales restantes non sélectionnées à l'issue de ladite première sélection, de la plus grande de ces M-1 métriques cumulées maximales restantes, et un soustracteur apte à calculer la différence entre les deux métriques cumulées maximales respectivement issues de la première et de la deuxième sélections, la valeur positive de cette différence fournissant la valeur dudit indice de confiance-symbole.

Selon un mode de réalisation de l'invention, dans lequel chaque symbole est formé de b bits, avec M égal à $2^b$, le dispositif comprend des deuxièmes moyens d'élaboration aptes à élaborer un indice de confiance-bit pour chacun des bits du symbole de rang n-k élu à l'issue de ladite décision unique, en utilisant ledit symbole élu et au moins un symbole auxiliaire élaboré à partir dudit symbole élu en complémentant au moins la valeur du bit considéré.

Selon un mode de réalisation de l'invention, compatible avec des informations d'erreurs cumulées considérées comme des métriques cumulées, les deuxièmes moyens d'élaboration comportent :

- des moyens d'élaboration auxiliaires aptes à élaborer un seul symbole auxiliaire en complémentant uniquement la valeur du bit considéré tout en laissant inchangées les valeurs des autres bits du symbole élu,
- des moyens de sélection auxiliaires aptes à sélectionner la métrique cumulée minimale associée au groupe de transitions auquel appartient ledit symbole auxiliaire, et
- un soustracteur auxiliaire apte à effectuer la différence entre la métrique cumulée minimale associée au groupe de transitions auquel appartient ledit symbole élu et la métrique cumulée minimale associée au groupe de transitions auquel appartient ledit symbole auxiliaire, le résultat de cette différence fournissant la valeur dudit indice de confiance-bit.

Selon un autre mode de réalisation de l'invention, également compatible avec des informations d'erreurs cumulées considérées comme des métriques cumulées, les deuxièmes moyens d'élaboration comportent

- des moyens d'élaboration auxiliaires aptes à élaborer un ensemble de symboles auxiliaires en complémentant la valeur du bit considéré et en conférant respectivement aux autres bits du symbole élu toutes les valeurs possibles,

- des premiers moyens de sélection auxiliaires aptes à sélectionner respectivement les métriques cumulées minimales associées aux groupes de transitions auxquels appartiennent respectivement les symboles auxiliaires,
- des deuxièmes moyens de sélection auxiliaires aptes à sélectionner la plus faible des métriques cumulées minimales respectivement sélectionnées par les premiers moyens de sélection auxiliaires, et
- un soustracteur auxiliaire apte à effectuer la différence entre la métrique cumulée minimale associée au groupe de transitions auquel appartient ledit symbole élu et la métrique cumulée minimale sélectionnée par les deuxièmes moyens de sélection auxiliaires, le résultat de cette différence fournissant la valeur dudit indice de confiance-bit.

Selon un autre mode de réalisation de l'invention, compatible avec des informations de ressemblance cumulées considérées en tant que métriques cumulées, les deuxièmes moyens d'élaboration comportent :

- des moyens d'élaboration auxiliaires aptes à élaborer un seul symbole auxiliaire en complémentant uniquement la valeur du bit considéré tout en laissant inchangées les valeurs des autres bits du symbole élu,
- des moyens de sélection auxiliaires aptes à sélectionner la métrique cumulée maximale associée au groupe de transitions auquel appartient ledit symbole auxiliaire, et
- un soustracteur auxiliaire apte à effectuer la différence entre la métrique cumulée maximale associée au groupe de transitions auquel appartient ledit symbole élu et la métrique cumulée maximale associée au groupe de transitions auquel appartient ledit symbole auxiliaire, le résultat de cette différence fournissant la valeur dudit indice de confiance-bit.

Selon un autre mode de réalisation de l'invention, également compatible avec des informations de ressemblance cumulées considérées en tant que métriques cumulées, les deuxièmes moyens d'élaboration comportent :

- des moyens d'élaboration auxiliaires aptes à élaborer un ensemble de symboles auxiliaires en complémentant la valeur du bit considéré et en conférant aux autres bits du symbole élu toutes les valeurs possibles,
- des premiers moyens de sélection auxiliaires aptes à sélectionner respectivement les métriques cumulées maximales associées aux groupes de transitions auxquels appartiennent respectivement les symboles auxiliaires,
- des deuxièmes moyens de sélection auxiliaires aptes à sélectionner la plus grande des métriques cumulées maximales respectivement sélectionnées par les premiers moyens de sélection auxiliaires, et
- un soustracteur auxiliaire apte à effectuer la différence entre la métrique cumulée maximale associée au groupe de transitions auquel appartient ledit symbole élu et la métrique cumulée maximale sélectionnée par les deuxièmes moyens de sélection auxiliaires, le résultat de cette différence fournissant la valeur dudit indice de confiance-bit.

L'invention a également pour objet un récepteur d'informations numériques, en particulier un téléphone mobile cellulaire, incorporant un dispositif tel que défini précédemment.

L'invention a encore pour objet un produit programme d'ordinateur enregistré sur un support utilisable dans un processeur, comprenant des moyens de code-programme mettant en oeuvre le procédé tel que défini ci-avant lorsque le produit est exécuté au sein d'un processeur.

D'autres avantages et caractéristiques de l'invention apparaîtront à l'examen de la description détaillée de modes de mise en oeuvre et de réalisation, nullement limitatifs, et des dessins annexés, sur lesquels :

- la figure 1 représente de façon schématique un synoptique d'un récepteur d'informations incorporant un dispositif selon l'invention ;
- la figure 2 est une représentation mathématique d'un canal de transmission ;
- les figures 3 à 7 illustrent schématiquement, mais plus en détail, l'architecture interne de différents modes de réalisation du dispositif selon l'invention ;
- les figures 8 à 15 représentent des organigrammes schématiques illustrant différents modes de mise en oeuvre du procédé selon l'invention ;

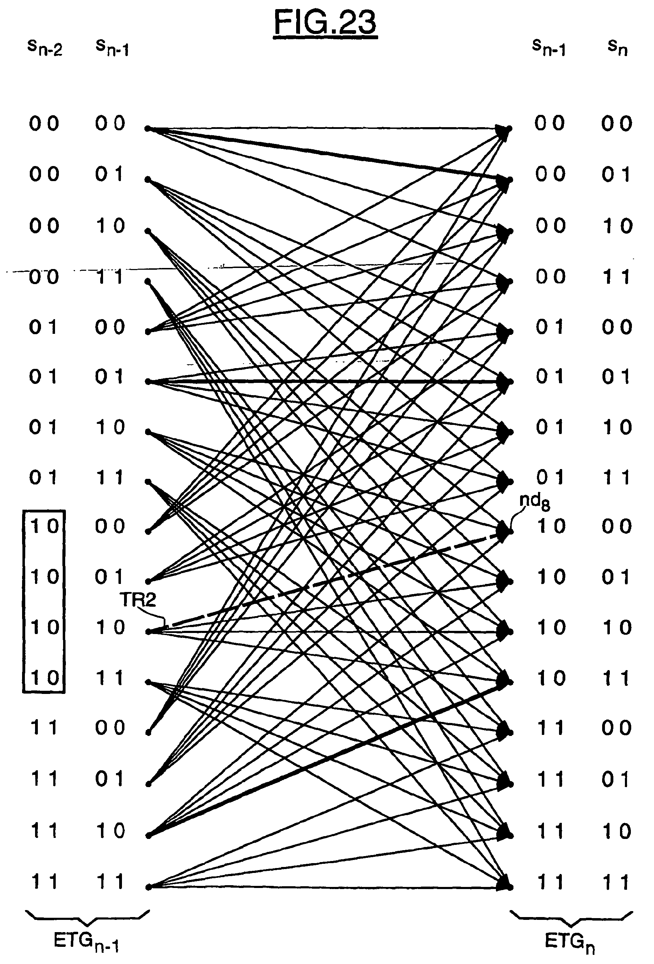

- les figures 16 à 25 illustrent schématiquement, dans un cas particulier, une progression dans un treillis selon l'invention, permettant des mises en oeuvre du procédé selon l'invention ;
- la figure 26 illustre schématiquement une progression dans un treillis réduit ;
- les figures 27 à 30 illustrent une prise de décision selon l'invention dans un treillis réduit ; et
- la figure 31 illustre une autre progression selon l'invention dans un treillis réduit, utilisant les prises de décision selon l'invention.

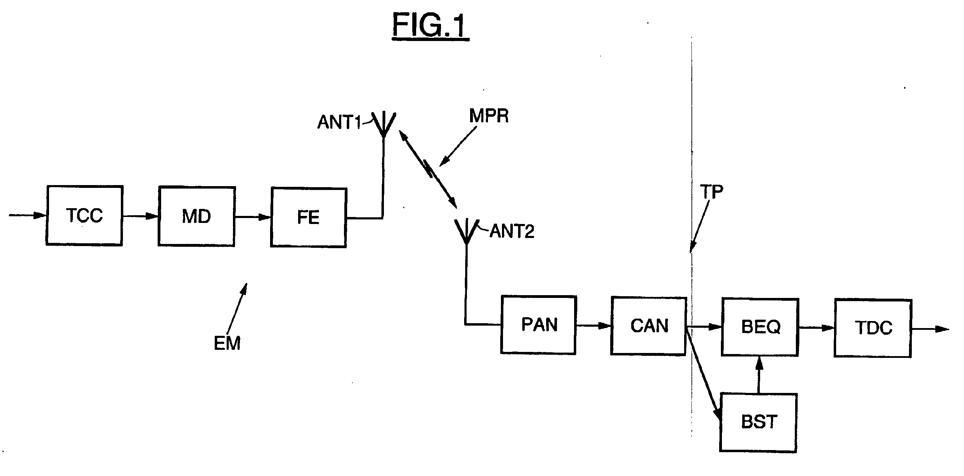

On suppose maintenant, en se référant plus particulièrement à la figure 1, que l'invention s'applique par exemple au domaine du téléphone mobile cellulaire, par exemple ceux du réseau GSM.

Sur la figure 1, la référence EM désigne un émetteur comportant en amont un bloc de codage TCC recevant les données utiles à transmettre, par exemple de la parole, et effectuant notamment des traitements classiques dits « de codage de canal » en introduisant des redondances dans le flot de données. La sortie du bloc TCC consiste en des blocs d'informations binaires.

Le bloc TCC est suivi classiquement d'un modulateur effectuant par exemple une modulation en quadrature du type QPSK ou une modulation à déplacement de phase M-PSK, selon une dénomination bien connue de l'homme du métier et transformant le signal binaire en un signal analogique. Ce signal analogique est ensuite filtré dans un filtre d'émission FE avant d'être émis en direction du récepteur via une antenne ANT1.

Le moyen de propagation MPR entre un émetteur EM et un récepteur TP, constitue ici un téléphone mobile cellulaire, et dans le cas présent l'air.

Le récepteur TP, ou téléphone mobile cellulaire, comporte essentiellement en tête une antenne ANT2 couplée à un étage analogique PAN, réalisant essentiellement une conversion de fréquence pour ramener le signal modulé reçu en bande de base, et un filtrage pour ne conserver que la partie utile du spectre. Après échantillonnage et conversion analogique numérique dans un convertisseur CAN, l'étage numérique a pour rôle de produire une estimation du canal de transmission (bloc BST), de supprimer grâce à ces estimations l'interférence entre symboles (par une égalisation effectuée dans un bloc BEQ), et d'effectuer en général une correction d'erreur, c'est-à-dire un décodage classique de canal (bloc TDC).

Le canal de transmission est formé des éléments situés en amont de l'estimateur de canal, c'est-à-dire notamment des dispositifs analogiques d'émission et de réception ainsi que du moyen de propagation physique proprement dit MPR. Il convient de noter ici qu'il est également possible de trouver et de prendre en compte des traitements numériques (filtrage par exemple) effectués en amont de l'estimateur de canal mais en aval de l'étage de réception analogique.

On suppose, à titre d'exemple, que la réponse impulsionnelle H du canal de transmission pris dans sa globalité est un polynome en $z^{-1}$ à L coeffcients complexes $c_0$-$c_{L-1}$, que l'on cherche à estimer. Une telle estimation est effectuée par exemple de façon classique et connue en elle-même par l'homme du métier. Plus précisément, cette estimation peut être une estimation dite « entraînée », c'est-à-dire utilisant des séquences d'apprentissage formées de successions de bits de valeur connue. On peut utiliser pour résoudre le système mathématique ayant pour inconnus les coefficients de la réponse impulsionnelle du canal, une méthode des moindres carrés qui vise à déterminer le polynome H comme étant le vecteur minimisant la norme (euclidienne) d'un vecteur additionnel représentatif notamment des interférences et du bruit thermique.

Bien entendu, d'autres méthodes sont également utilisables pour estimer les coefficients de la réponse impulsionnelle du canal. Ces autres méthodes sont également bien connues de l'homme du métier et on ne reviendra pas plus en détail ici sur ces autres méthodes.

Il est également possible d'utiliser des estimations dites « aveugles », c'est-à-dire dans lesquelles on n'utilise pas de séquence d'apprentissage prédéterminée.

L'homme du métier connaît également diverses méthodes permettant d'effectuer des estimations aveugles de la réponse impulsionnelle d'un canal. A titre indicatif, on peut citer l'article de Jitendra K. Tugnait, intitulé « Blind Estimation Of Digital Communication Channel Impulse Response », IEEE Transactions On Communications, Vol. 42, N° 2/3/4, Février/Mars/Avril 1994.

Matériellement, l'ensemble du bloc BST peut être réalisé par exemple par un processeur de traitement du signal, les traitements effectués dans ce bloc étant réalisés de façon logicielle. Ceci étant, une réalisation entièrement matérielle (hardware) du bloc BST est également possible, par exemple sous forme d'un circuit intégré spécifique (ASIC).

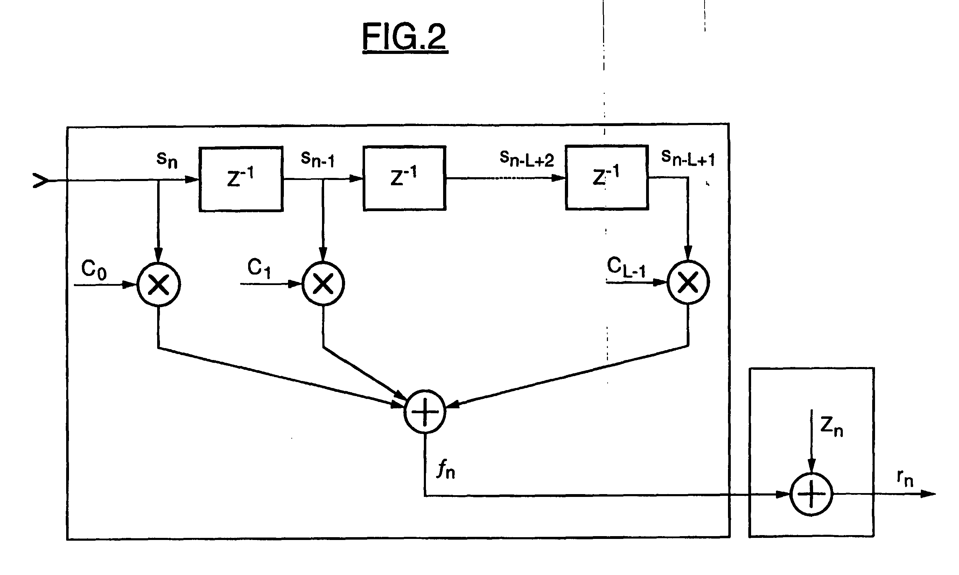

Comme illustré maintenant plus particulièrement sur la figure 2, le canal de transmission est équivalent à un filtre à réponse impulsionnelle finie ayant L coefficient $c_0$-$c_{L-1}$. Chaque échantillon numérique reçu $r_n$ à l'instant n est défini par la formule (I) ci-dessous :

$$r_n = f_n + Z_n \qquad (I)$$

dans laquelle $Z_n$ désigne un échantillon de bruit, et dans laquelle $f_n$ est défini par la formule (II) ci-dessous :

$$f_n = \sum_{i=0}^{L-1} c_i s_{n-i} \qquad (II)$$

$s_i$ désignant le symbole de rang i.

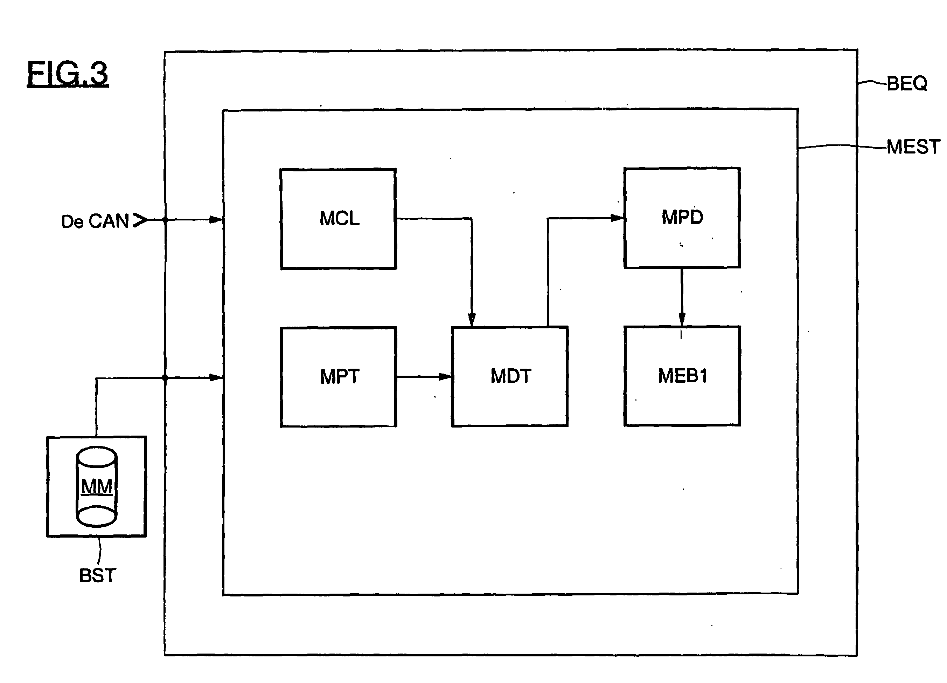

Le bloc d'égalisation BEQ comporte alors des moyens d'estimation MEST (figure 3) aptes à estimer les valeurs successives des symboles $s_i$ en progressant étage par étage dans un treillis du type Viterbi dont tous les états de tous les étages sont respectivement affectés de métriques cumulées.

Pour cela, les moyens d'estimation utilisent les échantillons numériques successivement délivrés par le convertisseur analogique-numérique CAN, ainsi que les L coefficients représentatifs de la réponse impulsionnelle du canal de transmission contenue dans une mémoire MM du bloc BST.

Chaque étage du treillis a, d'une façon générale, au plus $M^{L-1}$ états ou noeud, M désignant les M valeurs possibles différentes que peut prendre chaque symbole $s_i$. Par ailleurs, un treillis du type Viterbi a au plus M transitions ou chemins parvenant à chaque état et issu de certains des états de l'étage précédent.

D'une façon générale, le nombre des états du treillis est égal à $M^k$ ou k est un nombre entier inférieur ou égal à L-1 et supérieur ou égal à 1. Ainsi, d'une façon générale, selon l'invention, à chaque étape de progression dans le treillis, on produit une décision sur le symbole de rang n-k.

Dans le cas où le treillis est un treillis complet, c'est-à-dire dans le cas où il y a une correspondance complète entre un état du canal et un état du treillis plus une transition, le nombre d'états est égal à $M^{L-1}$ (k=L-1) et le nombre de transitions est égal à M.

Ceci étant, l'invention s'applique également à des treillis de Viterbi réduits, c'est-à-dire avec un nombre d'états inférieur à $M^{L-1}$ et/ou un nombre de transitions inférieur à M.

Dans la suite du texte, et pour des raisons de simplification, on s'appuiera sur un exemple de treillis complet à seize états (M = quatre et L = trois) correspondant par exemple à une modulation 4PSK avec un canal de transmission dont la réponse impulsionnelle a trois coefficients.

Dans une modulation 4PSK, chaque symbole s est susceptible de prendre quatre valeurs (par exemple les valeurs 0, 1, 2 et 3 en notation décimale) et est représenté par deux bits.

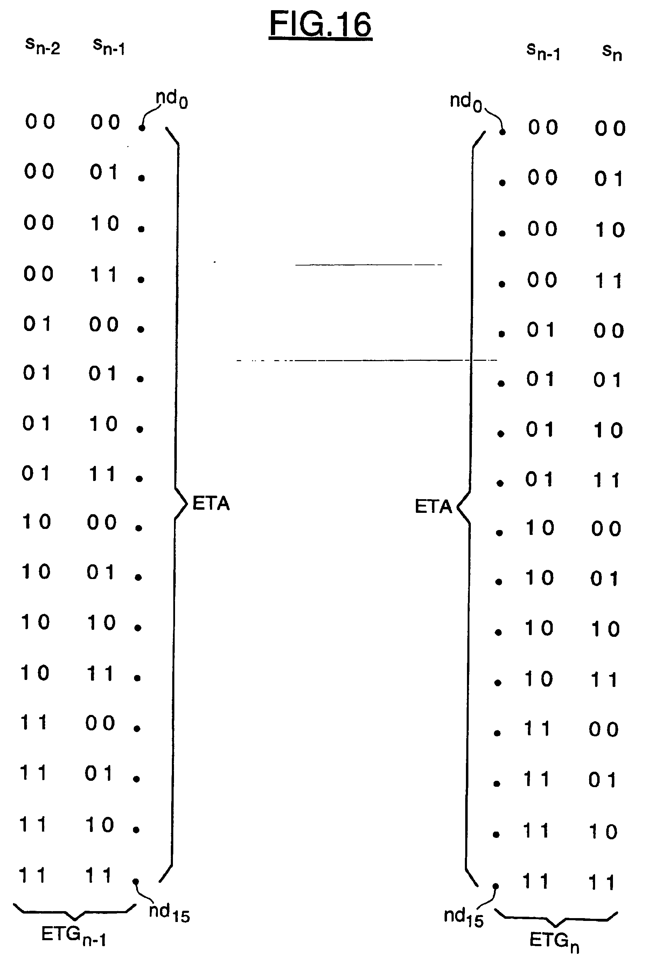

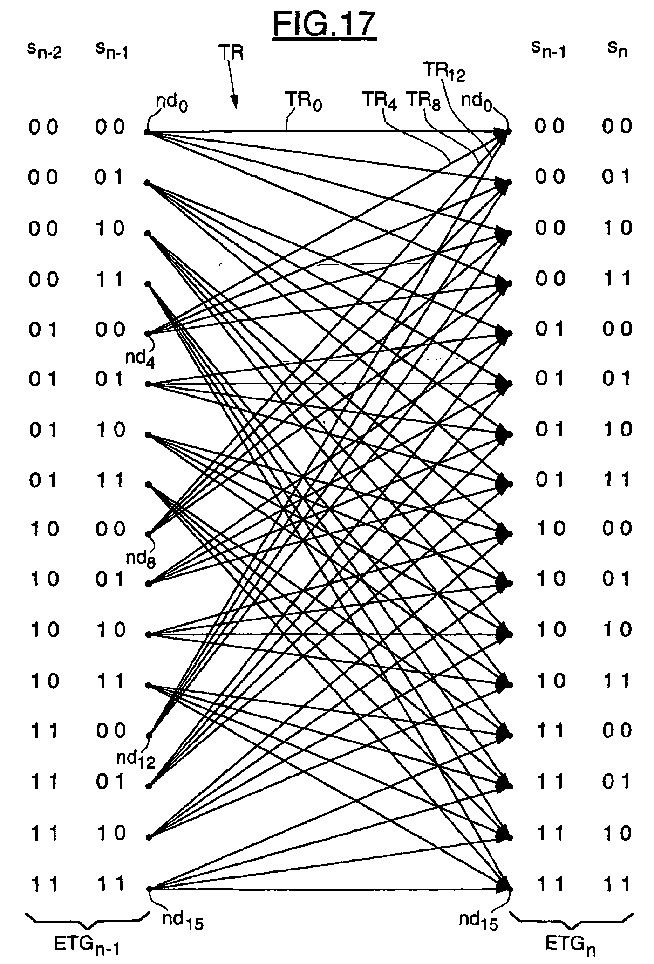

Les figures 16 et 17 représentent plus particulièrement un tel treillis et plus particulièrement l'étage $ETG_{n-1}$ de rang n-1, ainsi que l'étage courant de rang n référencé $ETG_n$.

L'ensemble des états ETA du treillis est formé donc ici de seize états ou noeuds $nd_0$-$nd_{15}$. Les états de l'étage $ETG_{n-1}$ correspondent aux hypothèses sur les symboles $s_{n-2}$ et $s_{n-1}$, respectivement de rang n-2 et de rang n-1. Les états $nd_0$-$nd_{15}$ de l'étage $ETG_n$ sont représentatifs des hypothèses sur les valeurs des symboles $s_{n-1}$ et $s_n$, respectivement de rang n-1 et de rang n.

Par ailleurs, les états ou noeuds $nd_0$-$nd_{15}$ de l'étage $ETG_n$ peuvent être atteints à partir des états $nd_0$-$nd_{15}$ de l'étage $ETG_{n-1}$ par des chemins ou transitions TR (figure 17), en fonction de l'hypothèse effectuée sur la valeur du symbole $s_n$.

Les moyens d'estimation MEST comportent (figure 3) des moyens de calcul MCL aptes à calculer pour les différents états de l'étage courant $ETG_n$ du treillis les différentes métriques cumulées.

A cet égard, pour un noeud donné de l'étage $ETG_n$, la métrique cumulée $M_n$ est définie par la formule (III) ci-dessous :

$$M_n = M_{n-1} + MTR_n \qquad (III)$$

dans laquelle $M_{n-1}$ désigne la métrique cumulée du noeud de l'étage précédent $ETG_{n-1}$ à partir duquel on est arrivé au noeud considéré de l'étage $ETG_n$ en utilisant une transition ou un chemin donné. Et, $MTR_n$ désigne la métrique associée à ce chemin reliant les deux noeuds considérés des deux étages $ETG_{n-1}$ et $ETG_n$.

Ainsi, à titre d'exemple, si l'on se réfère plus particulièrement à la figure 17, la métrique cumulée du noeud $nd_0$ de l'étage $ETG_n$ issue du noeud $nd_0$ de l'étage $ETG_{n-1}$ par la transition $TR_0$, est égale à la somme de la métrique cumulée du noeud $Nd_0$ de l'étage $ETG_{n-1}$ et de la métrique de transition associée à la transition $TR_0$.

Plusieurs possibilités sont offertes pour déterminer les métriques de transitions MTR associées aux différentes transitions du treillis.

Selon une première variante de l'invention, les métriques cumulées peuvent être des informations d'erreurs cumulées entre les valeurs observées et les valeurs attendues des échantillons (sur la base d'hypothèse sur les valeurs des symboles). Dans ce cas, la métrique de transition ou de branche $MTR_n$ peut être une métrique dite « euclidienne » telle que celle définie par la formule (TV) ci-dessous :

$$MTR_n = \left| r_n - \sum_{i=0}^{L-1} c_i s_{n-i} \right|^2 \qquad (IV)$$

Selon une autre variante de l'invention, les métriques cumulées peuvent être des informations de ressemblances cumulées entre les valeurs observées et les valeurs attendues des échantillons (sur la base d'hypothèse sur les valeurs des symboles). Dans ce cas, il est nécessaire de disposer en entrée du bloc d'égalisation BEQ, un filtre adapté dont la réponse impulsionnelle est égale à H* ($z^{-1}$), la notation «*» désignant le conjugué complexe.

Une telle métrique de transition ou de branche modifiée est par exemple celle définie par la formule ci-dessous :

$$MTR_n = \text{Re}\left[ s_n^* \cdot \left( 2 \cdot y_n - x_0 \cdot s_n - 2 \cdot \sum_{i=1}^{L-1} x_i \cdot s_{n-i} \right) \right] \quad \text{(V)}$$

où $y_n$ est la sortie du filtre adapté (obtenue à partir des échantillons reçus $r_n$), Re désigne la partie réelle, et où $x_n$ désigne la fonction d'autocorrélation du canal (caculée à partir des coefficients $c_i$ de la réponse impulsionnelle) :

$$y_n = \sum_{i=0}^{L-1} c_{L-1-i}^* \cdot r_{n+i} \qquad \text{et} \qquad x_n = \sum_{i=0}^{L-1-n} c_i^* \cdot c_{n+i}$$

Une telle métrique modifiée est utilisée par exemple dans un récepteur dit « d'Ungerboeck », tel que celui décrit dans l'article intitulé « Unification of MLSE Receivers and Extension to Tirne-Varying Channels », Gregory E. Bottomley, IEEE Transactions on Communications, Vol. 46, N° 4, Avril 1998. L'homme du métier pourra se référer à cet article pour plus de détails sur cette métrique modifiée.

En ce qui concerne les valeurs initiales des premiers symboles émis, elles peuvent être prises égales à 0.

L'homme du métier sait, comme illustré sur la figure 17, qu'en chaque état ou noeud de l'étage ETG$_n$, arrive un certain nombre de transitions ou de chemins issus de certains des états de l'étage précédent. La progression dans le treillis, d'un étage à l'autre, s'effectue alors en choisissant parmi ces chemins un chemin dit « survivant » défini comme étant celui qui conduit, pour l'état considéré de l'étage ETG$_n$, à l'obtention d'une métrique cumulée minimale dans le cas où l'on choisit une métrique de branche euclidienne (formule IV), ou maximale si l'on choisit une métrique du type modifié (formule V).

Ainsi, à titre d'exemple, si l'on se réfère à la figure 17, à l'état nd$_0$ de l'étage ETG$_n$, concourent quatre transitions TR$_0$, TR$_4$, TR$_8$ et TR$_{12}$, respectivement issues des états nd$_0$, nd$_4$, nd$_8$ et nd$_{12}$. Les moyen de calcul vont donc calculer quatre métriques cumulées pour l'état nd$_0$ de l'étage ETG$_n$ en appliquant les formules (III) et (IV) ci-dessus (dans le cas d'une métrique euclidienne) en utilisant respectivement les métriques cumulées des noeuds nd$_0$, nd$_4$, nd$_8$ et nd$_{12}$ de l'étage ETG$_{n-1}$ ainsi que les métriques de transitions MTR des transitions TR$_0$, TR$_4$, TR$_8$ et TR$_{12}$.

Ensuite, la métrique cumulée minimale (dans le cas d'une métrique euclidienne) où maximale (dans le cas d'une métrique modifiée) sera choisie pour le noeud nd$_0$ de l'étage ETG$_n$ en vue de la progression dans le treillis vers l'étage ETG$_{n+1}$.

Outre ce calcul des métriques cumulées pour la progression étage par étage dans le treillis de Viterbi, les moyens d'estimation vont prendre une décision unique sur la valeur du symbole de rang n-L+1 (ici le symbole de rang n-2), et vont affecter cette décision unique d'un indice de confiance-symbole.

On va maintenant décrire plus en détail cette prise de décision unique ainsi que cette élaboration de l'indice de confiance-symbole.

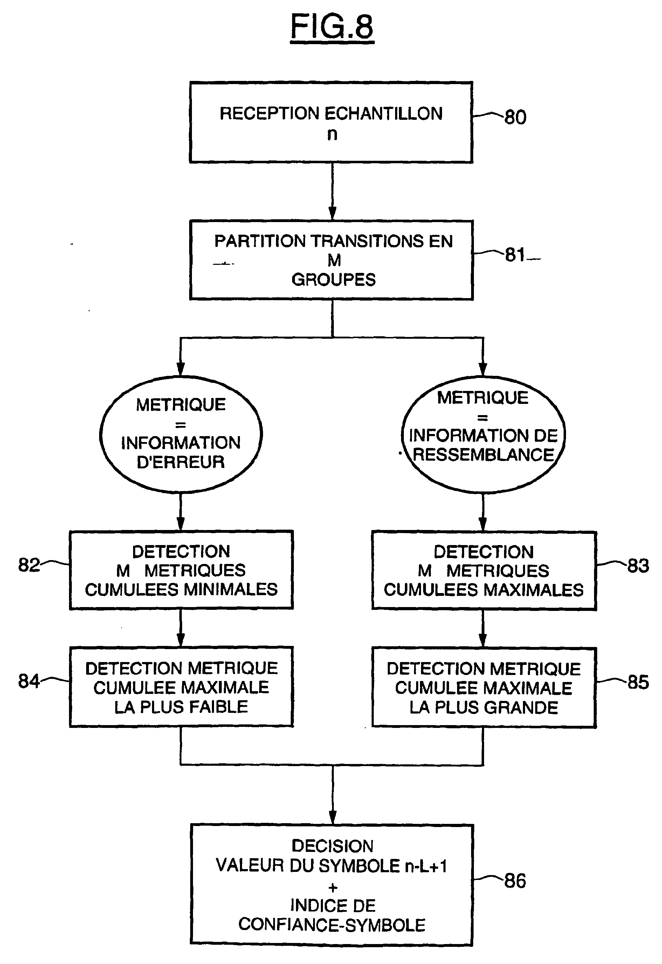

A cet égard, les moyens d'estimation MEST comportent des moyens de partitionnement MPT aptes, à la prise en compte de l'échantillon de rang n, à partitionner en M groupes toutes les transitions parvenant aux différents états de l'étage courant ETG$_n$ du treillis, chaque groupe contenant toutes les transitions issues des états de l'étage précédent associés à l'une des M valeurs possibles du symbole de rang n-L+1 (étapes 80 et 81, figure 8).

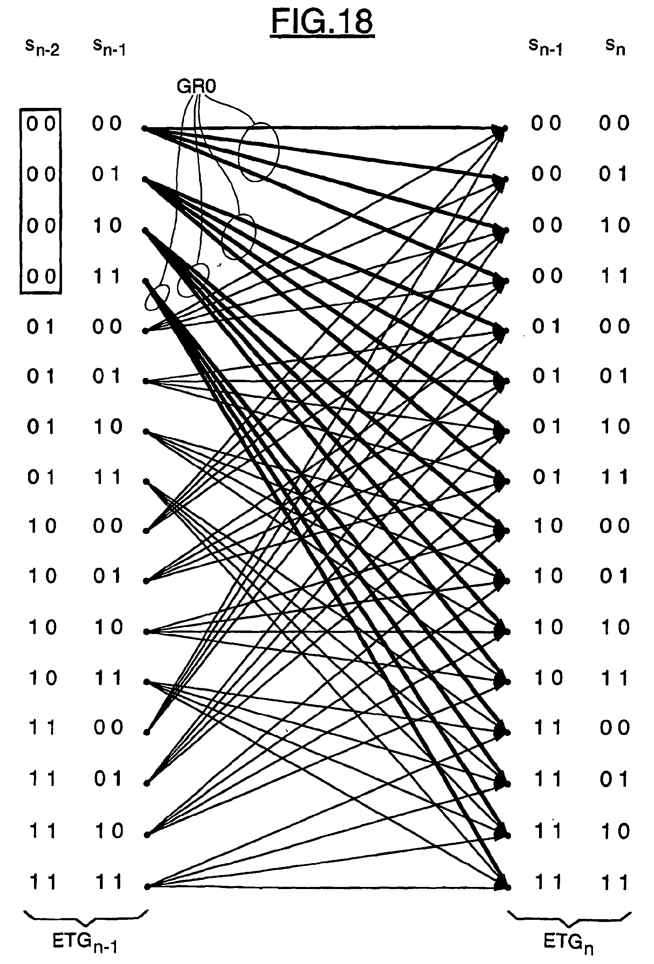

Ce partitionnement est illustré dans l'exemple utilisé ici, sur les figures 18, 19, 20 et 21.

Plus précisément, un premier groupe de transitions GR0 (figure 18) représenté en caractères gras, correspond aux transitions issues des états de l'étage ETG$_{n-1}$ associés à la valeur 00 du symbole s$_{n-2}$.

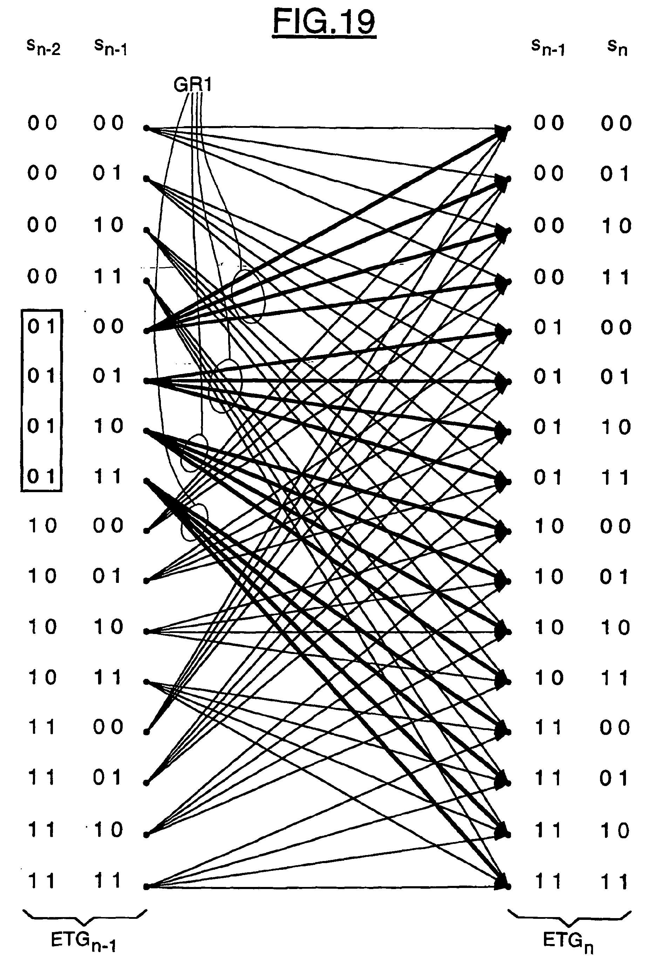

Le groupe de transitions OR1 (figure 19) contient toutes les transitions issues des états de l'étage ETG$_{n-1}$ associés à la valeur 01 du symbole s$_{n-2}$.

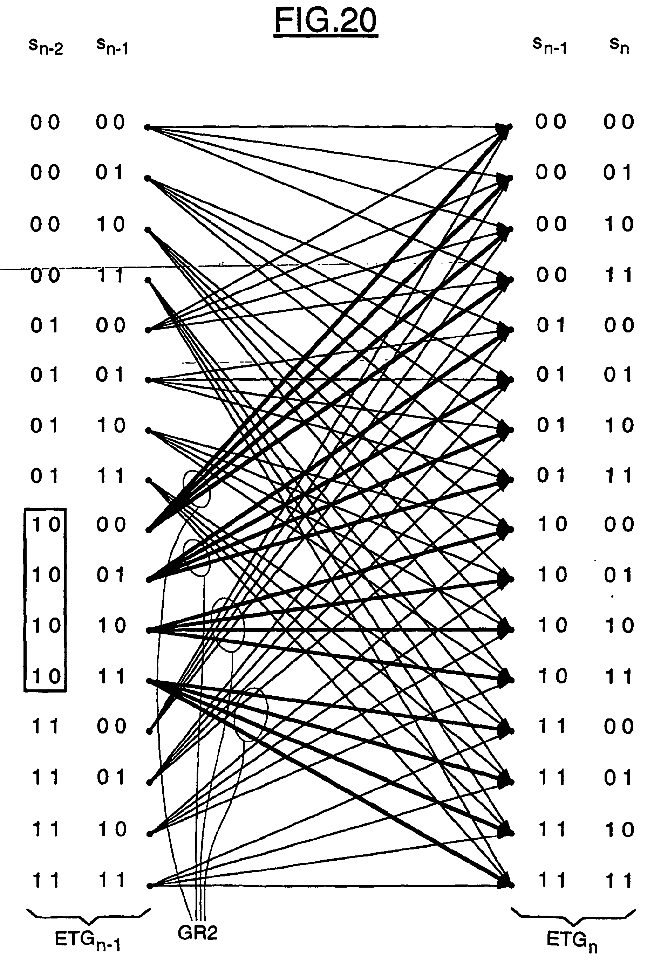

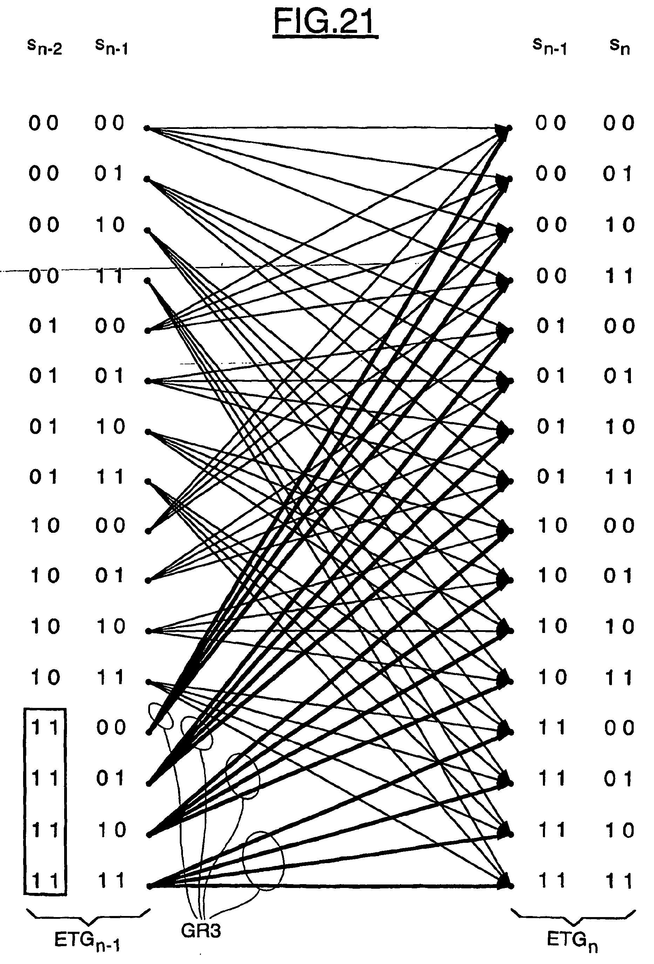

Le groupe GR2 (figure 20) contient toutes les transitions issues des états de l'étage ETG$_{n-1}$ associés à la valeur 10 du symbole s$_{n-2}$ et le groupe GR3 (figure 21) contient toutes les transitions issues des états de l'étage ETG$_{n-1}$ associés à la valeur 11 du symbole s$_{n-2}$.

Les moyens de calcul MCL déterminent ensuite, pour chacun des groupes GR0-GR3, les différentes métriques cumulées pour les différents états $nd_0$-$nd_{15}$ de l'étage $ETG_n$ du treillis. Ce calcul est effectué en utilisant les formules (III) et (IV) ci-dessus ou les formules (III) et (V) ci-dessus en fonction de la métrique de branche utilisée. Comme indiqué ci-avant, en vue de la progression dans le treillis, on sélectionne pour chaque noeud un et un seul chemin survivant.

Les moyens d'estimation MEST comportent également des moyens de détermination MDT aptes à déterminer dans chaque groupe celle des transitions qui conduit à l'état affecté de la métrique cumulée extremale.

Si l'on utilise une métrique de branches du type « information d'erreur » (métrique euclidienne par exemple), les moyens de détermination vont détecter (étape 82, figure 8) dans chaque groupe, celle des transitions qui conduit à l'état affecté de la métrique cumulée minimale.

Par contre, si l'on utilise une métrique du type « information de ressemblance » (métrique modifiée de Ungerboeck par exemple), les moyens de détermination vont déterminer (étape 83, figure 8) dans chaque groupe, celle des transitions qui conduit à l'état affecté de la métrique cumulée maximale.

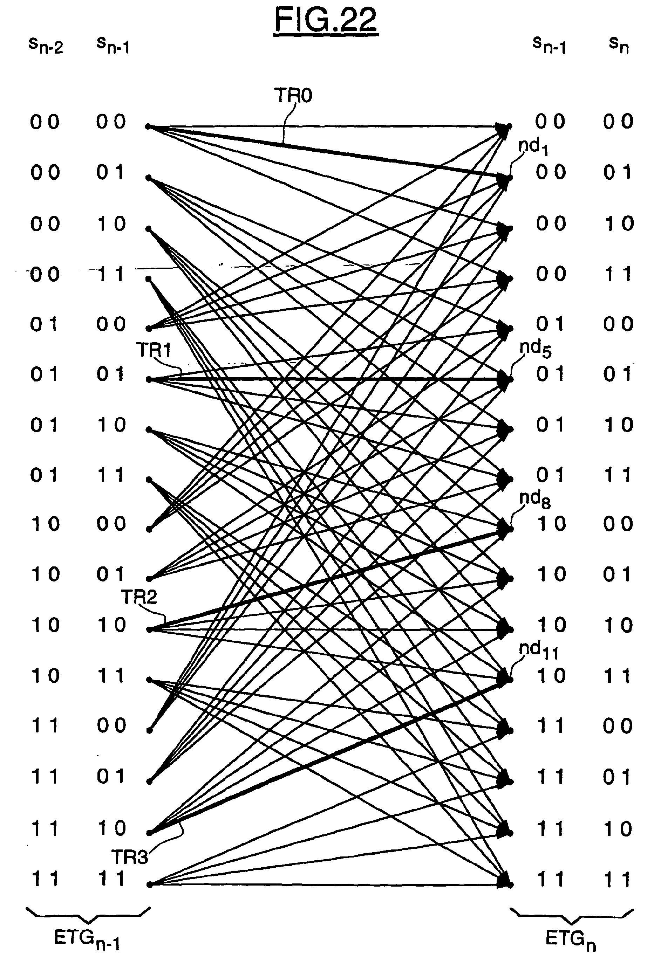

Ainsi, à titre d'exemple, comme illustré sur la figure 22, on suppose que c'est la transition TR0 dans le groupe GR0 qui conduit à la métrique cumulée minimale (ou maximale selon le cas), tandis qu'il s'agit de la transition TR1 dans le groupe GR1, de la transition TR2 dans le groupe GR2, et de la transition TR3 dans le groupe GR3.

Les moyens d'estimation MEST comportent alors des moyens de prise de décision MPD (figure 3) aptes à prendre une unique décision sur la valeur du symbole $s_{n-2}$ en détectant le groupe associé à l'extremum de ces M métriques cumulées extremales (étape 86, figure 8).

Plus précisément, si l'on se réfère à nouveau plus particulièrement à la figure 22, les moyens de prise de décision vont détecter, dans le cas d'une métrique de branche du type « information d'erreur » (métrique euclidienne par exemple), la plus faible des quatre métriques cumulées, respectivement associées aux états $nd_1$, $nd_5$, $nd_8$ et $nd_{11}$ de l'étage $ETG_n$.

Dans le cas où la métrique de branche utilisée est une métrique du type « information de ressemblance », les moyens de prise de décision vont détecter la plus grande de ces quatre métriques cumulées.

On suppose, à titre d'exemple, que c'est la métrique du noeud $nd_8$ qui a été détectée comme étant la plus faible (ou la plus grande) de ces quatre métriques. Cette métrique extremale est par conséquent associée à la transition TR2 qui fait elle-même partie du groupe GR2.

En conséquence, à l'instant n, les moyens de prise de décision décident que le symbole de rang n-L+1 (en l'espèce n-2) a la valeur 10 (c'est-à-dire la valeur 3 en décimale).

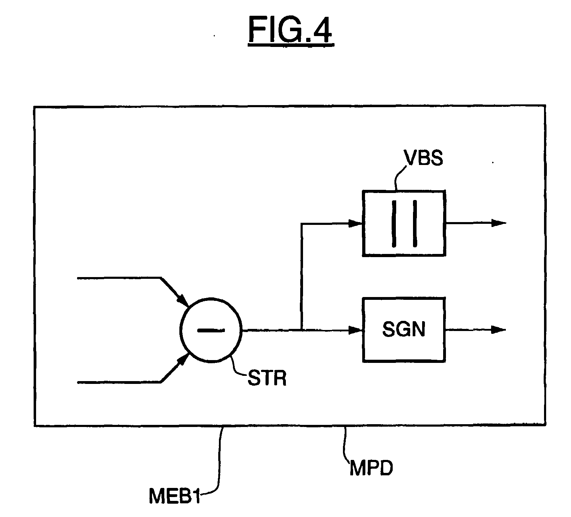

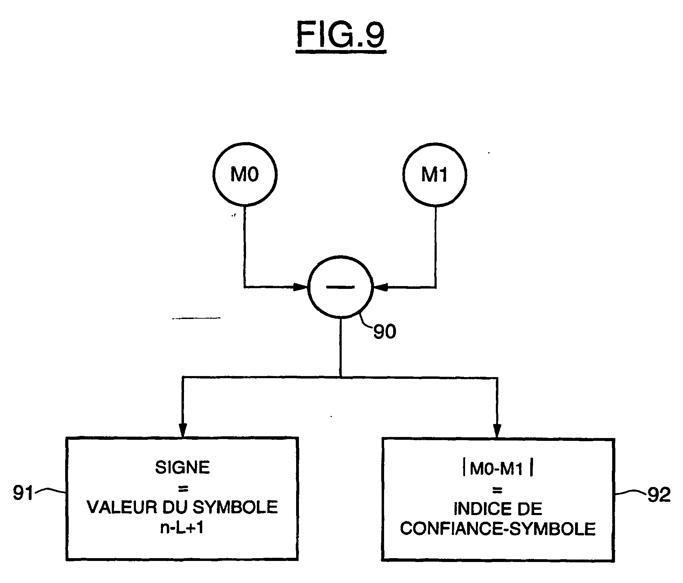

Dans le cas où M est égal à 2, c'est-à-dire dans le cas où l'on est en présence d'une modulation binaire (chaque symbole valant +1 ou -1, par exemple), les moyens de prise de décision MPD comportent (figure 4) un soustracteur STR apte à calculer la différence entre les deux métriques cumulées minimales M0 et M1 (étape 90, figure 9) élaborées par les moyens de détermination.

Les moyens de prise de décision MPD comportent également, outre ledit soustracteur STR, un opérateur signe SGN, capable de déterminer le signe de la différence entre les deux métriques cumulées minimales M0 et M1 (étape 91). Le signe de cette différence fournit alors ladite décision unique. En d'autres termes, si le signe est positif, le symbole de rang n-L+1 est égal à la valeur +1, tandis que si le signe est négatif, la valeur de ce symbole est égale à -1.

Ce qui vient d'être décrit en référence aux figures 4 et 9, s'applique également dans le cas où les métriques de branches sont des métriques modifiées du type « information de ressemblance ». Dans ce cas, M0 et M1 désignent les deux métriques cumulées maximales délivrées par les moyens de détermination.

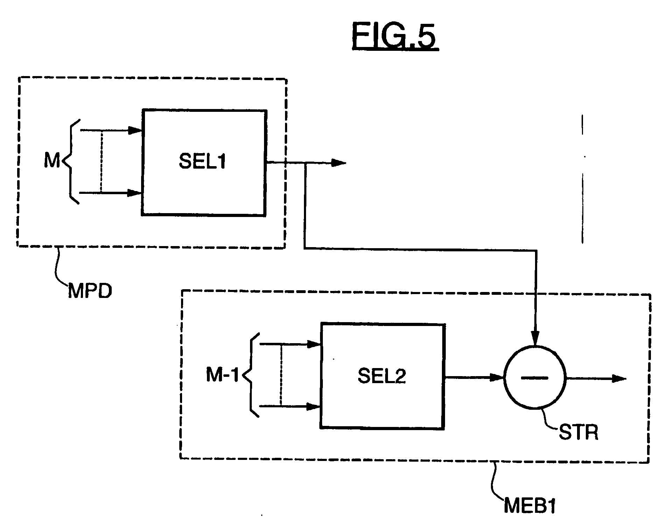

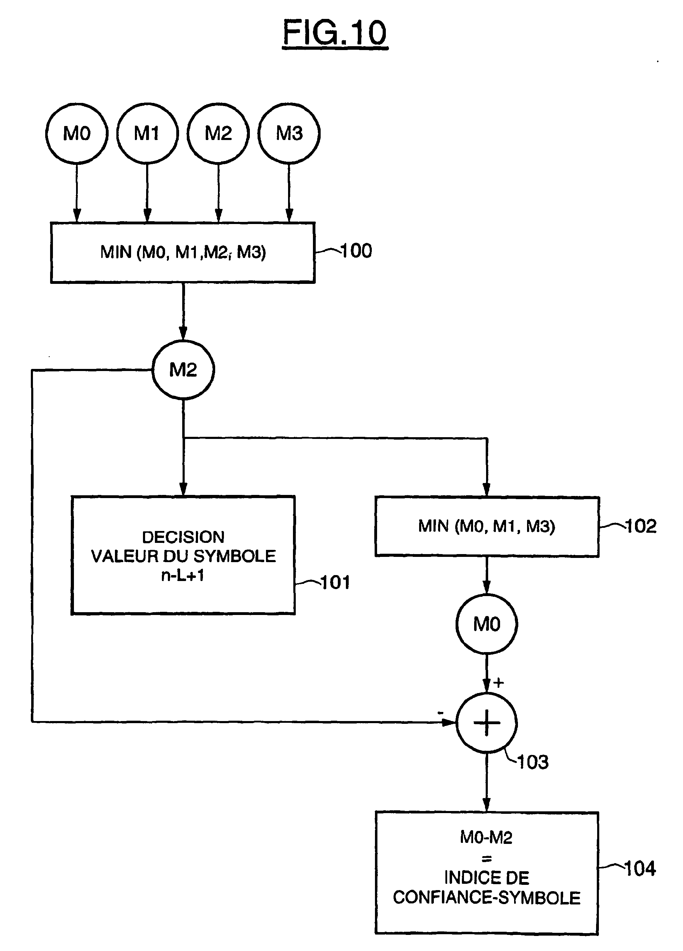

On se réfère maintenant plus particulièrement aux figures 5 et 10 pour illustrer la prise de décision quant à la valeur du symbole de rang n-L+1, dans le cas d'une modulation M-aire (M > 2) et dans le cas où une métrique de branche du type « information d'erreur » (métrique euclidienne par exemple) est utilisée.

Dans un tel cas, les moyens de prise de décision MPD comportent des premiers moyens de sélection SEL1 aptes à effectuer une première sélection de la plus faible des M métriques cumulées minimales M0, M1, M2, M3 (étape 100, figure 10) délivrées par les moyens de détermination. Ces métriques cumulées minimales M0-M3 sont, dans l'exemple illustré sur la figure 22, celles affectées aux états $nd_1$, $nd_5$, $nd_8$ et $nd_{11}$ de l'étage $ETG_n$.

On suppose, comme déjà indiqué ci-avant, que la métrique la plus faible est la métrique M2, c'est-à-dire celle affectée au noeud $nd_8$.

Il en résulte alors (étape 101, figure 10) une prise de décision sur la valeur du symbole de rang n-L+1, comme expliqué ci-avant.

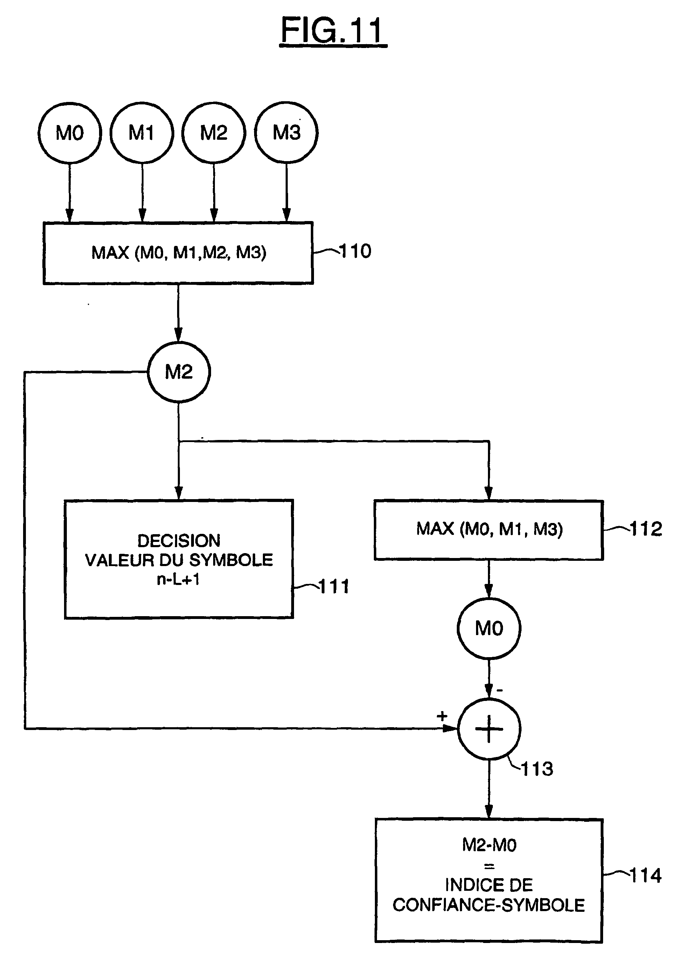

Toujours dans le cas d'une modulation M-aire, mais dans le cas où l'on utilise une métrique de branche du type « information de ressemblance », les premiers moyens de sélection SEL1 déterminent cette fois-ci (étape 110, figure 11) la plus grande des M métriques cumulées maximales délivrées par les moyens de détermination. On suppose dans la figure 11 que cette fois-ci les métriques M0, M1, M2 et M3 sont les métriques cumulées maximales dans chacun des groupes et que la métrique cumulée maximale la plus grande est là encore la métrique M2, ce qui permet de prendre la décision sur la valeur du symbole de rang n-L+1 (étape 111, figure 11) d'une façon analogue à celle qui a déjà été expliquée ci-avant.

Outre les moyens de prise de décision MPD, les moyens d'estimation MEST comportent des premiers moyens d'élaboration MEB1 (figure 3) aptes à élaborer à partir des M métriques cumulées extremales (minimales ou maximales) un indice de confiance-symbole affecté à la décision unique sur la valeur du symbole de rang n-L+1.

On se réfère à nouveau aux figures 4, 5, 9, 10 et 11, pour illustrer cette élaboration de l'indice de confiance-symbole dans chacune des variantes de l'invention.

Dans le cas d'une modulation binaire (M=2), et quel que soit le type de métrique utilisé (information d'erreur ou information de ressemblance), les premiers moyens d'élaboration MEB1 comportent le soustracteur STR (figure 4) ainsi qu'un opérateur valeur absolue VBS. En effet, la valeur absolue de la différence calculée par le soustracteur (étape 92, figure 9) fournit la valeur dudit indice de confiance-symbole.

Dans le cas d'une modulation M-aire (M > 2) et dans le cas d'une métrique de branche du type information d'erreur (métrique euclidienne par exemple), les premiers moyens d'élaboration comportent des deuxièmes moyens de sélection SEL2 (figure 5). Ces deuxièmes moyens de sélection effectuent, parmi les M-1 métriques cumulées minimales restantes (M0, M1, M3, figure 10) non sélectionnées à l'issue de la première sélection 100 effectuée par les premiers moyens de sélection SEL1, la plus faible de ces M-1 métriques cumulées minimales restantes (étape 102, figure 10).

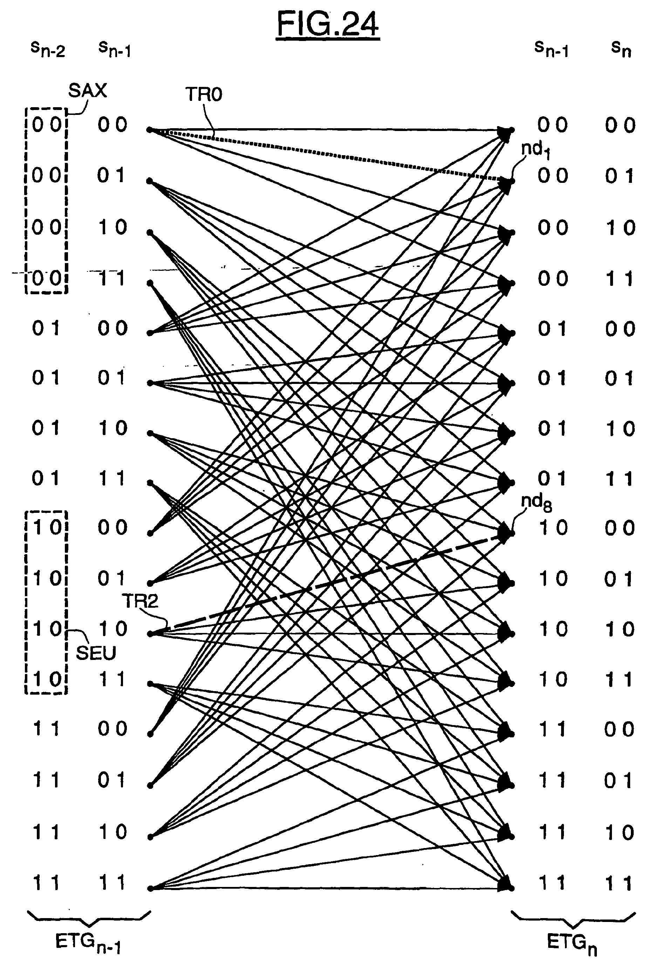

On suppose, à titre d'exemple, et comme illustré également sur la figure 24, que la métrique cumulée minimale ainsi sélectionnée à l'étape 102 est la métrique M0 correspondant à la transition TR0 aboutissant au noeud $nd_1$ de l'étage $ETG_n$.

Les premiers moyens d'élaboration comportent alors un soustracteur STR (figure 5) apte à calculer (étape 103, figure 10) la différence entre les deux métriques cumulées minimales respectivement issues de la première et de la deuxième sélections, en l'espèce les métriques M0 et M2.

La valeur positive de cette différence (étape 104, figure 10) fournit la valeur dudit indice de confiance-symbole.

Tout ce qui vient d'être décrit en référence aux figures 5 et 10 s'applique par analogie dans le cas où la métrique de branche est une métrique du type information de ressemblance. La seule différence entre ce qui vient d'être décrit et la figure 11, réside simplement dans le fait que les deuxièmes moyens de sélection effectuent la deuxième sélection parmi les M-1 métriques cumulées maximales restantes non sélectionnées à l'issue de la première sélection, de la plus grande de ces M-1 métriques cumulées maximales restantes (étape 112, figure 11).

L'invention permet ainsi d'obtenir des décisions sur les symboles avec un retard égal dans le cas général à k (L-1 dans un treillis à $M^{L-1}$ états), ce qui est un retard moindre par rapport au retard d'un algorithme de Viterbi de l'art antérieur. Par ailleurs, le gain en mémoire est considérable. En effet, dans l'invention, il est seulement nécessaire d'avoir un vecteur de mémorisation pour l'étage courant et l'étage précédent du treillis qui mémorise les métriques cumulées. Il n'est plus nécessaire de mémoriser, comme dans l'art antérieur, les indices de confiance-symbole sur un bloc de 5L échantillons.

Enfin, outre l'avantage d'avoir un coût d'implémentation inférieur et un gain en vitesse, les indices de confiance-symbole (sorties «souples» selon une dénomination bien connue de l'homme du métier) présentent des qualités accrues. En effet, il a été observé qu'après décodage les performances sont souvent aussi bonnes, voire meilleures que dans l'art antérieur.

Il est également avantageux, notamment pour faciliter les traitements ultérieurs, de décodage de canal, que des indices de confiance-bit soient également affectés à chacun des bits du symbole de rang n-L+1 élu à la suite de la prise de décision sur sa valeur. Or, si dans le cas d'une modulation binaire, l'indice de confiance-symbole se confond avec l'indice de confiance-bit puisque dans ce cas les symboles et les bits d'informations se confondent, il en est tout autrement dans le cas d'une modulation multidimensionnelle (M > 2). En effet, les symboles de la modulation représentent alors plusieurs bits d'informations. Et, dans l'art antérieur, on ne connaît pas actuellement, dans le cas d'une modulation multidimensionnelle, de traitement permettant de produire une confiance (indice de confiance-bit) associée à chacun des bits formant les symboles sur lesquels on a pris des décisions.

L'invention vise à pallier cette lacune.

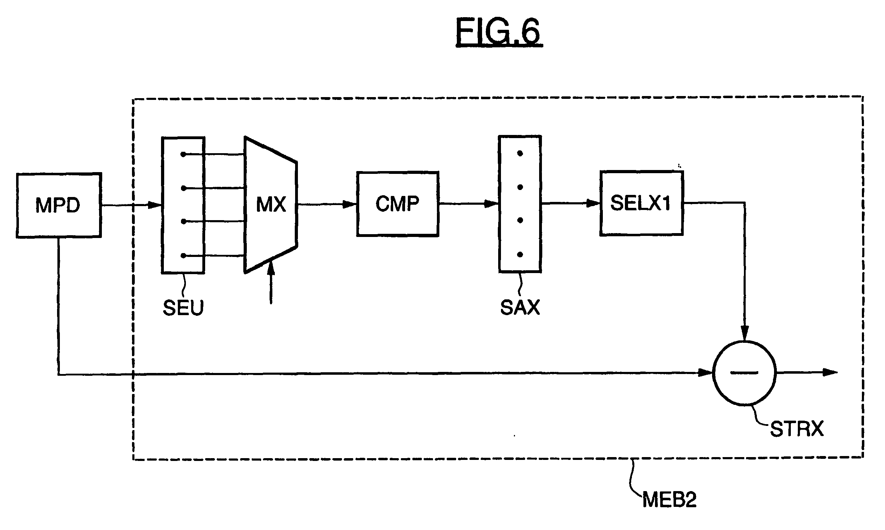

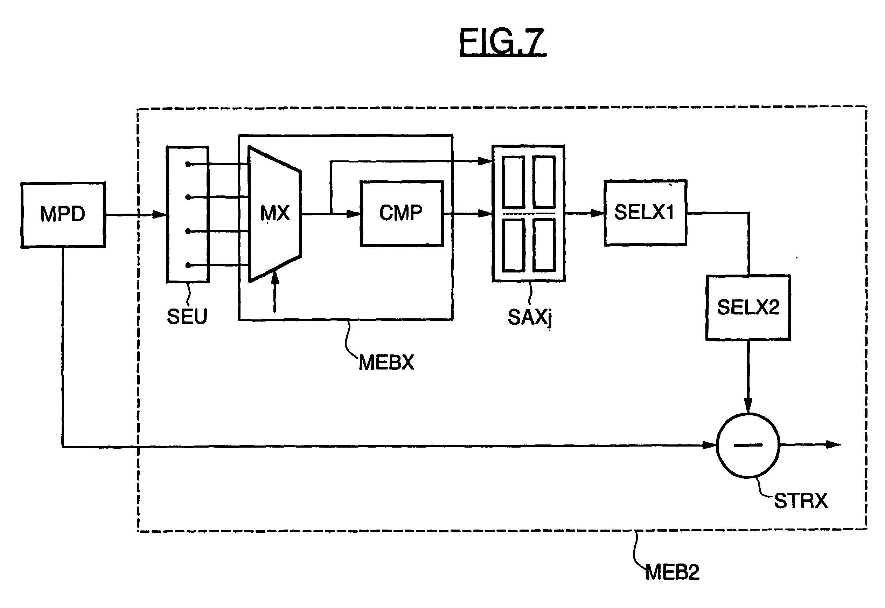

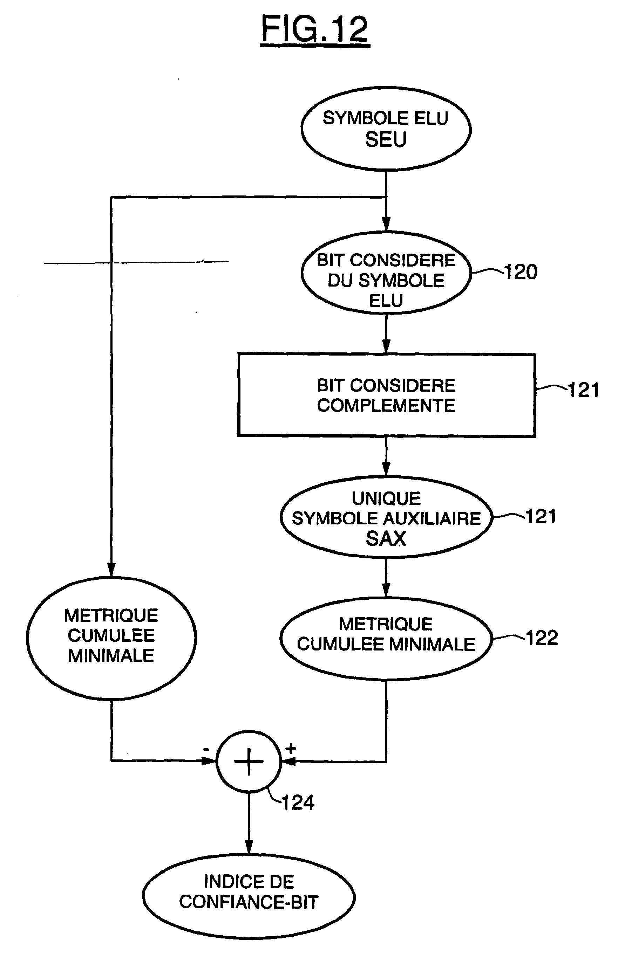

A cet égard, chaque symbole étant formé de b-bits, avec $M^{2b}$, le dispositif comprend des deuxièmes moyens d'élaboration MEB2 (figures 6 et 7) aptes à élaborer un indice de confiance-bit pour chacun des bits du symbole de rang n+L-1 élu à l'issue de ladite prise de décision unique. Ces deuxièmes moyens d'élaboration MEB2 utilisent ledit symbole élu SEU et au moins un symbole auxiliaire élaboré à partir du symbole élu en complémentant au moins la valeur du bit considéré (figures 12 à 15).

Là encore, plusieurs variantes sont possibles.

Selon une première variante de l'invention, applicable lorsque la métrique de branche est une métrique du type information d'erreur (métrique euclidienne par exemple), les deuxièmes moyens d'élaboration MEB2 comportent (figure 6) des moyens d'élaboration auxiliaires aptes à élaborer un seul symbole auxiliaire SAX en complémentant uniquement la valeur du bit considéré tout en laissant inchangées les valeurs des autres bits du symbole élu.

Plus précisément, ces moyens d'élaboration auxiliaire peuvent être formés d'un multiplexeur MX, relié aux moyens de prise de décision et capable de sélectionner le bit considéré du symbole élu SEU pour lequel on souhaite élaborer un indice de confiance-bit.

Les moyens d'élaboration auxiliaire comportent alors également des moyens CMP permettant de complémenter la valeur du bit délivrée par le multiplexeur MX.

A ce stade du procédé, également illustré par les étapes 120 et 121 de la figure 12, on a élaboré un unique symbole auxiliaire SAX. A titre d'exemple, on peut se référer aussi à la figure 24, sur laquelle on considère que le symbole élu SEU est le symbole 10. On suppose également que l'on souhaite élaborer un indice de confiance-bit pour le bit de valeur 1 du symbole SEU. Le symbole SAX est donc le symbole 00.

Une fois ce symbole auxiliaire SAX élaboré, des moyens de sélection auxiliaire SELX1 sont aptes à sélectionner la métrique cumulée minimale associée au groupe de transitions auquel appartient ledit symbole auxiliaire SAX (étape 122, figure 12). Dans l'exemple illustré sur la figure 24, le symbole SAX appartient au groupe GR0 et la métrique cumulée minimale associée au groupe GR0 est celle associée à l'étape $nd_1$ correspondant à la transition TR0.

Un soustracteur auxiliaire STRX effectue alors la différence entre la métrique cumulée minimale associée au groupe de transitions auquel appartient le symbole élu SEU (c'est-à-dire la métrique cumulée associée à l'état $nd_8$ de l'étage $ETG_n$ (figure 24)) et la métrique cumulée minimale associée au groupe de transitions auquel appartient ledit symbole auxiliaire (c'est-à-dire la métrique cumulée associée à l'état $nd_1$), le résultat de cette différence fournissant la valeur dudit indice de confiance-bit associée au bit considéré du symbole SEU (étape 124, figure 12).

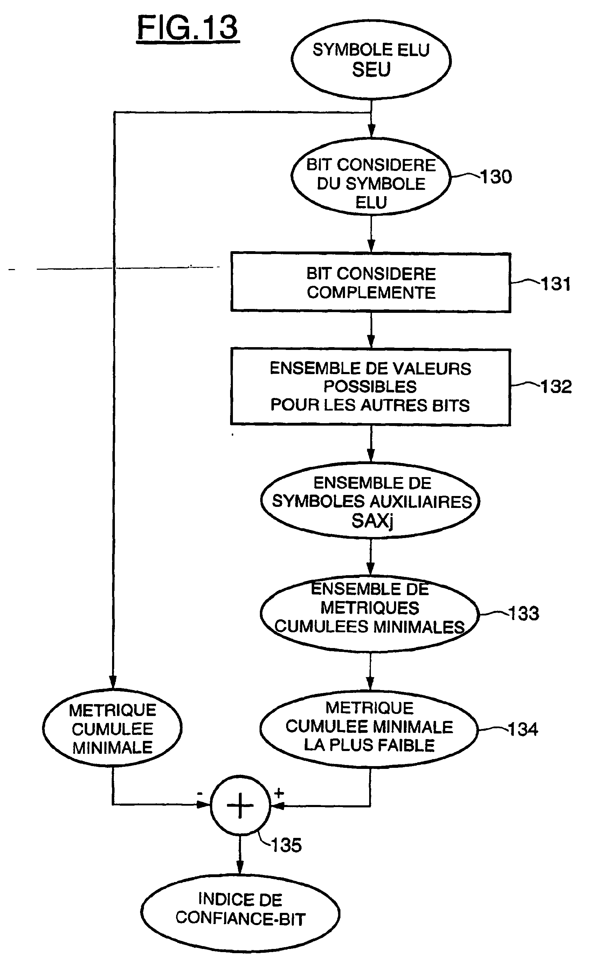

Selon une autre variante de l'invention, également applicable avec une métrique de branche du type euclidienne, les deuxièmes moyens d'élaboration comportent (figure 7) des moyens d'élaboration auxiliaire MEBX aptes cette fois-ci à élaborer un ensemble de symboles auxiliaires SAXj en complémentant la valeur du bit considérée du symbole élu SEU et en conférant aux autres bits du symbole élu SEU toutes les valeurs possibles (étapes 130, 131 et 132, figure 13).

Là encore, comme illustré sur la figure 7, les moyens d'élaboration auxiliaire comportent un multiplexeur MX capable de sélectionner le bit considéré du symbole SEU pour lequel on souhaite établir un indice de confiance-bit ainsi qu'un moyen CMP capable de complémenter uniquement la valeur de ce bit considéré.

A titre d'exemple, si l'on se réfère maintenant à la figure 5, on suppose toujours que le symbole élu SEU est le symbole 10. On souhaite également élaborer l'indice de confiance-bit pour le bit 1 du symbole SEU.

Par conséquent, deux symboles auxiliaires SAX1 et SAX2 sont alors élaborés en complémentant le bit 1 à 0 et en conférant à l'autre bit soit la valeur 0, soit la valeur 1. Ainsi, le symbole auxiliaire SAX1 a la valeur 00 et le symbole auxiliaire SAX2 a la valeur 01.

Des premiers moyens de sélection auxiliaire SELX1 sélectionnent alors respectivement les métriques cumulées minimales associées au groupe de transitions auquel appartiennent respectivement les symboles auxiliaires SAX1 et SAX2.

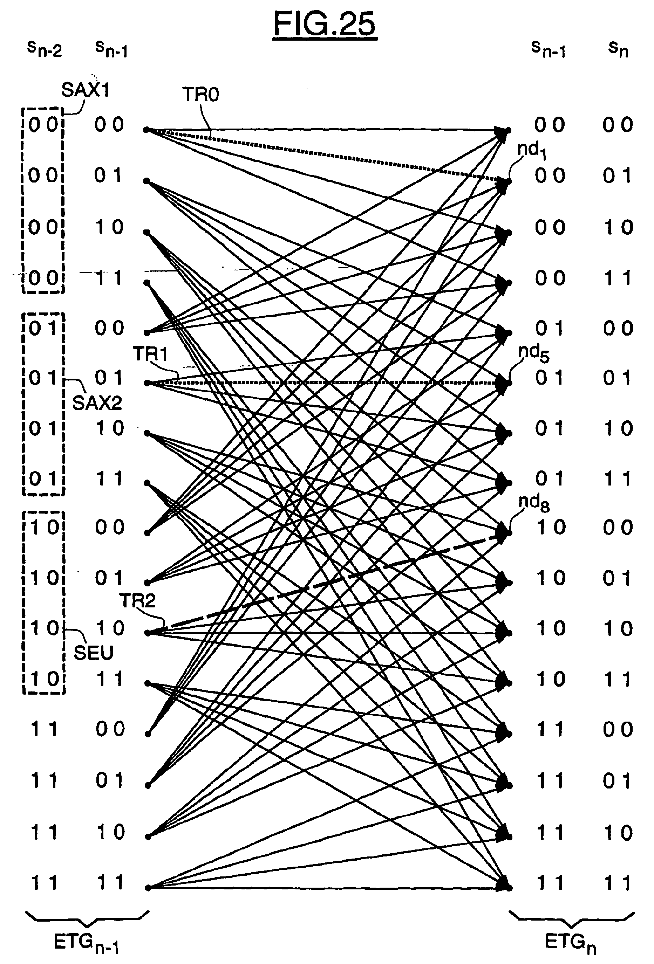

En l'espèce, les symboles auxiliaires SAX1 et SAX2 appartiennent aux groupes GR0 et GR1, et les métriques cumulées minimales sont celles respectivement associées aux états $nd_1$ et $nd_5$ ((figure 25) ; et étape 133 (figure 13)).

Les deuxièmes moyens de sélection auxiliaire SELAX2 sélectionnent la plus faible des métriques cumulées minimales respectivement sélectionnées par les premiers moyens de sélection auxiliaire (étape 134, figure 13). On suppose par exemple que la métrique la plus faible est celle affectée à l'état $nd_1$ (figure 25).

Un soustracteur auxiliaire STRX effectue -alors la différence entre la métrique cumulée minimale associée au groupe de transition auquel appartient ledit symbole élu SEU (c'est-à-dire la métrique cumulée associée à l'état $nd_8$) et la métrique cumulée minimale sélectionnée par les deuxièmes moyens de sélection auxiliaire, c'est-à-dire la métrique associée à la transition TR0. Le résultat de cette différence (étape 135, figure 13) fournit la valeur dudit indice de confiance-bit.

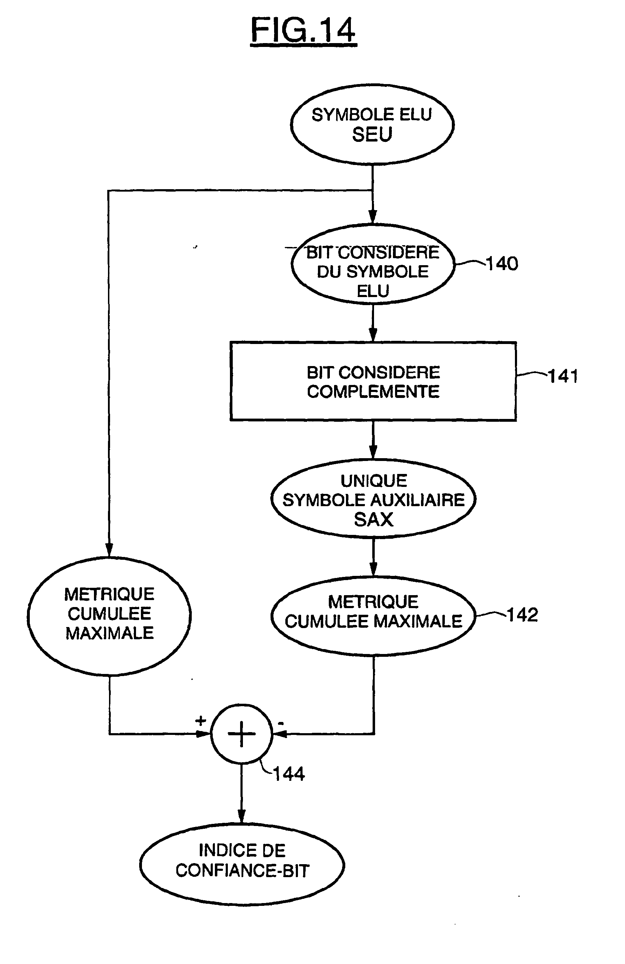

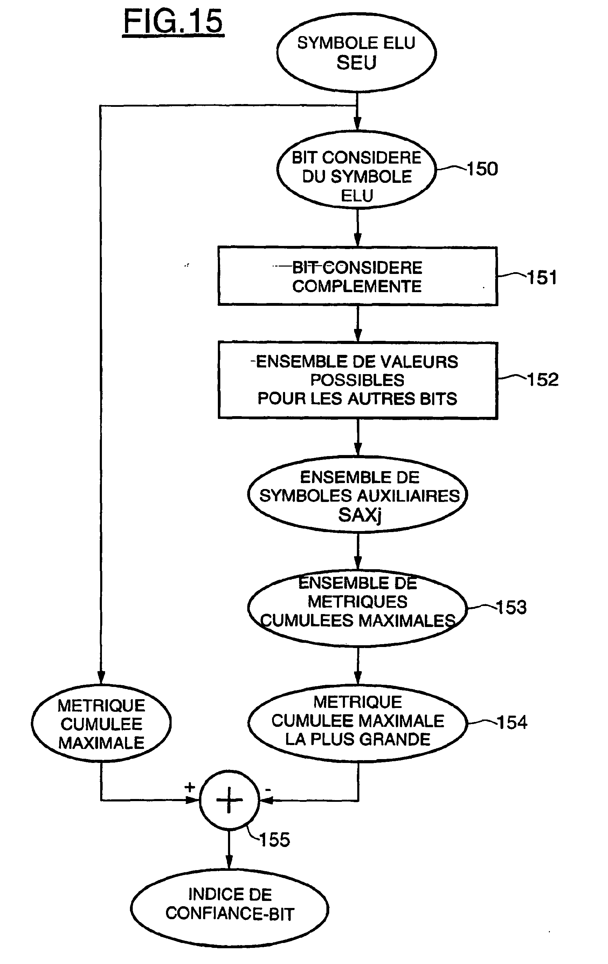

Toute ce qui vient d'être décrit ici pour les deux variantes permettant de calculer un indice de confiance-bit pour un bit considéré du symbole élu, s'applique également lorsque la métrique de branche est une métrique du type « information de ressemblance ». En effet, comme illustré sur les figures 14 et 15, il convient simplement de remplacer les termes « minimales » par « maximales » et « plus faible » par « plus grande ».

Matériellement, l'ensemble des moyens d'estimation MEST et des moyens MEB2 peut être réalisé par exemple dans un processeur de traitement du signal, les traitements effectués au sein de ces moyens étant réalisés de façon logicielle. Ces traitements sont alors sous forme de codes-programme pouvant être aisément écrits par l'homme du métier à partir de la définition fonctionnelle de ces traitements qui vient d'être donnée ci-dessus. Les moyens de code-programme sont alors par exemple stockés dans une mémoire-morte associée au processeur. Ceci étant, une réalisation entièrement matérielle (« hardware ») des moyens MEST et MEB2 est également possible, par exemple sous forme d'un circuit intégré spécifique (ASIC).

A titre illustratif, un exemple de codes-programme permettant la progression dans le treillis et la prise de décision sur les symboles ainsi que le calcul des indices de confiance-symbole, est donné ci-dessous dans le cas d'une modulation binaire.

```c
#include <stdlib.h>
#include <stdio.h>
#include <math.h>


double Dist(double* A, double* B);
void Conv(double* C, short w, double* In, short N);



/* Nombre de coefficients de la réponse impulsionelle du canal */

    #define S_L 5


    /* Nombre d'états du treillis */

    #define S_Ns (1<<(S_L-1))

    /* Un demi du nombre d'états */

    #define S_Ns2 (S_Ns>>1)



/* Vecteur des décisions souples (réelles) prises par l'égaliseur */

    double O_Out[116];

    /* Vecteur des echantillons (complexes) reçus */
```

```
double I_In[2*148];

/* Vecteur de la réponse impulsionnelle (complexe) du canal, estimée par ailleurs */

double I_h[2*S_L];

/* Vecteur des metriques cumulées avant transition */

double d2[S_Ns];
double *S_d2 = d2;

/* Vecteur des metriques cumulees apres transition */

double D2[S_Ns];
double *S_D2 = D2;

/* Lookup-table des sorties (complexes) du canal pour tous les etats possibles */
/* et toutes les transitions                  */

double S_Z[2*S_Ns][2];




void PSK2_Equalizer(void)
{
    short i, j, k;
    double M, *In, d0, d1, *Swap;



    /* Construction d'une lookup-table */
/* Pré-calcul des sorties attendues du canal pour tous les états  et toutes les */
    /*transitions possibles                  */

    for (i=0; i<2*S_Ns; i++)
        Conv(S_Z[i], i, I_h, S_L);


/*Initialisation des métriques                  */
/* Un seul état de départ est possible, l'état 0 (exemple)    */
/* Sa métrique est mise à 0, les autres états sont rendus impossibles en leur */
/* assignant une metrique (information d'erreur) infinie          */

    for (i=0; i<S_Ns; i++)
```

```
        S_d2[i] = HUGE / 2;

        S_d2[0] = 0;



        /* Algorithme de Viterbi */

        /* On avance dans le treillis d'autant d'étapes qu'il y a de symboles à detecter */
/* (exemple 58) en tenant compte du retard de decision de l'algorithme (L-1)    */

        for (j=0, In=I_In; j<58+S_L-1; j++, In+=2)
        {
            d0 = d1 = HUGE / 2;

/* On decrit les etats d'arrivee i - En binaire i s'ecrit [b3 b2 b1 b0]    */

            for (i=0, k=S_Ns|i; i<S_Ns2; i++, k=S_Ns|i)
            {
/* Pour arriver dans l'etat i, deux possibilites :            */
/* Soit on vient de l'etat [0 b3 b2 b1], soit on vient de l'etat [1 b3 b2 b1] */
/* Ces deux provenances possibles correspondent aux deux historiques         */
/* [0 b3 b2 b1 b0] et [1 b3 b2 b1 b0], reperes en decimal par i et k=S_Ns+i   */
/* Dans ces conditions, les predecesseurs de l'etat i apparaissent comme      */
/* etant i>>1 et k>>1, correspondant respectivement a une decision 0 ou 1 sur */
/* le bit qui sort de la memoire                              */

/* D'ou les deux metriques cumulees en concurrence pour arriver dans l'etat i */
/* D'une part, metrique de l'etat (i>>1) + metrique de transition associee a  */
/* l'historique i, cad. Dist(S_Z[i], observation)                */
/* D'autre part, metrique de l'etat (k>>1) + metrique de transition associee  */
/* a l'historique k, cad Dist(S_Z[k], observation)                */

                M    = S_d2[k>>1] + Dist(S_Z[k], In);
                S_D2[i] = S_d2[i>>1] + Dist(S_Z[i], In);



/* Parmi tous les etats d'arrivee, on recherche le chemin de metrique         */
/* minimale correspondant a un bit 1 qui sort de la memoire                */

                if (M < d1)
                    d1 = M;

/* On recherche paralellement le chemin de metrique minimale correspondant a  */
```

```
/* un bit 0 qui sort de la memoire                                    */

        if (S_D2[i] < d0)
            d0 = S_D2[i];


/* On retient comme survivant le chemin le plus probable, c'est a dire celui */
/* des deux concurrents qui est de metrique cumulee la plus faible        */

        if (M < S_D2[i])
            S_D2[i] = M;
        }

/* Prise de décision */

/* La decision sur les symboles est prise avec un retard egal a la memoire du  */
        /* canal, i.e. L-1                                           */

/* On oppose les deux categories de chemins qui correspondent a des decisions  */
/* differentes sur le bit qui sort de la memoire. Parmi chaque categorie, on a  */
/* retenu le chemin le plus probable. Plus la difference de probabilite est    */
 /* grande, plus on accorde de confiance au choix qu'on fait            */


        O_Out[j] = d1 - d0;


/* On echange les vecteurs des metriques : les metriques cumulees finales      */
/* deviennent les nouvelles metriques cumulees initiales                 */

        Swap = S_d2;  S_d2 = S_D2;  S_D2 = Swap;
        }
        }

/****************************************************************************
 * Convolution entre un signal complexe et un mot binaire BPSK (+1/-1)

 ***************************************************************************/

        void Conv(double* C, short w, double* In, short N)
        {
         short i;

         for (i=0, C[0]=C[1]=0; i<N; i++, w>>=1)
         {
```

```
    C[0] += (w & 1) ? -(*In++) : +(*In++);
    C[1] += (w & 1) ? -(*In++) : +(*In++);
  }


  return;
  }



/*****************************************************************
*****
* Distance euclidienne au carré
_____
*****************************************************************/


  double Dist(double* A, double* B)
  {
    double dX = B[0] - A[0];
    double dY = B[1] - A[1];

    return(dX*dX + dY*dY);
  }
```

L'invention n'est pas limitée à l'application de l'égalisation d'un canal de transmission. En effet, elle s'applique plus généralement à toute estimation de valeurs successives de symboles numériques pouvant prendre chacun M valeurs possibles différentes, à partir des valeurs successives d'échantillons numériques dont chacun résulte de la combinaison d'au plus L symboles successifs, et comportant une progression étage/étage en un treillis du type Viterbi dont tous les états de tous les étages sont respectivement affectés de métriques cumulées. Cela peut notamment aussi être le cas lorsque le signal est volontairement modifié à l'émission, à des fins de protection contre les erreurs par exemple, ou encore de cryptage.

En outre, l'invention n'est pas limitée aux variantes de réalisation et de mise en oeuvre qui viennent d'être décrites. En effet, l'invention s'applique notamment quel que soit le nombre d'états du treillis (treillis complet ou treillis réduit), que la métrique employée soit la métrique euclidienne, une métrique modifiée en sortie du filtre adapté ou toute autre métrique.

Plus précisément, l'algorithme de Viterbi utilisé avec un treillis complet peut devenir difficilement réalisable lorsque la dispersion temporelle induite par le canal de transmission est trop importante (L est trop grand) ou lorsque l'ordre de la modulation augmente (M>2).

Pour pallier ce problème, il existe une variante connue par l'homme du métier sous le nom de DFSE (Decision Feedback Sequence Estimation), qui permet de travailler avec un treillis à nombre d'états réduit, c'est-à-dire avec un treillis dont le nombre d'états est égal à $M^k$ où k est inférieur à L-1.

Cet algorithme est modifié selon l'invention au niveau des prise de décisions sur les valeurs de symboles.

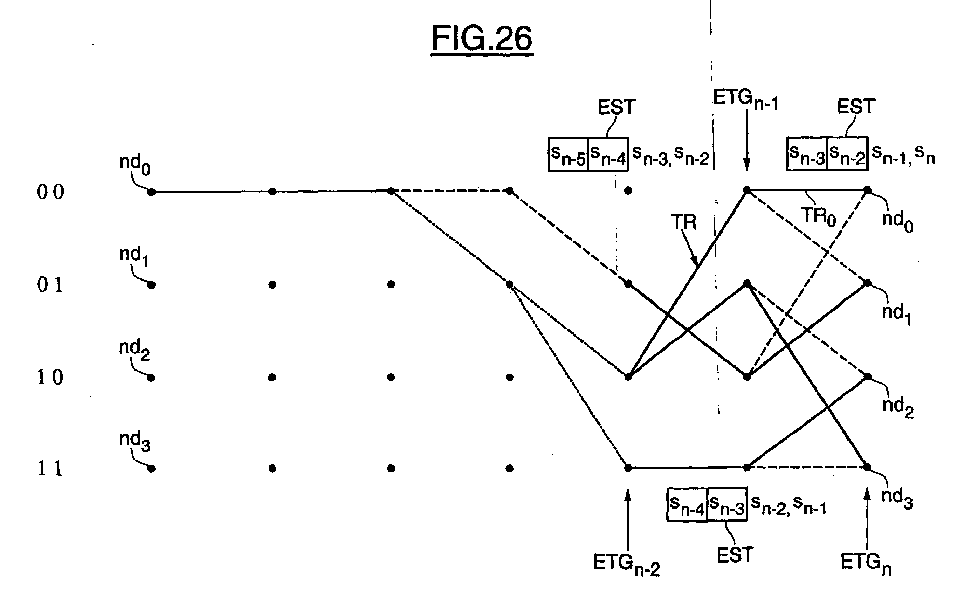

On se réfère plus particulièrement à cet égard à la figure 26, qui illustre un treillis réduit dans le cas particulier d'une modulation binaire (M=2), avec un nombre de coefficients L=5, et un nombre k=2 (ce qui conduit à un treillis réduit à quatre états ou noeuds $nd_0$-$nd_3$). Le nombre k peut être considéré comme la mémoire apparente du canal.

Les états de l'étage $ETG_{n-1}$ correspondent aux hypothèses sur les symboles $s_{n-2}$ et $s_{n-1}$. Par ailleurs, à chaque état, on associe une estimation EST des symboles manquants en raison de la réduction du treillis. Ainsi, à l'étage $ETG_{n-1}$, l'estimation EST est une estimation sur les symboles $s_{n-4}$ et $s_{n-3}$.

Puisque l'on est dans une modulation binaire, chaque symbole vaut 0 ou 1, par exemple. On affecte par exemple au noeud $nd_0$ les valeurs 00 correspondant respectivement aux deux symboles $s_{n-1}$, $s_n$ de l'étage $ETG_n$, ou bien aux deux symboles $s_{n-3}$, $s_{n-2}$ de l'étage $ETG_{n-2}$, etc...On affecte les valeurs 01 au noeud $nd_1$, les valeurs 10 au noeud $nd_2$ et les valeurs 11 au noeud $nd_3$.

A chaque noeud de l'étage courant de rang n du treillis, concourent deux transitions TR, respectivement issues de deux noeuds de l'étage précédent associés à deux valeurs opposées (dans le cas où M=2) du symbole de rang n-k. Chacune de ces deux transitions est affectée à la même hypothèse sur la valeur du symbole de rang n.

Une progression classique dans le treillis, d'un étage à l'autre, s'effectue alors en choisissant parmi ces chemins un chemin dit « survivant » défini comme étant celui qui conduit, pour l'état considéré de l'étage $ETG_n$, à l'obtention d'une métrique cumulée minimale ou maximale selon la métrique utilisée. Sur la figure 26, on n'a représenté à des fins de simplification que les chemins survivants aboutissant à l'étage $ETG_{n-1}$, et en traits pleins ceux aboutissant à l'étage $ETG_n$ (les chemin en concurrence et non sélectionnés à l'étage $ETG_n$ sont représentés en tiretés).

On associe également à cet état considéré de l'étage $ETG_n$ une nouvelle étiquette EST contenant l'estimation des symboles manquants $s_{n-3}$ et $s_{n-2}$. Pour déterminer la valeur de l'étiquette EST, on détermine le noeud ou état d'où est issu le chemin survivant ayant conduit à l'état considéré de l'étage $ETG_n$. Par exemple, le noeud $nd_0$ de l'étage $ETG_n$ est atteint par la transition (chemin survivant) $TR_0$ issue du noeud $nd_0$ de l'étage $ETG_{n-1}$. Par rapport à l'étiquette associée à l'état $nd_0$ de l'étage précédent $ETG_{n-1}$, à savoir celle contenant l'estimation sur les symboles $s_{n-4}$ et $s_{n-3}$, on garde au noeud $nd_0$ de l'étage $ETG_n$ pour la valeur du symbole $s_{n-3}$, la même valeur que celle qui était contenue dans l'étiquette associée au noeud $nd_0$ de l'étage $ETG_{n-1}$ et on affecte à la valeur $s_{n-2}$, la valeur du symbole $s_{n-2}$ correspondant au noeud $nd_0$ d'où est issue la transition $TR_0$ (ici $s_{n-2}$ est égal à 0).

Indépendamment de cette progression classique dans le treillis, les moyens de prise de décision vont, par analogie avec un treillis complet, prendre une décision unique sur le symbole de rang n-k (n-2 dans l'exemple décrit) lors de la prise en compte de l'échantillon de rang n. Ceci va, comme cela a déjà été expliqué ci-avant, permettre d'éviter d'attendre un temps relativement long correspondant à 5L échantillons pour prendre une décision sur le symbole de rang n-5L-k, en remontant le chemin aboutissant au noeud dont la métrique cumulée est minimale ou maximale.

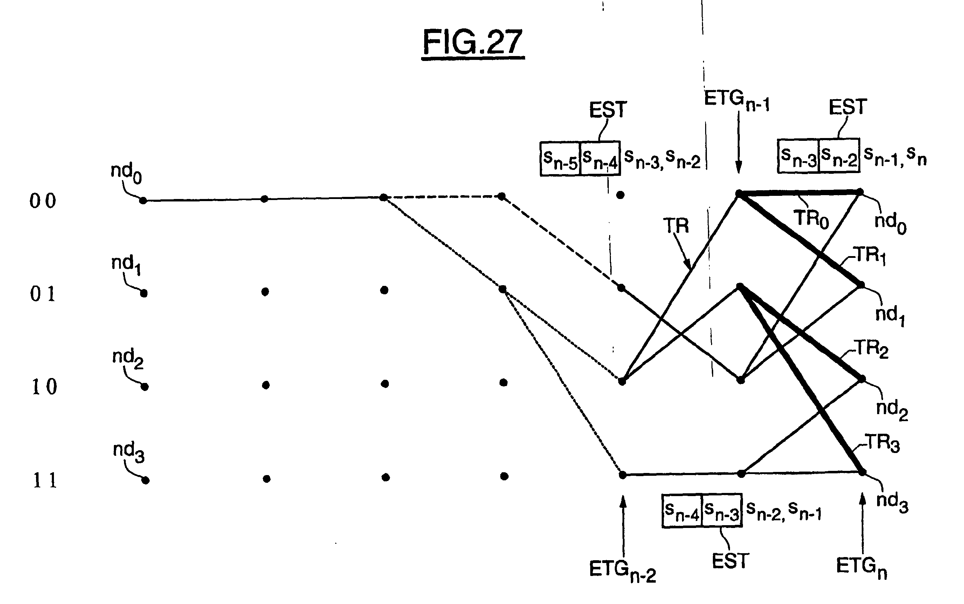

Cette prise de décision unique du symbole de rang n-k est illustrée sur les figures 27 à 30 et s'effectue d'une façon analogue à ce qui a déjà été expliqué pour un treillis complet. On n'en rappellera ici que les principales étapes.

Plus précisément, on procède, dans l'exemple qui est décrit, à un partionnement des transitions reliant les noeuds de l'étage $ETG_{n-1}$ aux noeuds de l'étage $ETG_n$, en deux groupes.

Le premier groupe correspondant à la valeur 0 du symbole de rang n-k (ici n-2) est formé des transitions $TR_0$, $TR_1$, $TR_2$ et $TR_3$ (figure 27).

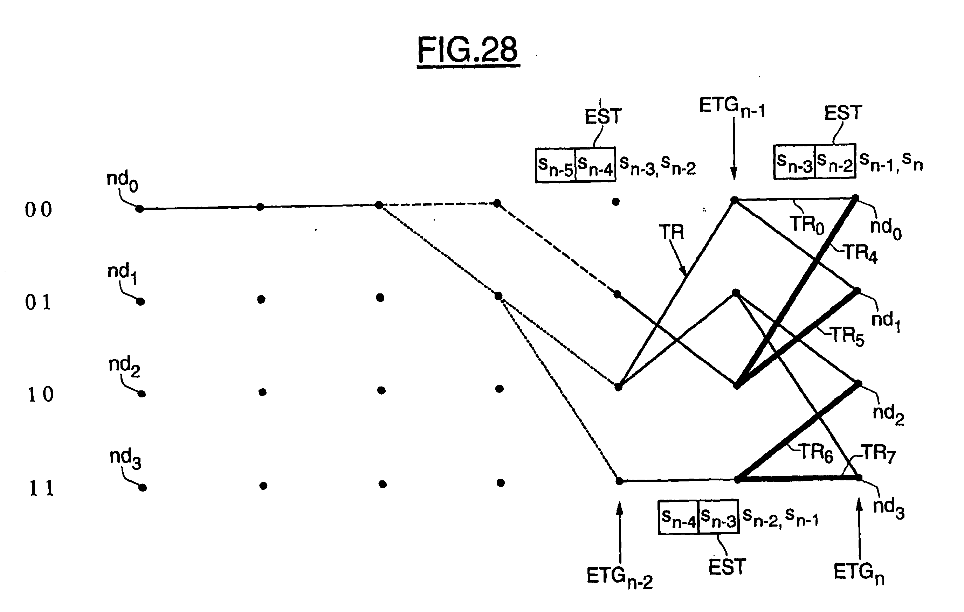

Le deuxième groupe, illustré sur la figure 28, correspondant à la valeur 1 du symbole $s_{n-k}$, est formé des transitions $TR_4$, $TR_5$, $TR_6$ et $TR_7$.

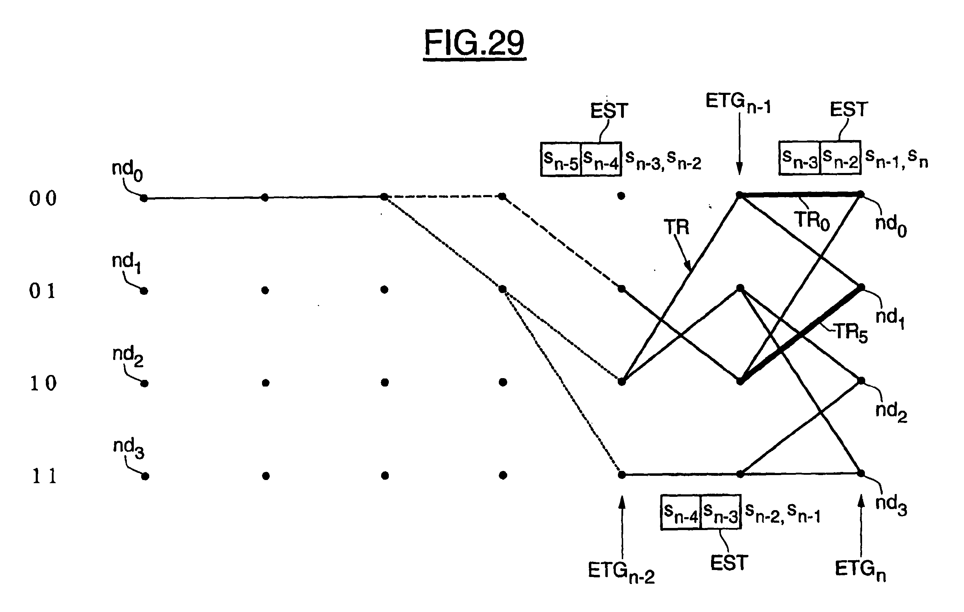

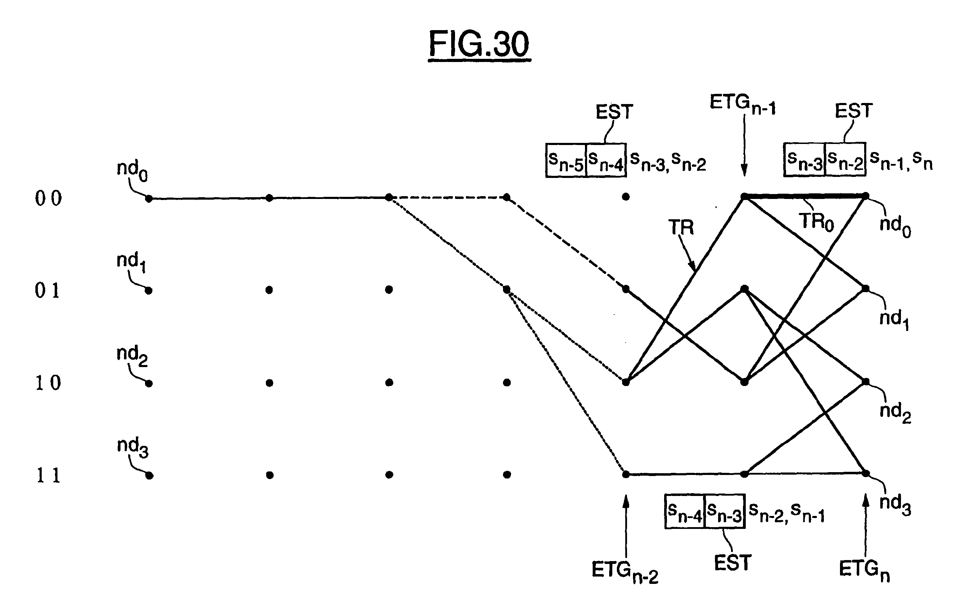

On détermine ensuite (figure 29) dans chaque groupe celle des transitions qui conduit à l'état affecté de la métrique cumulée minimale ou extremale selon le cas. On suppose ici que les transitions $TR_0$ et $TR_5$ ont été sélectionnées. Puis, on prend l'unique décision sur la valeur du symbole $s_{n-2}$ en détectant le groupe associé à l'extremum de ces deux métriques cumulées extremales. On suppose sur la figure 30 que c'est la transition $TR_0$ qui a été retenue et que par conséquent la valeur du symbole $s_{n-2}$ est égale à 0.

Alors que dans la variante de réalisation qui vient d'être décrite, la décision prise sur la valeur du symbole $s_{n-2}$ est différente des quatre valeurs des symboles $s_{n-2}$ contenues dans les quatre étiquettes EST, et qui sont utilisées pour la progression dans le treillis pour le choix du chemin survivant, il est particulièrement avantageux d'utiliser, dans une autre variante de réalisation, la valeur du symbole $s_{n-2}$ prise lors de la décision pour le calcul des étiquettes et la progression dans le treillis. En effet, dans la variante précédente, il faut, à chaque étape, mémoriser autant d'étiquettes qu'il y a d'états dans le treillis. Et, plus le canal est long, plus l'étiquette est grande. Et ceci se traduit également par de nombreux accès-mémoire, ce qui requiert des durées qui peuvent s'avérer pénalisantes.

La variante de réalisation qui va maintenant être décrite permet de remédier à cet inconvénient, en proposant une étiquette unique pour tous les noeuds d'un étage donné du treillis.

Plus précisément, on rappelle que les états de l'étage courant de rang n du treillis correspondent aux hypothèses sur les k symboles de rang n à n-k+1. Après avoir pris la décision unique sur le symbole de rang n-k, on associe à tous les états de l'étage courant $ETG_n$ du treillis une seule et même étiquette EST contenant les valeurs des symboles de rang n-k à n-L+2, respectivement obtenues lors de L-k-1 prises de décision uniques successives.

On calcule alors la métrique cumulée de chaque état de l'étage de rang n du treillis à partir

- de la métrique de transition (métrique de branche) associée à la transition aboutissant audit état de l'étage de rang n et issue de l'état de l'étage de rang n-1, correspondant à la valeur du symbole de rang n-k contenue dans ladite étiquette, et
- de la métrique cumulée associée à l'état de l'étage de rang n-1 d'où est issue ladite transition.

En d'autres termes, si l'on se réfère à nouveau à la figure 30, les moyens de prise de décision ont décidé que la valeur du symbole de rang n-k (ici n-2) était égale à 0. En conséquence, l'étiquette EST affectée à tous les états de l'étage $ETG_n$ contiendra la valeur du symbole $s_{n-3}$ résultant de la prise de décision unique effectuée lors de l'étape précédente dans le treillis, ainsi que la valeur de la décision sur le symbole $s_{n-2}$.

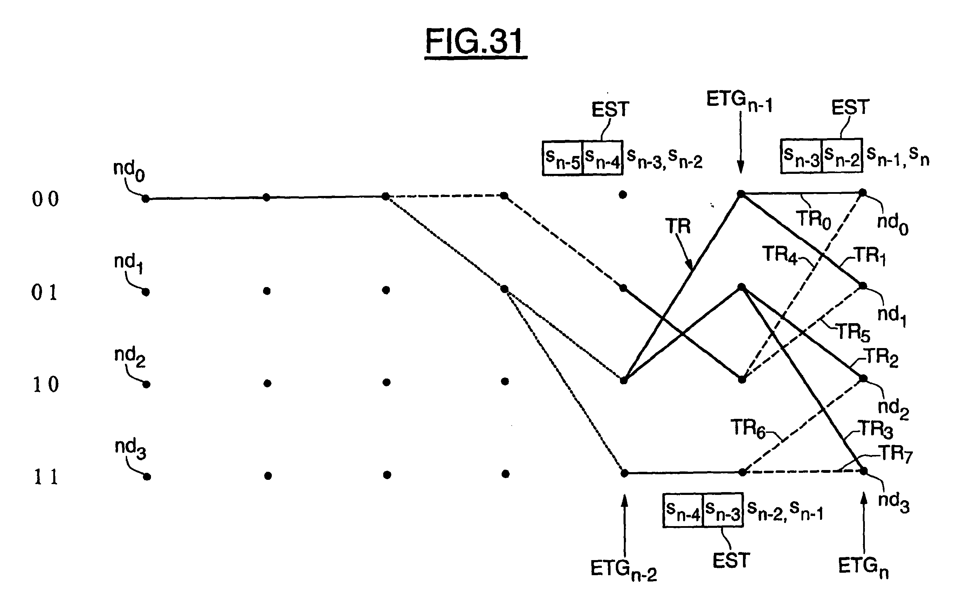

Il en résulte, comme illustré sur la figure 31, qu'à chaque noeud de l'étage $ETG_n$, le choix du chemin survivant sera conditionné par la valeur du symbole $s_{n-2}$.

Plus précisément, seules les transitions $TR_0$, $TR_1$, $TR_2$ et $TR_3$ issues des états $nd_0$ et $nd_1$ correspondant à la valeur 0 du symbole $s_{n-2}$, seront sélectionnées. Les autres transitions, correspondant à la valeur 1 du symbole $s_{n-2}$, à savoir les transitions $TR_4$, $TR_5$, $TR_6$ et $TR_7$, ne seront pas sélectionnées. Et, les nouvelles métriques cumulées des états de l'étage $ETG_n$ seront par conséquent calculées à partir des transitions ainsi sélectionnées.

En d'autres termes, la progression dans le treillis est ici conditionnée aux prises de décision successives sur les valeurs des symboles.

Les deux variantes qui viennent d'être décrites ici en référence aux figures 26 et suivantes s'appliquent, que la métrique utilisée soit une métrique euclidienne ou bien une métrique modifiée. Par contre, le fait de travailler avec une métrique modifiée apporte des avantages. En effet, en introduisant le filtre adapté, on introduit la fonction d'autocorrélation du canal. De ce fait, l'échantillon de rang n en sortie du filtre adapté dépend des symboles émis avant le symbole de rang n et des symboles émis après le symbole de rang n. On pourrait donc s'attendre à ce que l'algorithme DFSE modifié, qui fonctionne sur un treillis réduit, soit perturbé. Or, il a été observé de façon surprenante que ce n'était pas ou quasiment pas le cas avec l'utilisation d'une métrique modifiée.

Par ailleurs, le fait de travailler en sortie du filtre adapté permet de ne plus faire intervenir la phase du canal de propagation. Ainsi, que le canal soit à minimum de phase, à maximum de phase ou que la phase soit quelconque entre ces deux valeurs extrêmes, le signal est toujours exactement le même en sortie du filtre adapté.

En outre, la modification de la métrique à apporter pour tenir compte de la présence du filtre adapté va elle aussi dans le sens d'une simplification. En effet, avec une métrique du type «information de ressemblance», certains termes peuvent être précalculés de sorte que le calcul final pour la progression dans la treillis ne comporte aucune multiplication (contre deux multiplications pour la métrique euclidienne), ce qui permet une implémentation matérielle plus aisée de l'algorithme.

Le conditionnement de la progression dans le treillis aux prises de décision successives des valeurs des symboles, qui vient d'être décrit pour un treillis réduit, pourrait bien entendu s'appliquer également à un treillis complet.

## Revendications

1. Procédé d'estimation des valeurs successives de symboles numériques pouvant prendre chacun M valeurs possibles différentes, à partir des valeurs successives d'échantillons numériques ($r_i$) dont chacun résulte de la combinaison d'au plus L symboles successifs ($s_i$), comportant une progression étage par étage dans un treillis du type Viterbi à $M^k$ états, avec k inférieur ou égal à L-1, tous les états de tous les étages étant respectivement affectés de métriques cumulées, **caractérisé par le fait qu'**à la prise en compte de l'échantillon de rang n, on partitionne en M groupes (GR0-GR3) toutes les transitions parvenant aux différents états de l'étage courant du treillis, chaque groupe contenant toutes les transitions issues des états de l'étage précédent associés à l'une des M valeurs possibles du symbole de rang n-k, on calcule pour ces différents états de l'étage courant ($ETG_n$) du treillis les différentes métriques cumulées, on détermine dans chaque groupe celle des transitions qui conduit à l'état affecté d'une métrique cumulée extremale, et on prend une décision unique sur la valeur du symbole de rang n-k en détectant le groupe associé à l'extremum de ces M métriques cumulées extremales , cette décision unique étant affectée d'un indice de confiance-symbole élaboré à partir de ces M métriques cumulées extremales.

2. Procédé d'égalisation d'un canal de transmission d'informations, le canal de transmission ayant une réponse impulsionnelle à L coefficients et délivrant des échantillons numériques successifs ($r_i$) correspondant à des symboles successivement émis ($s_i$) pouvant prendre chacun M valeurs possibles différentes, le procédé comportant un traitement d'estimation des valeurs successives des symboles en progressant étage par étage dans un treillis du type Viterbi à $M^k$ états, avec k inférieur ou égal à L-1, tous les états de tous les étages étant respectivement affectés de métriques cumulées, **caractérisé par le fait qu'**à la réception de l'échantillon de rang n, on partitionne en M groupes toutes les transitions parvenant aux différents états de l'étage courant du treillis, chaque groupe contenant toutes les transitions issues des états de l'étage précédent associés à l'une des M valeurs possibles du symbole de rang n-k, on calcule pour ces différents états de l'étage courant ($ETG_n$) du treillis les différentes métriques cumulées, on détermine dans chaque groupe celle des transitions qui conduit à l'état affecté d'une métrique cumulée extremale, et on prend une décision unique sur la valeur du symbole de rang n-k en détectant le groupe associé à l'extremum de ces M métriques cumulées extremales, cette décision unique étant affectée d'un indice de confiance-symbole élaboré à partir de ces M métriques cumulées extremales.

3. Procédé selon la revendication 1 ou 2, **caractérisé par le fait que** les métriques cumulées sont des informations d'erreurs cumulées entre les valeurs observées et les valeurs attendues des échantillons, et **par le fait qu'**on détermine dans chaque groupe celle des transitions qui conduit à l'état affecté d'une métrique cumulée minimale, et on prend une décision unique sur la valeur du symbole de rang n-k ($s_{n-2}$) en détectant (84) le groupe associé à la plus faible de ces M métriques cumulées minimales, cette décision unique étant affectée d'un indice de confiance-symbole élaboré à partir de ces M métriques cumulées minimales.

4. Procédé selon la revendication 3, **caractérisé par le fait que** M est égal à 2, **par le fait que** la détection du groupe associé à la plus faible des deux métriques cumulées minimales comporte le calcul de la différence entre les deux métriques cumulées minimales, le signe de cette différence fournissant ladite décision unique sur la valeur du symbole de rang n-k ($s_{n-2}$), la valeur absolue de cette différence fournissant la valeur dudit indice de confiance-symbole.

5. Procédé selon la revendication 3, **caractérisé par le fait que** M est supérieur à 2, **par le fait que** la détection du groupe associé à la plus faible des M métriques cumulées minimales comporte une première sélection (100) de la plus faible de ces M métriques cumulées minimales, et **par le fait que** l'élaboration de l'indice de confiance-symbole affecté à ladite décision unique comporte une deuxième sélection (102) parmi les M-1 métriques cumulées minimales restantes non sélectionnées à l'issue de ladite première sélection, de la plus faible de ces M-1 métriques cumulées minimales restantes, et le calcul de la différence (103) entre les deux métriques cumulées minimales respectivement issues de la première et de la deuxième sélections, la valeur positive de cette différence fournissant la valeur dudit indice de confiance-symbole.

6. Procédé selon la revendication 1 ou 2, **caractérisé par le fait que** les métriques cumulées sont des informations de ressemblances cumulées entre les valeurs observées et les valeurs attendues des échantillons, et **par le fait qu'**on détermine dans chaque groupe celle des transitions qui conduit à l'état affecté d'une métrique cumulée maximale, et on prend une décision unique sur la valeur du symbole de rang n-k en détectant (85) le groupe associé à la plus grande de ces M métriques cumulées maximales, cette décision unique étant affectée d'un indice de confiance-symbole élaboré à partir de ces M métriques cumulées maximales.

7. Procédé selon la revendication 6, **caractérisé par le fait que** M est égal à 2, **par le fait que** la détection du groupe associé à la plus grande des deux métriques cumulées maximales comporte le calcul de la différence entre les deux métriques cumulées maximales, le signe de cette différence fournissant ladite décision unique sur la valeur du symbole de rang n-k, la valeur absolue de cette différence fournissant la valeur dudit indice de confiance-symbole.

8. Procédé selon la revendication 6, **caractérisé par le fait que** M est supérieur à 2, **par le fait que** la détection du groupe associé à la plus grande des M métriques cumulées maximales comporte une première sélection (110) de la plus grande de ces M métriques cumulées maximales, et **par le fait que** l'élaboration de l'indice de confiance-symbole affecté à ladite décision unique comporte une deuxième sélection (112) parmi les M-1 métriques cumulées maximales restantes non sélectionnées à l'issue de ladite première sélection, de la plus grande de ces M-1 métriques cumulées maximales restantes, et le calcul de la différence (113) entre les deux métriques cumulées maximales respectivement issues de la première et de la deuxième sélections, la valeur positive de cette différence fournissant la valeur dudit indice de confiance-symbole.

9. Procédé selon la revendication 5 ou 8, **caractérisé par le fait que** chaque symbole est formé de b bits, avec M égal à $2^b$, **par le fait qu'**on élabore un indice de confiance-bit pour chacun des bits du symbole de rang n-k élu à l'issue de ladite décision unique, en utilisant ledit symbole élu (SEU) et au moins un symbole auxiliaire (SAX) élaboré à partir dudit symbole élu en complémentant au moins la valeur du bit considéré.

10. Procédé selon la revendication 9 prise en combinaison avec la revendication 5, **caractérisé par le fait que** l'élaboration de l'indice de confiance-bit pour un bit considéré du symbole élu comporte

   - une première étape dans laquelle on élabore un seul symbole auxiliaire (SAX) en complémentant uniquement la valeur du bit considéré tout en laissant inchangées les valeurs des autres bits du symbole élu,
   - une deuxième étape dans laquelle on sélectionne la métrique cumulée minimale associée au groupe de transitions auquel appartient ledit symbole auxiliaire (SAX), et
   - une troisième étape dans laquelle on effectue la différence entre la métrique cumulée minimale associée au groupe de transitions auquel appartient ledit symbole élu (SEU) et la métrique cumulée minimale associée au groupe de transitions auquel appartient ledit symbole auxiliaire (SAX), le résultat de cette différence fournissant la valeur dudit indice de confiance-bit.

11. Procédé selon la revendication 9 prise en combinaison avec la revendication 5, **caractérisé par le fait que** l'élaboration de l'indice de confiance-bit pour un bit considéré du symbole élu comporte

- une première étape dans laquelle on élabore un ensemble de symboles auxiliaires ($SAX_j$) en complémentant la valeur du bit considéré et en conférant aux autres bits du symbole élu toutes les valeurs possibles,
- une deuxième étape dans laquelle on sélectionne respectivement les métriques cumulées minimales associées aux groupes de transitions auxquels appartiennent respectivement les symboles auxiliaires ($SAX_j$),
- une troisième étape dans laquelle on sélectionne la plus faible des métriques cumulées minimales respectivement sélectionnées à la deuxième étape, et
- une quatrième étape dans laquelle on effectue la différence entre la métrique cumulée minimale associée au groupe de transitions auquel appartient ledit symbole élu et la métrique cumulée minimale sélectionnée à la troisième étape, le résultat de cette différence fournissant la valeur dudit indice de confiance-bit.

**12.** Procédé selon la revendication 9 prise en combinaison avec la revendication 8, **caractérisé par le fait que** l'élaboration de l'indice de confiance-bit pour un bit considéré du symbole élu comporte

- une première étape dans laquelle on élabore un seul symbole auxiliaire (SAX) en complémentant uniquement la valeur du bit considéré tout en laissant inchangées les valeurs des autres bits du symbole élu (SEU),
- une deuxième étape dans laquelle on sélectionne la métrique cumulée maximale associée au groupe de transitions auquel appartient ledit symbole auxiliaire (SAX), et
- une troisième étape dans laquelle on effectue la différence entre la métrique cumulée maximale associée au groupe de transitions auquel appartient ledit symbole (SEU) élu et la métrique cumulée maximale associée au groupe de transitions auquel appartient ledit symbole auxiliaire (SAX), le résultat de cette différence fournissant la valeur dudit indice de confiance-bit.

**13.** Procédé selon la revendication 9 prise en combinaison avec la revendication 8, **caractérisé par le fait que** l'élaboration de l'indice de confiance-bit pour un bit considéré du symbole élu comporte

- une première étape dans laquelle on élabore un ensemble de symboles auxiliaires ($SAX_j$) en complémentant la valeur du bit considéré et en conférant aux autres bits du symbole élu toutes les valeurs possibles,
- une deuxième étape dans laquelle on sélectionne respectivement les métriques cumulées maximales associées aux groupes de transitions auxquels appartiennent respectivement les symboles auxiliaires ($SAX_j$),
- une troisième étape dans laquelle on sélectionne la plus grande des métriques cumulées maximales respectivement sélectionnées à la deuxième étape, et
- une quatrième étape dans laquelle on effectue la différence entre la métrique cumulée maximale associée au groupe de transitions auquel appartient ledit symbole élu (SEU) et la métrique cumulée maximale sélectionnée à la troisième étape, le résultat de cette différence fournissant la valeur dudit indice de confiance-bit.

**14.** Procédé selon l'une des revendications précédentes, **caractérisé par le fait que** le treillis est un treillis réduit à $M^k$ états, avec k inférieur à L-1.

**15.** Procédé selon la revendication 14, **caractérisé par le fait que** les états de l'étage courant de rang n du treillis correspondent aux hypothèses sur les k symboles de rang n à n-k+1, **par le fait qu'**après avoir pris la décision unique sur le symbole de rang n-k, on associe à tous les états de l'étage courant ($ETG_n$) du treillis une seule et même étiquette (EST) contenant les valeurs des symboles de rang n-k à n-L+2 respectivement obtenues lors des L-k-1 prises de décisions uniques successives, et **par le fait qu'**on calcule la métrique cumulée de chaque état de l'étage de rang n du treillis à partir

de la métrique de transition associée à la transition aboutissant audit état de l'étage de rang n et issue de l'état de l'étage de rang n-1 correspondant à la valeur du symbole de rang n-k contenue dans ladite étiquette, et
de la métrique cumulée associée à l'état de l'étage de rang n-1 d'où est issue ladite transition.

**16.** Procédé selon la revendication 15, prise en combinaison avec les revendications 2 et 6, **caractérisé par le fait qu'**on filtre les échantillons reçus par un filtre (FA) adapté à la réponse impulsionnelle du canal, et **par le fait qu'**on effectue le traitement d'estimation sur les échantillons filtrés.

**17.** Procédé selon l'une des revendications précédentes, **caractérisé par le fait que** la progression dans le treillis est conditionnée aux prises de décisions uniques successives sur les valeurs des symboles.

**18.** Dispositif d'estimation des valeurs successives de symboles numériques pouvant prendre chacun M valeurs possibles différentes, comportant des moyens de réception aptes à recevoir des valeurs successives d'échantillons numériques dont chacun résulte de la combinaison d'au plus L symboles successifs ($s_i$), et des moyens d'estimation (MEST) aptes à estimer les valeurs successives des symboles en progressant étage par étage dans un treillis du type Viterbi à $M^k$ états, avec k inférieur ou égal L-1, tous les états de tous les étages étant respectivement affectés de métriques cumulées, **caractérisé par le fait que** les moyens d'estimation (MEST) comportent

- des moyens de partitionnement (MPT) aptes, à la prise en compte de l'échantillon de rang n, à partitionner en M groupes toutes les transitions parvenant aux différents états de l'étage correspondant courant du treillis, chaque groupe contenant toutes les transitions issues des états de l'étage précédent associés à l'une des M valeurs possibles du symbole de rang n-k,
- des moyens de calcul (MCL) aptes à calculer pour ces différents états de l'étage courant du treillis les différentes métriques cumulées,
- des moyens de détermination (MDT) aptes à déterminer dans chaque groupe celle des transitions qui conduit à l'état affecté de la métrique cumulée extremale,
- des moyens de prise de décision (MPD) aptes à prendre une unique décision sur la valeur du symbole de rang n-k en détectant le groupe associé à l'extremum de ces M métriques cumulées extremales , et
- des premiers moyens d'élaboration (MEB1) aptes à élaborer, à partir de ces M métriques cumulées extremales, un indice de confiance-symbole affectée à cette décision unique.

**19.** Dispositif d'égalisation d'un canal de transmission d'informations, comportant une mémoire (MM) contenant L coefficients représentatifs de la réponse impulsionnelle du canal de transmission, des moyens de réception aptes à recevoir des échantillons numériques successifs correspondant à des symboles successivement émis pouvant prendre chacun M valeurs possibles différentes, et un bloc d'égalisation (BEQ) comportant des moyens d'estimation (MEST) aptes à estimer les valeurs successives des symboles en progressant étage par étage dans un treillis du type Viterbi à $M^k$ états, avec k inférieur ou égal L-1, tous les états de tous les étages étant respectivement affectés de métriques cumulées, **caractérisé par le fait que** les moyens d'estimation (MEST) comportent

- des moyens de partitionnement (MPT) aptes, à la réception de l'échantillon de rang n, à partitionner en M groupes toutes les transitions parvenant aux différents états de l'étage correspondant courant du treillis, chaque groupe contenant toutes les transitions issues des états de l'étage précédent associés à l'une des M valeurs possibles du symbole de rang n-k,
- des moyens de calcul (MCL) aptes à calculer pour ces différents états de l'étage courant du treillis les différentes métriques cumulées,
- des moyens de détermination (MDT) aptes à déterminer dans chaque groupe celle des transitions qui conduit à l'état affecté d'une métrique cumulée extremale,
- des moyens de prise de décision (MPD) aptes à prendre une unique décision sur la valeur du symbole de rang n-k en détectant le groupe associé à l'extremum de ces M métriques cumulées extremales, et
- des premiers moyens d'élaboration (MEB1) aptes à élaborer, à partir de ces M métriques cumulées extremales, un indice de confiance-symbole affectée à cette décision unique.

**20.** Dispositif selon la revendication 18 ou 19, **caractérisé par le fait que** les métriques cumulées sont des informations d'erreurs cumulées entre les valeurs observées et les valeurs attendues des échantillons, **par le fait que** les moyens de détermination (MDT) sont aptes à déterminer dans chaque groupe celle des transitions qui conduit à l'état affecté d'une métrique cumulée minimale, **par le fait que** les moyens de prise de décision (MPD) sont aptes à prendre une décision unique sur la valeur du symbole de rang n-k en détectant le groupe associé à la plus faible de ces M métriques cumulées minimales , et **par le fait que** les premiers moyens d'élaboration (MEB1) sont aptes à élaborer l'indice de confiance-symbole à partir de ces M métriques cumulées minimales.

**21.** Dispositif selon la revendication 20, **caractérisé par le fait que** M est égal à 2, **par le fait que** les moyens de prise de décision (MPD) comportent un soustracteur (STR) apte à calculer la différence entre les deux métriques cumulées minimales, le signe de cette différence fournissant ladite décision unique sur la valeur du symbole de rang n-k, et **par le fait que** les premiers moyens d'élaboration (MEB1) comportent ledit soustracteur (STR), la valeur absolue de la différence calculée par le soustracteur fournissant la valeur dudit indice de confiance-symbole.

**22.** Dispositif selon la revendication 20, **caractérisé par le fait que** M est supérieur à 2, **par le fait que** les moyens de prise de décision (MPD) comportent des premiers moyens de sélection (SEL1) aptes à effectuer une première sélection de la plus faible de ces M métriques cumulées minimales, et **par le fait que** les premiers moyens d'élaboration (MEB1) comportent des deuxièmes moyens de sélection (SEL2) aptes à effectuer une deuxième sélection parmi les M-1 métriques cumulées minimales non sélectionnées à l'issue de ladite première sélection, de la plus faible de ces M-1 métriques cumulées minimales restantes, et un soustracteur (STR) apte à calculer la différence entre les deux métriques cumulées minimales respectivement issues de la première et de la deuxième sélections, la valeur positive de cette différence fournissant la valeur dudit indice de confiance-symbole.

**23.** Dispositif selon la revendication 18 ou 19, **caractérisé par le fait que** les métriques cumulées sont des informations de ressemblances cumulées entre les valeurs observées et les valeurs attendues des échantillons, **par le fait que** les moyens de détermination (MDT) sont aptes à déterminer dans chaque groupe celle des transitions qui conduit à l'état affecté d'une métrique cumulée maximale, **par le fait que** les moyens de prise de décision (MPD) sont aptes à prendre une décision unique sur la valeur du symbole de rang n-k en détectant le groupe associé à la plus grande de ces M métriques cumulées maximales , et **par le fait que** les premiers moyens d'élaboration (MEB1) sont aptes à élaborer l'indice de confiance-symbole à partir de ces M métriques cumulées maximales.

**24.** Dispositif, selon la revendication 23, **caractérisé par le fait que** M est égal à 2, **par le fait que** les moyens de prise de décision (MPD) comportent un soustracteur (STR) apte à calculer la différence entre les deux métriques cumulées maximales, le signe de cette différence fournissant ladite décision unique sur la valeur du symbole de rang n-k, et **par le fait que** les premiers moyens d'élaboration (MEB1) comportent ledit soustracteur, la valeur absolue de la différence calculée par le soustracteur fournissant la valeur dudit indice de confiance-symbole.

**25.** Dispositif selon la revendication 23, **caractérisé par le fait que** M est supérieur à 2, **par le fait que** les moyens de prise de décision (MPD) comportent des premiers moyens de sélection (SEL1) aptes à effectuer une première sélection de la plus grande de ces M métriques cumulées maximales, et **par le fait que** les premiers moyens d'élaboration (MEB1) comportent des deuxièmes moyens de sélection (SEL2) aptes à effectuer une deuxième sélection parmi les M-1 métriques cumulées maximales restantes non sélectionnées à l'issue de ladite première sélection, de la plus grande de ces M-1 métriques cumulées maximales restantes, et un soustracteur (STR) apte à calculer la différence entre les deux métriques cumulées maximales respectivement issues de la première et de la deuxième sélections, la valeur positive de cette différence fournissant la valeur dudit indice de confiance-symbole

**26.** Dispositif selon la revendication 22 ou 25, **caractérisé par le fait que** chaque symbole est formé de b bits, avec M égal à $2^b$, **par le fait qu'**il comprend des deuxièmes moyens d'élaboration (MEB2) aptes à élaborer un indice de confiance-bit pour chacun des bits du symbole de rang n-k élu à l'issue de ladite décision unique, en utilisant ledit symbole élu et au moins un symbole auxiliaire élaboré à partir dudit symbole élu en complémentant au moins la valeur du bit considéré.

**27.** Dispositif selon la revendication 26 prise en combinaison avec la revendication 22, **caractérisé par le fait que** les deuxièmes moyens d'élaboration comportent

- des moyens d'élaboration auxiliaires (MX, CMP) aptes à élaborer un seul symbole auxiliaire en complémentant uniquement la valeur du bit considéré tout en laissant inchangées les valeurs des autres bits du symbole élu,
- des moyens de sélection auxiliaires (SELX1) aptes à sélectionner la métrique cumulée minimale associée au groupe de transitions auquel appartient ledit symbole auxiliaire, et
- un soustracteur auxiliaire (STRX) apte à effectuer la différence entre la métrique cumulée minimale associée au groupe de transitions auquel appartient ledit symbole élu et la métrique cumulée minimale associée au groupe de transitions auquel appartient ledit symbole auxiliaire, le résultat de cette différence fournissant la valeur dudit indice de confiance-bit.

**28.** Dispositif selon la revendication 26 prise en combinaison avec la revendication 22, **caractérisé par le fait que** les deuxièmes moyens d'élaboration comportent

- des moyens d'élaboration auxiliaires (MEBX) aptes à élaborer un ensemble de symboles auxiliaires en complémentant la valeur du bit considéré et en conférant aux autres bits du symbole élu toutes les valeurs possibles,
- des premiers moyens de sélection auxiliaires (SELX1) aptes à sélectionner respectivement les métriques cumulées minimales associées aux groupes de transitions auxquels appartiennent respectivement les symboles auxiliaires,
- des deuxièmes moyens de sélection auxiliaires (SELX2) aptes à sélectionner la plus faible des métriques cumulées minimales respectivement sélectionnées par les premiers moyens de sélection auxiliaires, et
- un soustracteur auxiliaire (STRX) apte à effectuer la différence entre la métrique cumulée minimale associée au groupe de transitions auquel appartient ledit symbole élu et la métrique cumulée minimale sélectionnée par les deuxièmes moyens de sélection auxiliaires, le résultat de cette différence fournissant la valeur dudit indice de confiance-bit.

**29.** Dispositif selon la revendication 26 prise en combinaison avec la revendication 25, **caractérisé par le fait que** les deuxièmes moyens d'élaboration comportent

- des moyens d'élaboration auxiliaires (MX, CMP) aptes à élaborer un seul symbole auxiliaire en complémentant uniquement la valeur du bit considéré tout en laissant inchangées les valeurs des autres bits du symbole élu,
- des moyens de sélection auxiliaires (SELX1) aptes à sélectionner la métrique cumulée maximale associée au groupe de transitions auquel appartient ledit symbole auxiliaire, et
- un soustracteur auxiliaire (STRX) apte à effectuer la différence entre la métrique cumulée maximale associée au groupe de transitions auquel appartient ledit symbole élu et la métrique cumulée maximale associée au groupe de transitions auquel appartient ledit symbole auxiliaire, le résultat de cette différence fournissant la valeur dudit indice de confiance-bit.

**30.** Dispositif selon la revendication 26 prise en combinaison avec la revendication 25, **caractérisé par le fait que** les deuxièmes moyens d'élaboration comportent

- des moyens d'élaboration auxiliaires (MEBX) aptes à élaborer un ensemble de symboles auxiliaires en complémentant la valeur du bit considéré et en conférant aux autres bits du symbole élu toutes les valeurs possibles,
- des premiers moyens de sélection auxiliaires (SELX1) aptes à sélectionner respectivement les métriques cumulées maximales associées aux groupes de transitions auxquels appartiennent respectivement les symboles auxiliaires,
- des deuxièmes moyens de sélection auxiliaires (SELX2) aptes à sélectionner la plus grande des métriques cumulées maximales respectivement sélectionnées par les premiers moyens de sélection auxiliaires, et
- un soustracteur auxiliaire (STRX) apte à effectuer la différence entre la métrique cumulée maximale associée au groupe de transitions auquel appartient ledit symbole élu et la métrique cumulée maximale sélectionnée par les deuxièmes moyens de sélection auxiliaires, le résultat de cette différence fournissant la valeur dudit indice de confiance-bit.

**31.** Dispositif selon l'une des revendications 18 à 30, **caractérisé par le fait que** le treillis est un treillis réduit à $M^k$ états, avec k inférieur à L-1.

**32.** Dispositif selon la revendication 31, **caractérisé par le fait que** les états de l'étage courant de rang n du treillis correspondent aux hypothèses sur les k symboles de rang n à n-k+1, **par le fait que** les moyens de prise de décision sont aptes à prendre une décision unique sur le symbole de rang n-k, **par le fait que** les moyens d'estimation sont aptes à associer à tous les états de l'étage courant ($ETG_n$) du treillis une seule et même étiquette (EST) contenant les valeurs des symboles de rang n-k à n-L+2 respectivement obtenues lors des L-k-1 décisions uniques successives délivrées par les moyens de prise de décision, et **par le fait que** les moyens de calcul (MCL) sont aptes à calculer la métrique cumulée de chaque état de l'étage de rang n du treillis à partir

de la métrique de transition associée à la transition aboutissant audit état de l'étage de rang n et issue de l'état de l'étage de rang n-1 correspondant à la valeur du symbole de rang n-k contenue dans ladite étiquette, et

de la métrique cumulée associée à l'état de l'étage de rang n-1 d'où est issue ladite transition.

**33.** Dispositif selon la revendication 32, prise en combinaison avec les revendications 19 et 23, **caractérisé par le fait que** le bloc d'égalisation (BEQ) comporte en tête un filtre (FA) adapté à la réponse impulsionnelle du canal.

**34.** Récepteur d'informations numériques, en particulier téléphone mobile cellulaire, **caractérisé par le fait qu'**il incorpore un dispositif tel que défini dans l'une des revendications 18 à 33.

**35.** Produit programme d'ordinateur enregistré sur un support utilisable dans un processeur, comprenant des moyens de code-programme mettant en oeuvre le procédé tel que défini dans l'une des revendications 1 à 17 lorsque ledit produit est exécuté au sein d'un processeur.

**Claims**

**1.** Method for the estimation of the successive values of digital symbols each able to take M different possible values, starting from the successive values of digital samples ($r_i$) which each result from the combination of, at most, L successive symbols ($s_i$), comprising a level by level progression within a lattice of the Viterbi type with $M^k$ states, with k less than or equal to L-1, all the states of all the levels being respectively assigned cumulated metrics, **characterized in that** when the sample of rank n is taken into account, all the transitions arriving at the various states of the current level of the lattice are partitioned into M groups (GRO-GR3), each group containing all the transitions coming from those states of the preceding level which are associated with one of the M possible values of the symbol of rank n-k, the various cumulated metrics are calculated for these various states of the current level ($ETG_n$) of the lattice, within each group the transition that leads to the state assigned an extreme-value cumulated metric is determined, and a single decision is taken as to the value of the symbol of rank n-k by detecting the group associated with the extremum of these M extreme-value cumulated metrics, this single decision being assigned a symbol-confidence index generated from these M extreme-value cumulated metrics.

2. Method for the equalization of an information transmission channel, the transmission channel having a pulse response with L coefficients and delivering successive digital samples ($r_i$) corresponding to successively transmitted symbols ($s_i$) each being able to take M different possible values, the method comprising a processing operation for estimating the successive values of the symbols by progressing level by level within a lattice of the Viterbi type with $M^k$ states, with k less than or equal to L-1, all the states of all the levels being respectively assigned cumulated metrics, **characterized in that** when the sample of rank n is received, all the transitions arriving at the various states of the current level of the lattice are partitioned into M groups, each group containing all the transitions coming from those states of the preceding level which are associated with one of the M possible values of the symbol of rank n-k, the various cumulated metrics are calculated for these various states of the current level ($ETG_n$) of the lattice, within each group the transition that leads to the state assigned an extreme-value cumulated metric is determined, and a single decision is taken as to the value of the symbol of rank n-k by detecting the group associated with the extremum of these M extreme-value cumulated metrics, this single decision being assigned a symbol-confidence index generated from these M extreme-value cumulated metrics.

3. Method according to either of Claims 1 and 2, **characterized in that** the cumulated metrics are information on cumulated errors between the observed values and the expected values of the samples, and **in that** within each group the transition that leads to the state assigned the minimum cumulated metric is determined, and a single decision is taken as to the value of the symbol of rank n-k ($s_{n-2}$) by detecting (84) the group associated with the lowest of these M minimum cumulated metrics, this single decision being assigned a symbol-confidence index generated from these M minimum cumulated metrics.

4. Method according to Claim 3, **characterized in that** M is equal to 2, **in that** the detection of the group associated with the lowest of the two minimum cumulated metrics comprises the calculation of the difference between the two minimum cumulated metrics, the sign of this difference providing the said single decision as to the value of the symbol of rank n-k ($s_{n-2}$), the absolute value of this difference providing the value of the said symbol-confidence index.

5. Method according to Claim 3, **characterized in that** M is greater than 2, **in that** the detection of the group associated with the lowest of the M minimum cumulated metrics comprises a first selection (100) of the lowest of these M minimum cumulated metrics, and **in that** the generation of the symbol-confidence index assigned to the said single decision comprises a second selection (102), from amongst the M-1 remaining minimum cumulated metrics not selected after the said first selection, of the lowest of these M-1 remaining minimum cumulated metrics, and the calculation of the difference (103) between the two minimum cumulated metrics coming respectively from the first and from the second selections, the positive value of this difference providing the value of the said symbol-confidence index.

6. Method according to either of Claims 1 and 2, **characterized in that** the cumulated metrics are information on cumulated resemblances between the observed values and the expected values of the samples, and **in that** within each group the transition that leads to the state assigned the maximum cumulated metric is determined, and a single decision is taken as to the value of the symbol of rank n-k by detecting (85) the group associated with the highest of these M maximum cumulated metrics, this single decision being assigned a symbol-confidence index generated from these M maximum cumulated metrics.

7. Method according to Claim 6, **characterized in that** M is equal to 2, **in that** the detection of the group associated with the highest of the two maximum cumulated metrics comprises the calculation of the difference between the two maximum cumulated metrics, the sign of this difference providing the said single decision as to the value of the symbol of rank n-k, the absolute value of this difference providing the value of the said symbol-confidence index.

8. Method according to Claim 6, **characterized in that** M is greater than 2, **in that** the detection of the group associated with the highest of the M maximum cumulated metrics comprises a first selection (110) of the highest of these M maximum cumulated metrics, and **in that** the generation of the symbol-confidence index assigned to the said single decision comprises a second selection (112), from amongst the M-1 remaining maximum cumulated metrics not selected after the said first selection, of the highest of these M-1 remaining maximum cumulated metrics, and the calculation of the difference (113) between the two maximum cumulated metrics coming respectively from the first and from the second selections, the positive value of this difference providing the value of the said symbol-confidence index.

**9.** Method according to either of Claims 5 and 8, **characterized in that** each symbol is composed of b bits, with M equal to $2^b$, **in that** a bit-confidence index is generated for each of the bits of the symbol of rank n-k selected after the said single decision, using the said selected symbol (SEU) and at least one auxiliary symbol (SAX) generated from the said selected symbol by complementing at least the value of the bit in question.

**10.** Method according to Claim 9 taken in combination with Claim 5, **characterized in that** the generation of the bit-confidence index for a bit being considered of the selected symbol comprises

- a first step in which a single auxiliary symbol (SAX) is generated by complementing only the value of the bit in question while leaving the values of the other bits of the selected symbol unchanged,
- a second step in which the minimum cumulated metric associated with the group of transitions to which the said auxiliary symbol (SAX) belongs is selected, and
- a third step in which the difference is performed between the minimum cumulated metric associated with the group of transitions to which the said selected symbol (SEU) belongs and the minimum cumulated metric associated with the group of transitions to which the said auxiliary symbol (SAX) belongs, the result of this difference providing the value of the said bit-confidence index.

**11.** Method according to Claim 9 taken in combination with Claim 5, **characterized in that** the generation of the bit-confidence index for a bit being considered of the selected symbol comprises

- a first step in which a set of auxiliary symbols ($SAX_j$) is generated by complementing the value of the bit in question and by assigning to the other bits of the selected symbol all the possible values,
- a second step in which the minimum cumulated metrics associated with the groups of transitions to which the auxiliary symbols ($SAX_j$) respectively belong are respectively selected,
- a third step in which the lowest of the minimum cumulated metrics respectively selected in the second step is selected, and
- a fourth step in which the difference is performed between the minimum cumulated metric associated with the group of transitions to which the said selected symbol belongs and the minimum cumulated metric selected in the third step, the result of this difference providing the value of the said bit-confidence index.

**12.** Method according to Claim 9 taken in combination with Claim 8, **characterized in that** the generation of the bit-confidence index for a bit being considered of the selected symbol comprises

- a first step in which a single auxiliary symbol (SAX) is generated by complementing only the value of the bit in question while leaving the values of the other bits of the selected symbol (SEU) unchanged,
- a second step in which the maximum cumulated metric associated with the group of transitions to which the said auxiliary symbol (SAX) belongs is selected, and
- a third step in which the difference is performed between the maximum cumulated metric associated with the group of transitions to which the said selected symbol (SEU) belongs and the maximum cumulated metric associated with the group of transitions to which the said auxiliary symbol (SAX) belongs, the result of this difference providing the value of the said bit-confidence index.

**13.** Method according to Claim 9 taken in combination with Claim 8, **characterized in that** the generation of the bit-confidence index for a bit being considered of the selected symbol comprises

- a first step in which a set of auxiliary symbols ($SAX_j$) is generated by complementing the value of the bit in question and by assigning to the other bits of the selected symbol all the possible values,
- a second step in which the maximum cumulated metrics associated with the groups of transitions to which the auxiliary symbols ($SAX_j$) respectively belong are respectively selected,
- a third step in which the highest of the maximum cumulated metrics respectively selected in the second step is selected, and

- a fourth step in which the difference is performed between the maximum cumulated metric associated with the group of transitions to which the said selected symbol (SEU) belongs and the maximum cumulated metric selected in the third step, the result of this difference providing the value of the said bit-confidence index.

14. Method according to one of the preceding claims, **characterized in that** the lattice is a lattice reduced to $M^k$ states, with k less than L-1.

15. Method according to Claim 14, **characterized in that** the states of the current level of rank n of the lattice correspond to the assumptions as to the k symbols of rank n to n-k+1, **in that** after having taken the single decision as to the symbol of rank n-k, one and the same label (EST) is associated with all the states of the current level ($ETG_n$) of the lattice which label contains the values of the symbols of rank n-k to n-L+2 respectively obtained when the L-k-1 successive single decisions were taken, and **in that** the cumulated metric of each state of the level of rank n of the lattice is calculated using

the transition metric associated with the transition terminating at the said state of the level of rank n and coming from the state of the level of rank n-1 corresponding to the value of the symbol of rank n-k contained within the said label, and

the cumulated metric associated with the state of the level of rank n-1 whence the said transition originated.

16. Method according to Claim 15, taken in combination with Claims 2 and 6, **characterized in that** the samples received are filtered by a filter (FA) tuned to the pulse response of the channel, and **in that** the estimation processing operation is performed on the filtered samples.

17. Method according to one of the preceding claims, **characterized in that** the progression in the lattice is conditioned by the successive single decisions taken as to the values of the symbols.

18. Device for the estimation of the successive values of digital symbols each able to take M different positive values, comprising receiving means capable of receiving successive values of digital samples which each result from the combination of, at most, L successive symbols ($s_i$), and estimation means (MEST) capable of estimating the successive values of the symbols by progressing level by level within a lattice of the Viterbi type with $M^k$ states, with k less than or equal to L-1, all the states of all the levels being respectively assigned cumulated metrics, **characterized in that** the estimation means (MEST) comprise

- partitioning means (MPT) capable, when the sample of rank n is taken into account, of partitioning into M groups all the transitions arriving at the various states of the current corresponding level of the lattice, each group containing all the transitions coming from those states of the preceding level which are associated with one of the M possible values of the symbol of rank n-k,
- calculation means (MCL) capable of calculating the various cumulated metrics for these various states of the current level of the lattice,
- determination means (MDT) capable of determining within each group the transition that leads to the state assigned the extreme-value cumulated metric,
- decision-taking means (MPD) capable of taking a single decision as to the value of the symbol of rank n-k by detecting the group associated with the extremum of these M extreme-value cumulated metrics, and
- first generation means (MEB1) capable of generating, starting from these M extreme-value cumulated metrics, a symbol-confidence index assigned to this single decision.

19. Device for the equalization of an information transmission channel, comprising a memory (MM) containing L coefficients representative of the pulse response of the transmission channel, receiving means capable of receiving successive digital samples corresponding to successively transmitted symbols each being able to take M different possible values, and an equalization unit (BEQ) comprising estimation means (MEST) capable of estimating the successive values of the symbols by progressing level by level within a lattice of the Viterbi type with $M^k$ states, with k less than or equal to L-1, all the states of all the levels being respectively assigned cumulated metrics, **characterized in that** the estimation means (MEST) comprise

- partitioning means (MPT) capable, when the sample of rank n is received, of partitioning into M groups all the transitions arriving at the various states of the current corresponding level of the lattice, each group containing all the transitions coming from those states of the preceding level which are associated with one of the M possible values of the symbol of rank n-k,
- calculation means (MCL) capable of calculating the various cumulated metrics for these various states of the

28

current level of the lattice,
- determination means (MDT) capable of determining within each group the transition that leads to the state assigned the extreme-value cumulated metric,
- decision-taking means (MPD) capable of taking a single decision as to the value of the symbol of rank n-k by detecting the group associated with the extremum of these M extreme-value cumulated metrics, and
- first generation means (MEB1) capable of generating, starting from these M extreme-value cumulated metrics, a symbol-confidence index assigned to this single decision.

20. Device according to either of Claims 18 and 19, **characterized in that** the cumulated metrics are information on cumulated errors between the observed values and the expected values of the samples, **in that** the determination means (MDT) are capable of determining within each group the transition that leads to the state assigned a minimum cumulated metric, **in that** the decision-taking means (MPD) are capable of taking a single decision as to the value of the symbol of rank n-k by detecting the group associated with the lowest of these M minimum cumulated metrics, and **in that** the first generation means (MEB1) are capable of generating the symbol-confidence index assigned to this single decision starting from these M minimum cumulated metrics.

21. Device according to Claim 20, **characterized in that** M is equal to 2, **in that** the decision-taking means (MPD) comprise a subtractor (STR) capable of calculating the difference between the two minimum cumulated metrics, the sign of this difference providing the said single decision as to the value of the symbol of rank n-k, and **in that** the first generation means (MEB1) comprise the said subtractor (STR), the absolute value of the difference calculated by the subtractor providing the value of the said symbol-confidence index.

22. Device according to Claim 20, **characterized in that** M is greater than 2, **in that** the decision-taking means (MPD) comprise first selection means (SEL1) capable of performing a first selection of the lowest of these M minimum cumulated metrics, and **in that** the first generation means (MEB1) comprise second selection means (SEL2) capable of performing a second selection, from amongst the M-1 minimum cumulated metrics not selected after the said first selection, of the lowest of these M-1 remaining minimum cumulated metrics, and a subtractor (STR) capable of calculating the difference between the two minimum cumulated metrics coming respectively from the first and from the second selections, the positive value of this difference providing the value of the said symbol-confidence index.

23. Device according to either of Claims 18 and 19, **characterized in that** the cumulated metrics are information on cumulated resemblances between the observed values and the expected values of the samples, **in that** the determination means (MDT) are capable of determining within each group the transition that leads to the state assigned a maximum cumulated metric, **in that** the decision-taking means (MPD) are capable of taking a single decision as to the value of the symbol of rank n-k by detecting the group associated with the highest of these M maximum cumulated metrics, and **in that** the first generation means (MEB1) are capable of generating the symbol-confidence index from these M maximum cumulated metrics.

24. Device according to Claim 23, **characterized in that** M is equal to 2, **in that** the decision-taking means (MPD) comprise a subtractor (STR) capable of calculating the difference between the two maximum cumulated metrics, the sign of this difference providing the said single decision as to the value of the symbol of rank n-k, and **in that** the first generation means (MEB1) comprise the said subtractor (STR), the absolute value of the difference calculated by the subtractor providing the value of the said symbol-confidence index.

25. Device according to Claim 23, **characterized in that** M is greater than 2, **in that** the decision-taking means (MPD) comprise first selection means (SEL1) capable of performing a first selection of the highest of these M maximum cumulated metrics, and **in that** the first generation means (MEB1) comprise second selection means (SEL2) capable of performing a second selection, from amongst the M-1 maximum cumulated metrics not selected after the said first selection, of the highest of these M-1 remaining maximum cumulated metrics, and a subtractor (STR) capable of calculating the difference between the two maximum cumulated metrics coming respectively from the first and from the second selections, the positive value of this difference providing the value of the said symbol-confidence index.

26. Device according to either of Claims 22 and 25, **characterized in that** each symbol is composed of b bits, with M equal to $2^b$, **in that** it comprises second generation means (MEB2) capable of generating a bit-confidence index for each of the bits of the symbol of rank n-k selected after the said single decision, using the said selected symbol and at least one auxiliary symbol generated from the said selected symbol by complementing at least the value of the bit in question.

27. Device according to Claim 26 taken in combination with Claim 22, **characterized in that** the second generation means comprise

- auxiliary generation means (MX, CMP) capable of generating a single auxiliary symbol by complementing only the value of the bit in question while leaving the values of the other bits of the selected symbol unchanged,
- auxiliary selection means (SELX1) capable of selecting the minimum cumulated metric associated with the group of transitions to which the said auxiliary symbol belongs, and
- an auxiliary subtractor (STRX) capable of performing the difference between the minimum cumulated metric associated with the group of transitions to which the said selected symbol belongs and the minimum cumulated metric associated with the group of transitions to which the said auxiliary symbol belongs, the result of this difference providing the value of the said bit-confidence index.

28. Device according to Claim 26 taken in combination with Claim 22, **characterized in that** the second generation means comprise

- auxiliary generation means (MEBX) capable of generating a set of auxiliary symbols by complementing the value of the bit in question and by assigning to the other bits of the selected symbol all the possible values,
- first auxiliary selection means (SELX1) capable of respectively selecting the minimum cumulated metrics associated with the groups of transitions to which the auxiliary symbols respectively belong,
- second auxiliary selection means (SELX2) capable of selecting the lowest of the minimum cumulated metrics respectively selected by the first auxiliary selection means, and
- an auxiliary subtractor (STRX) capable of performing the difference between the minimum cumulated metric associated with the group of transitions to which the said selected symbol belongs and the minimum cumulated metric selected by the second auxiliary selection means, the result of this difference providing the value of the said bit-confidence index.

29. Device according to Claim 26 taken in combination with Claim 25, **characterized in that** the second generation means comprise

- auxiliary generation means (MX, CMP) capable of generating a single auxiliary symbol by complementing only the value of the bit in question while leaving the values of the other bits of the selected symbol unchanged,
- auxiliary selection means (SELX1) capable of selecting the maximum cumulated metrics associated with the group of transitions to which the said auxiliary symbol belongs, and
- an auxiliary subtractor (STRX) capable of performing the difference between the maximum cumulated metric associated with the group of transitions to which the said selected symbol belongs and the maximum cumulated metric associated with the group of transitions to which the said auxiliary symbol belongs, the result of this difference providing the value of the said bit-confidence index.

30. Device according to Claim 26 taken in combination with Claim 25, **characterized in that** the second generation means comprise

- auxiliary generation means (MEBX) capable of generating a set of auxiliary symbols by complementing the value of the bit in question and by assigning to the other bits of the selected symbol all the possible values,
- first auxiliary selection means (SELX1) capable of respectively selecting the maximum cumulated metrics associated with the groups of transitions to which the auxiliary symbols respectively belong,
- second auxiliary selection means (SELX2) capable of selecting the highest of the maximum cumulated metrics respectively selected by the first auxiliary selection means, and
- an auxiliary subtractor (STRX) capable of performing the difference between the maximum cumulated metric associated with the group of transitions to which the said selected symbol belongs and the maximum cumulated metric selected by the second auxiliary selection means, the result of this difference providing the value of the said bit-confidence index.

31. Device according to one of Claims 18 to 30, **characterized in that** the lattice is a lattice reduced to $M^k$ states, with k less than L-1.

32. Device according to Claim 31, **characterized in that** the states of the current level of rank n of the lattice correspond to the assumptions as to the k symbols of rank n to n-k+1, **in that** the decision-taking means are capable of taking a single decision as to the symbol of rank n-k, **in that** the estimation means are capable of associating with all the states of the current level (ETG$_n$) of the lattice one and the same label (EST) containing the values of the symbols of rank n-k to n-L+2 respectively obtained when the L-k-1 successive single decisions delivered by the decision-taking means are taken, and **in that** the calculation means (MCL) are capable of calculating the cumulated metric of each state of the level of rank n of the lattice using

the transition metric associated with the transition terminating at the said state of the level of rank n and coming from the state of the level of rank n-1 corresponding to the value of the symbol of rank n-k contained within the said label, and

the cumulated metric associated with the state of the level of rank n-1 whence the said transition originated.

33. Device according to Claim 32, taken in combination with Claims 19 and 23, **characterized in that** the equalization unit (BEQ) comprises a filter (FA) at its head tuned to the pulse response of the channel.

34. Digital information receiver, in particular a cellular mobile telephone, **characterized in that** it incorporates a device such as is defined in one of Claims 18 to 33.

35. Computer programme product recorded on a media usable in a processor, comprising programme-code means implementing the method such as is defined in one of Claims 1 to 17 when the said product is executed within a processor.

**Patentansprüche**

1. Verfahren zur Schätzung der aufeinanderfolgenden Werte digitaler Symbole, die jeweils M unterschiedliche mögliche Werte annehmen können, ausgehend von aufeinanderfolgenden digitalen Abtastwerten (ri), von denen jeder aus der Kombination von höchstens L aufeinanderfolgenden Symbolen (s$_i$) resultiert, wobei das Verfahren ein stufenweises Fortschreiten in einem Gitter des Viterbi-Typs mit M$^k$ Zuständen aufweist, wobei k kleiner oder gleich L-1 ist, wobei alle Zustände aller Stufen jeweils mit kumulierten Metriken versehen sind,

**dadurch gekennzeichnet, daß**

bei der Berücksichtigung des Abtastwerts vom Rang n alle Übergänge, die zu unterschiedlichen Zuständen der aktuellen Stufe des Gitters hinführen, in M Gruppen (GRO-GR3) eingeteilt werden, wobei jede Gruppe alle Übergänge enthält, die von den Zuständen der vorausgehenden Stufe ausgehen, die mit einem der M möglichen Werte des Symbols vom Rang n-k verknüpft sind,

für diese unterschiedlichen Zustände der aktuellen Stufe (ETG$_n$) des Gitters die unterschiedlichen kumulierten Metriken berechnet werden,

in jeder Gruppe derjenige Übergang bestimmt wird, der zu dem Zustand führt, der mit einer extremalen kumulierten Metrik versehen ist, und

durch Detektieren der Gruppe, die mit dem Extremwert dieser M extremalen kumulierten Metriken verknüpft ist, eine einmalige Entscheidung über den Wert des Symbols vom Rang n-k getroffen wird, wobei diese einmalige Entscheidung mit einem Symbol-Vertrauensindex versehen wird, der aus diesen M extremalen kumulierten Metriken ausgearbeitet wird.

2. Verfahren zum Entzerren eines Datenübertragungskanals, wobei der Übertragungskanal eine Impulsantwort mit L Koeffizienten hat und aufeinanderfolgende digitale Abtastwerte (r$_i$) ausgibt, die aufeinanderfolgend ausgesandten Symbolen (si) entsprechen, die jeweils M unterschiedliche mögliche Werte annehmen können, wobei das Verfahren eine Verarbeitung zur Schätzung der aufeinanderfolgenden Werte der Symbole durch stufenweises Fortschreiten in einem Gitter des Viterbi-Typs mit M$^k$ Zuständen aufweist, wobei k kleiner oder gleich L-1 ist, wobei alle Zustände aller Stufen jeweils mit kumulierten Metriken versehen sind,

**dadurch gekennzeichnet, daß**

beim Empfang des Abtastwerts vom Rang n alle Übergänge, die zu unterschiedlichen Zuständen der aktuellen Stufe des Gitters hinführen, in M Gruppen eingeteilt werden, wobei jede Gruppe alle Übergänge enthält, die von den Zuständen der vorausgehenden Stufe ausgehen, die mit einem der M möglichen Werte des Symbols vom Rang n-k verknüpft sind,

für diese unterschiedlichen Zustände der aktuellen Stufe (ETG$_n$) des Gitters die unterschiedlichen kumulierten Metriken berechnet werden,

in jeder Gruppe derjenige Übergang bestimmt wird, der zu dem Zustand führt, der mit einer extremalen kumulierten Metrik versehen ist, und

durch Detektieren der Gruppe, die mit dem Extremwert dieser M extremalen kumulierten Metriken verknüpft ist, eine einmalige Entscheidung über den Wert des Symbols vom Rang n-k getroffen wird, wobei diese einmalige Entscheidung mit einem Symbol-Vertrauensindex versehen wird, der aus diesen M extremalen kumulierten Metriken ausgearbeitet wird.

3. Verfahren nach Anspruch 1 oder 2, **dadurch gekennzeichnet, daß**
die kumulierten Metriken kumulierte Fehlerdaten zwischen den beobachteten und den erwarteten Abtastwerten sind, und
**dadurch**, daß in jeder Gruppe derjenige Übergang bestimmt wird, der zu dem Zustand führt, der mit einer minimalen kumulierten Metrik versehen ist, und daß durch Detektieren (84) der Gruppe, die mit der schwächsten dieser M minimalen kumulierten Metriken verknüpft ist, eine einmalige Entscheidung über den Wert des Symbols vom Rang n-k ($s_{n-2}$) getroffen wird, wobei diese einmalige Entscheidung mit einem Symbol-Vertrauensindex versehen wird, der aus diesen M minimalen kumulierten Metriken ausgearbeitet wird.

4. Verfahren nach Anspruch 3, **dadurch gekennzeichnet, daß** M gleich 2 ist, **dadurch**, daß die Detektion der Gruppe, die mit der schwächsten der zwei minimalen kumulierten Metriken verknüpft ist, die Berechnung der Differenz zwischen den zwei minimalen kumulierten Metriken aufweist, wobei das Vorzeichen dieser Differenz die einmalige Entscheidung über den Wert des Symbols vom Rang n-k ($s_{n-2}$) liefert, der Absolutwert dieser Differenz den Wert des Symbol-Vertrauensindexes liefert.

5. Verfahren nach Anspruch 3, **dadurch gekennzeichnet, daß** M größer als 2 ist, **dadurch**, daß die Detektion der Gruppe, die mit der schwächsten der M minimalen kumulierten Metriken verknüpft ist, eine erste Auswahl (100) der schwächsten dieser M minimalen kumulierten Metriken aufweist, und **dadurch**, daß die Ausarbeitung des Symbol-Vertrauensindexes, mit dem die einmalige Entscheidung versehen wird, aufweist:

   eine zweite Auswahl (102) aus den M-1 am Ende der ersten Auswahl nichtgewählt übriggebliebenen minimalen kumulierten Metriken der schwächsten dieser M-1 übriggebliebenen minimalen kumulierten Metriken und die Berechnung der Differenz (103) zwischen den zwei aus der ersten bzw. zweiten Auswahl resultierenden minimalen kumulierten Metriken, wobei der positive Wert dieser Differenz den Wert des Symbol-Vertrauensindexes liefert.

6. Verfahren nach Anspruch 1 oder 2, **dadurch gekennzeichnet, daß** die kumulierten Metriken kumulierte Daten der Ähnlichkeit zwischen den beobachteten und den erwarteten Abtastwerten sind, und **dadurch**, daß in jeder Gruppe derjenige Übergang bestimmt wird, der zu dem Zustand führt, der mit einer maximalen kumulierten Metrik versehen ist, und daß durch Detektion (85) der Gruppe, die mit der größten dieser M maximalen kumulierten Metriken verknüpft ist, eine einmalige Entscheidung über den Wert des Symbols vom Rang n-k getroffen wird, wobei diese einmalige Entscheidung mit einem Symbol-Vertrauensindex versehen wird, der aus diesen M maximalen kumulierten Metriken ausgearbeitet wird.

7. Verfahren nach Anspruch 6, **dadurch gekennzeichnet, daß** M gleich 2 ist, **dadurch**, daß die Detektion der Gruppe, die mit der größten der zwei maximalen kumulierten Metriken verknüpft ist, die Berechnung der Differenz zwischen den zwei maximalen kumulierten Metriken aufweist, wobei das Vorzeichen dieser Differenz die einmalige Entscheidung über den Wert des Symbols vom Rang n-k liefert, der Absolutwert dieser Differenz den Wert des Symbol-Vertrauensindexes liefert.

8. Verfahren nach Anspruch 6, **dadurch gekennzeichnet, daß** M größer als 2 ist, **dadurch**, daß die Detektion der Gruppe, die mit der größten dieser M maximalen kumulierten Metriken verknüpft ist, eine erste Auswahl (110) der größten der M maximalen kumulierten Metriken aufweist, und **dadurch**, daß die Ausarbeitung des Symbol-Vertrauensindexes, mit dem die einmalige Entscheidung versehen wird, aufweist:

   eine zweite Auswahl (112) aus den M-1 am Ende der ersten Auswahl nichtgewählt übriggebliebenen maximalen kumulierten Metriken der größten dieser M-1 übriggebliebenen maximalen kumulierten Metriken und die Berechnung der Differenz (113) zwischen den zwei aus der ersten bzw. zweiten Auswahl resultierenden maximalen kumulierten Metriken, wobei der positive Wert dieser Differenz den Wert des Symbol-Vertrauensindexes liefert.

9. Verfahren nach Anspruch 5 oder 8, **dadurch gekennzeichnet, daß** jedes Symbol aus b Bits besteht, wobei M gleich $2^b$ ist, **dadurch**, daß ein Bit-Vertrauensindex für jedes Bit des am Ende der einmaligen Entscheidung gewählten Symbols vom Rang n-k ausgearbeitet wird, wobei das gewählte Symbol (SEU) und mindestens ein Hilfssymbol (SAX) verwendet wird, das aus dem gewählten Symbol durch Bildung des Komplements mindestens des Werts des betrachteten Bits ausgearbeitet wird.

**10.** Verfahren nach Anspruch 9 in Kombination mit Anspruch 5, **dadurch gekennzeichnet, daß** die Ausarbeitung des Bit-Vertrauensindexes für ein betrachtetes Bit des gewählten Symbols aufweist:

- einen ersten Schritt, in welchem ein einziges Hilfssymbol (SAX) ausgearbeitet wird, indem lediglich das Komplement des Werts des betrachteten Bit gebildet wird und die Werte der anderen Bits des gewählten Symbols unverändert bleiben,
- einen zweiten Schritt, in welchem die minimale kumulierte Metrik ausgewählt wird, die mit der Gruppe von Übergängen verknüpft ist, zu welcher das Hilfssymbol (SAX) gehört, und
- einen dritten Schritt, in welchem die Differenz zwischen der minimalen kumulierten Metrik, die mit der Gruppe von Übergängen verknüpft ist, zu welcher das gewählte Symbol (SEU) gehört, und der minimalen kumulierten Metrik, die mit der Gruppe von Übergängen verknüpft ist, zu welcher das Hilfssymbol (SAX) gehört, gebildet wird, wobei das Ergebnis dieser Differenz den Wert des Bit-Vertrauensindexes liefert.

**11.** Verfahren nach Anspruch 9 in Kombination mit Anspruch 5, **dadurch gekennzeichnet, daß** die Ausarbeitung des Bit-Vertrauensindexes für ein betrachtetes Bit des gewählten Symbols aufweist:

- einen ersten Schritt, in welchem mehrere Hilfssymbole ($SAX_j$) ausgearbeitet werden, indem das Komplement des Werts des betrachteten Bit gebildet wird und den anderen Bits des gewählten Symbols alle möglichen Werte verliehen werden,
- einen zweiten Schritt, in welchem jeweils die minimalen kumulierten Metriken, die mit den Gruppen von Übergängen verknüpft sind, zu welchen jeweils die Hilfssymbole ($SAX_j$) gehören, ausgewählt werden,
- einen dritten Schritt, in welchem die schwächste der im zweiten Schritt jeweils ausgewählten minimalen kumulierten Metriken ausgewählt wird, und
- einen vierten Schritt, in welchem die Differenz zwischen der minimalen kumulierten Metrik, die mit der Gruppe von Übergängen verknüpft ist, zu welcher das gewählte Symbol gehört, und der im dritten Schritt ausgewählten minimalen kumulierten Metrik gebildet wird, wobei das Ergebnis dieser Differenz den Wert des Bit-Vertrauensindexes liefert.

**12.** Verfahren nach Anspruch 9 in Kombination mit Anspruch 8, **dadurch gekennzeichnet, daß** die Ausarbeitung des Bit-Vertrauensindexes für ein betrachtetes Bit des gewählten Symbols aufweist:

- einen ersten Schritt, in welchem ein einziges Hilfssymbol (SAX) ausgearbeitet wird, indem lediglich das Komplement des Werts des betrachteten Bits gebildet wird und die Werte der anderen Bits des gewählten Symbols (SEU) unverändert bleiben,
- einen zweiten Schritt, in welchem die maximale kumulierte Metrik ausgewählt wird, die mit der Gruppe von Übergängen verknüpft ist, zu welcher das Hilfssymbol (SAX) gehört, und
- einen dritten Schritt, in welchem die Differenz zwischen der maximalen kumulierten Metrik, die mit der Gruppe von Übergängen verknüpft ist, zu welcher das gewählte Symbol (SEU) gehört, und der maximalen kumulierten Metrik, die mit der Gruppe von Übergängen verknüpft ist, zu welcher das Hilfssymbol (SAX) gehört, gebildet wird, wobei das Ergebnis dieser Differenz den Wert des Bit-Vertrauensindexes liefert.

**13.** Verfahren nach Anspruch 9 in Kombination mit Anspruch 8, **dadurch gekennzeichnet, daß** die Ausarbeitung des Bit-Vertrauensindexes für ein betrachtetes Bit des gewählten Symbols aufweist:

- einen ersten Schritt, in welchem mehrere Hilfssymbole ($SAX_j$) ausgearbeitet werden, indem das Komplement des Werts des betrachteten Bit gebildet wird und den anderen Bits des gewählten Symbols alle möglichen Werte verliehen werden,
- einen zweiten Schritt, in welchem jeweils die maximalen kumulierten Metriken, die mit den Gruppen von Übergängen verknüpft sind, zu welchen jeweils die Hilfssymbole ($SAX_j$) gehören, ausgewählt werden,
- einen dritten Schritt, in welchem die größte der im zweiten Schritt jeweils ausgewählten maximalen kumulierten Metriken ausgewählt wird, und
- einen vierten Schritt, in welchem die Differenz zwischen der maximalen kumulierten Metrik, die mit der Gruppe von Übergängen verknüpft ist, zu welcher das gewählte Symbol (SEU) gehört, und der im dritten Schritt ausgewählten maximalen kumulierten Metrik gebildet wird, wobei das Ergebnis dieser Differenz den Wert des Bit-Vertrauensindexes liefert.

**14.** Verfahren nach einem der vorstehenden Ansprüche, **dadurch gekennzeichnet, daß** das Gitter ein reduziertes Gitter mit $M^k$ Zuständen ist, wobei k kleiner als L-1 ist.

**15.** Verfahren nach Anspruch 14, **dadurch gekennzeichnet, daß** die Zustände der aktuellen Stufe vom Rang n des Gitters den Hypothesen über die k Symbole vom Rang n bis n-k+1 entsprechen, **dadurch, daß,** nachdem die einmalige Entscheidung über das Symbol vom Rang n-k getroffen worden ist, alle Zustände der aktuellen Stufe ($ETG_n$) des Gitters mit ein und demselben Etikett (EST) verknüpft werden, das die bei den L-k-1 aufeinanderfolgenden einmaligen Entscheidungen jeweils gewonnenen Werte der Symbole vom Rang n-k bis n-L+2 enthält, und **dadurch,** daß die kumulierte Metrik jedes Zustands der Stufe vom Rang n des Gitters aus

der Übergangsmetrik, die mit dem Übergang verknüpft ist, der an dem betreffenden Zustand der Stufe vom Rang n endet und von dem Zustand der Stufe vom Rang n-1 ausgeht, der dem in dem Etikett enthaltenen Wert des Symbols vom Rang n-k entspricht, und

der kumulierten Metrik, die mit dem Zustand der Stufe vom Rang n-1 verknüpft ist, von wo der Übergang ausgeht, berechnet wird.

**16.** Verfahren nach Anspruch 15 in Kombination mit den Ansprüchen 2 und 6, **dadurch gekennzeichnet, daß** die empfangenen Abtastwerte von einem an die Impulsantwort des Kanals angepaßten Filter (FA) gefiltert werden, und **dadurch,** daß die Schätzungsverarbeitung an den gefilterten Abtastwerten durchgeführt wird.

**17.** Verfahren nach einem der vorstehenden Ansprüche, **dadurch gekennzeichnet, daß** das Fortschreiten in dem Gitter bedingt ist durch die aufeinanderfolgenden einmaligen Entscheidungen über die Werte der Symbole.

**18.** Vorrichtung zur Schätzung von aufeinanderfolgenden Werten digitaler Symbole, die jeweils M unterschiedliche mögliche Werte annehmen können, wobei die Vorrichtung Empfangseinrichtungen aufweist, die in der Lage sind, aufeinanderfolgende digitale Abtastwerte zu empfangen, die jeweils aus der Kombination von höchstens L aufeinanderfolgenden Symbolen ($s_i$) resultieren, und Schätzeinrichtungen (MEST) aufweist, die in der Lage sind, durch stufenweises Fortschreiten in einem Gitter des Viterbi-Typs mit $M^k$ Zuständen, wobei k kleiner oder gleich L-1 ist, die aufeinanderfolgenden Werte der Symbole zu schätzen, wobei alle Zustände aller Stufen jeweils mit kumulierten Metriken versehen sind, **dadurch gekennzeichnet, daß** die Schätzeinrichtungen (MEST) aufweisen:

- Partitionierungseinrichtungen (MPT), die in der Lage sind, bei der Berücksichtigung des Abtastwerts vom Rang n alle Übergänge, die zu verschiedenen Zuständen der entsprechenden aktuellen Stufe des Gitters hin führen, in M Gruppen einzuteilen, wobei jede Gruppe alle Übergänge enthält, die von den Zuständen der vorausgehenden Stufe ausgehen, die mit einem von M möglichen Werten des Symbols vom Rang n-k verknüpft sind,

- Berechnungseinrichtungen (MCL), die in der Lage sind, für diese unterschiedlichen Zustände der aktuellen Stufe des Gitters die unterschiedlichen kumulierten Metriken zu berechnen,

- Bestimmungseinrichtungen (MDT), die in der Lage sind, in jeder Gruppe denjenigen Übergang zu bestimmen, der zu dem Zustand führt, der mit der extremalen kumulierten Matrix versehen ist,

- Entscheidungseinrichtungen (MPD), die in der Lage sind, durch Detektieren der Gruppe, die mit dem Extremwert dieser M extremalen kumulierten Metriken verknüpft ist, eine einmalige Entscheidung über den Wert des Symbols vom Rang n-k zu treffen und

- erste Ausarbeitungseinrichtungen (MEB1), die in der Lage sind, aus diesen M extremalen kumulierten Metriken einen Symbol-Vertrauensindex auszuarbeiten, mit dem diese einmalige Entscheidung versehen wird.

**19.** Vorrichtung zum Entzerren eines Datenübertragungskanals, mit:

einem Speicher (MM), der L repräsentative Koeffizienten der Impulsantwort des Übertragungskanals enthält, Empfangseinrichtungen, die in der Lage sind, aufeinanderfolgende digitale Abtastwerte zu empfangen, die den aufeinanderfolgend ausgesandten Symbolen entsprechen, die jeweils M unterschiedliche mögliche Werte annehmen können, und

einem Entzerrungsblock (BEQ), der Schätzeinrichtungen (MEST) aufweist, die in der Lage sind, durch stufenweises Fortschreiten in einem Gitter des Viterbi-Typs mit $M^k$ Zuständen, wobei k kleiner oder gleich L-1 ist, die aufeinanderfolgenden Werte der Symbole zu schätzen, wobei alle Zustände aller Stufen jeweils mit kumulierten Metriken versehen sind,

**dadurch gekennzeichnet, daß** die Schätzeinrichtungen (MEST) aufweisen:

- Partitionierungseinrichtungen (MPT), die in der Lage sind, beim Empfang des Abtastwerts vom Rang n alle Übergänge, die zu verschiedenen Zuständen der entsprechenden aktuellen Stufe des Gitters hin führen, in M Gruppen einzuteilen, wobei jede Gruppe alle Übergänge enthält, die von Zuständen der vorausgehenden Stufe ausgehen, die mit einem von M möglichen Werten des Symbols vom Rang n-k verknüpft sind,

- Berechnungseinrichtungen (MCL), die in der Lage sind, für diese unterschiedlichen Zustände der aktuellen Stufe des Gitters die unterschiedlichen kumulierten Metriken zu berechnen,

- Bestimmungseinrichtungen (MDT), die in der Lage sind, in jeder Gruppe denjenigen Übergang zu bestimmen, der zu dem Zustand führt, der mit einer extremalen kumulierten Matrix versehen ist,

- Entscheidungseinrichtungen (MPD), die in der Lage sind, durch Detektieren der Gruppe, die mit dem Extremwert dieser M extremalen kumulierten Metriken verknüpft ist, eine einmalige Entscheidung über den Wert des Symbols vom Rang n-k zu treffen, und

- erste Ausarbeitungseinrichtungen (MEB1), die in der Lage sind, aus diesen M extremalen kumulierten Metriken einen Symbol-Vertrauensindex auszuarbeiten, mit dem diese einmalige Entscheidung versehen wird.

20. Vorrichtung nach Anspruch 18 oder 19, **dadurch gekennzeichnet, daß** die kumulierten Metriken kumulierte Fehlerdaten zwischen den beobachteten und den erwarteten Abtastwerten sind, **dadurch**, daß die Bestimmungseinrichtungen (MDT) in der Lage sind, in jeder Gruppe denjenigen Übergang zu bestimmen, der zu dem Zustand führt, der mit einer minimalen kumulierten Metrik versehen ist, **dadurch**, daß die Entscheidungseinrichtungen (MPD) in der Lage sind, durch Detektieren der Gruppe, die mit der schwächsten dieser M minimalen kumulierten Metriken verknüpft ist, eine einmalige Entscheidung über den Wert des Symbols vom Rang n-k zu treffen, und **dadurch**, daß die ersten Ausarbeitungseinrichtungen (MEB1) in der Lage sind, aus diesen M minimalen kumulierten Metriken den Symbol-Vertrauensindex auszuarbeiten.

21. Vorrichtung nach Anspruch 20, **dadurch gekennzeichnet, daß** M gleich 2 ist, **dadurch**, daß die Entscheidungseinrichtungen (MPD) einen Subtrahierer (STR) aufweisen, der in der Lage ist, die Differenz zwischen den zwei minimalen kumulierten Metriken zu berechnen, wobei das Vorzeichen dieser Differenz die einmalige Entscheidung über den Wert des Symbols vom Rang n-k liefert, und **dadurch**, daß die ersten Ausarbeitungseinrichtungen (MEB1) den Subtrahierer (STR) aufweisen, wobei der Absolutwert der von dem Subtrahierer berechneten Differenz den Wert des Symbol-Vertrauensindexes liefert.

22. Vorrichtung nach Anspruch 20, **dadurch gekennzeichnet, daß** M größer als 2 ist, **dadurch**, daß die Entscheidungseinrichtungen (MPD) erste Auswahleinrichtungen (SEL1) aufweisen, die in der Lage sind, eine erste Auswahl der schwächsten dieser M minimalen kumulierten Metriken durchzuführen, und **dadurch**, daß die ersten Ausarbeitungseinrichtungen (MEB1) zweite Auswahleinrichtungen (SEL2) aufweisen, die in der Lage sind, eine zweite Auswahl aus den M-1 am Ende der ersten Auswahl nicht gewählten minimalen kumulierten Metriken der schwächsten dieser M-1 übriggebliebenen minimalen kumulierten Metriken durchzuführen, und einen Subtrahierer (STR) aufweisen, der in der Lage ist, die Differenz zwischen den zwei aus der ersten bzw. der zweiten Auswahl resultierenden minimalen kumulierten Metriken zu berechnen, wobei der positive Wert dieser Differenz den Wert des Symbol-Vertrauensindexes liefert.

23. Vorrichtung nach Anspruch 18 oder 19, **dadurch gekennzeichnet, daß** die kumulierten Metriken kumulierte Daten der Ähnlichkeit zwischen den beobachteten und den erwarteten Abtastwerten sind, **dadurch**, daß die Bestimmungseinrichtungen (MDT) in der Lage sind, in jeder Gruppe denjenigen Übergang zu bestimmen, der zu dem Zustand führt, der mit einer maximalen kumulierten Metrik versehen ist, **dadurch**, daß die Entscheidungseinrichtungen (MPD) in der Lage sind, durch Detektieren der Gruppe, die mit der größten dieser M maximalen kumulierten Metriken verknüpft ist, eine einmalige Entscheidung über den Wert des Symbols vom Rang n-k zu treffen, und **dadurch**, daß die ersten Ausarbeitungseinrichtungen (MEB1) in der Lage sind, aus diesen M maximalen kumulierten Metriken den Symbol-Vertrauensindex auszuarbeiten.

24. Vorrichtung nach Anspruch 23, **dadurch gekennzeichnet, daß** M gleich 2 ist, **dadurch**, daß die Entscheidungseinrichtungen (MPD) einen Subtrahierer (STR) aufweisen, der in der Lage ist, die Differenz zwischen den zwei maximalen kumulierte Metriken zu berechnen, wobei das Vorzeichen dieser Differenz die einmalige Entscheidung über den Wert des Symbols vom Rang n-k liefert, und **dadurch**, daß die ersten Ausarbeitungseinrichtungen (MEB1) den Subtrahierer (STR) aufweisen, wobei der Absolutwert der von dem Subtrahierer berechneten Differenz den Wert des Symbol-Vertrauensindexes liefert.

25. Vorrichtung nach Anspruch 23, **dadurch gekennzeichnet, daß** M größer als 2 ist, **dadurch**, daß die Entscheidungseinrichtungen (MPD) erste Auswahleinrichtungen (SEL1) aufweisen, die in der Lage sind, eine erste Auswahl der größten dieser M maximalen kumulierten Metriken durchzuführen, und **dadurch**, daß die ersten Ausarbeitungseinrichtungen (MEB1) zweite Auswahleinrichtungen (SEL2) aufweisen, die in der Lage sind, eine zweite Auswahl aus den M-1 am Ende der ersten Auswahl nicht gewählten maximalen kumulierten Metriken der größten dieser M-1 übriggebliebenen maximalen kumulierten Metriken durchzuführen, und einen Subtrahierer (STR) aufweisen, der in der Lage ist, die Differenz zwischen den zwei aus der ersten bzw. zweiten Auswahl resultierenden maximalen kumulierten Metriken zu berechnen, wobei der positive Wert dieser Differenz den Wert des Symbol-Vertrauensindexes liefert.

**26.** Vorrichtung nach Anspruch 22 oder 25, **dadurch gekennzeichnet, daß** jedes Symbol aus b Bits besteht, mit M gleich $2^b$, **dadurch**, daß sie zweite Ausarbeitungseinrichtungen (MEB2) aufweist, die in der Lage sind, einen Bit-Vertrauensindex für jedes Bit des am Ende der einmaligen Entscheidung gewählten Symbols vom Rang n- k auszuarbeiten, wobei das gewählte Symbol und mindestens ein Hilfssymbol verwendet wird, das aus dem gewählten Symbol durch Bildung des Komplements mindestens des Werts des betrachteten Bits ausgearbeitet wird.

**27.** Vorrichtung nach Anspruch 26 in Kombination mit Anspruch 22, **dadurch gekennzeichnet, daß** die zweiten Ausarbeitungseinrichtungen aufweisen:

- Hilfsausarbeitungseinrichtungen (MX,CMP), die in der Lage sind, ein einziges Hilfssymbol auszuarbeiten, indem lediglich das Komplement des Werts des betrachtetes Bits gebildet wird und die Werte der anderen Bits des gewählten Symbols unverändert bleiben,
- Hilfsauswahleinrichtungen (SELX1), die in der Lage sind, die minimale kumulierte Metrik auszuwählen, die mit der Gruppe von Übergängen verknüpft ist, zu welcher das Hilfssymbol gehört, und
- einen Hilfssubtrahierer (STRX), der in der Lage ist, die Differenz zwischen der minimalen kumulierten Metrik, die mit der Gruppe von Übergängen verknüpft ist, zu welcher das gewählte Symbol gehört, und der minimalen kumulierten Metrik, die mit der Gruppe von Übergängen verknüpft ist, zu welcher das Hilfssymbol gehört, zu bilden, wobei das Ergebnis dieser Differenz den Wert des Bit-Vertrauensindexes liefert.

**28.** Vorrichtung nach Anspruch 26 in Kombination mit Anspruch 22, **dadurch gekennzeichnet, daß** die zweiten Ausarbeitungseinrichtungen aufweisen:

- Hilfsausarbeitungseinrichtungen (MEBX), die in der Lage sind, mehrere Hilfssymbole auszuarbeiten, indem das Komplement des Werts des betrachteten Bits gebildet wird und den anderen Bits des gewählten Symbols alle möglichen Werte verliehen werden,
- erste Hilfsauswahleinrichtungen (SELX1), die in der Lage sind, jeweils die minimalen kumulierten Metriken auszuwählen, die mit den Gruppen von Übergängen verknüpft sind, zu welchen jeweils die Hilfssymbole gehören,
- zweite Hilfsauswahleinrichtungen (SELX2), die in der Lage sind, die schwächste der von den ersten Hilfsauswahleinrichtungen jeweils ausgewählten minimalen kumulierten Metriken auszuwählen, und
- einen Hilfssubtrahierer (STRX), der in der Lage ist, die Differenz zwischen der minimalen kumulierten Metrik, die mit der Gruppe von Übergängen verknüpft ist, zu welcher das gewählte Symbol gehört, und der von den zweiten Hilfsauswahleinrichtungen ausgewählten minimalen kumulierten Metrik zu bilden, wobei das Ergebnis dieser Differenz den Wert des Bit-Vertrauensindexes liefert.

**29.** Vorrichtung nach Anspruch 26 in Kombination mit Anspruch 25, **dadurch gekennzeichnet, daß** die zweiten Ausarbeitungseinrichtungen aufweisen:

- Hilfsausarbeitungseinrichtungen (MX,CMP), die in der Lage sind, ein einziges Hilfssymbol auszuarbeiten, indem lediglich das Komplement des Werts des betrachtetes Bits gebildet wird und die Werte der anderen Bits des gewählten Symbols unverändert bleiben,
- Hilfsauswahleinrichtungen (SELX1), die in der Lage sind, die maximale kumulierte Metrik auszuwählen, die mit der Gruppe von Übergängen verknüpft ist, zu welcher das Hilfssymbol gehört, und
- einen Hilfssubtrahierer (STRX), der in der Lage ist, die Differenz zwischen der maximalen kumulierten Metrik, die mit der Gruppe von Übergängen verknüpft ist, zu welcher das gewählte Symbol gehört, und der maximalen kumulierten Metrik, die mit der Gruppe von Übergängen verknüpft ist, zu welcher das Hilfssymbol gehört, zu bilden, wobei das Ergebnis dieser Differenz den Wert des Bit-Vertrauensindexes liefert.

**30.** Vorrichtung nach Anspruch 26 in Kombination mit Anspruch 25, **dadurch gekennzeichnet, daß** die zweiten Ausarbeitungseinrichtungen aufweisen:

- Hilfsausarbeitungseinrichtungen (MEBX), die in der Lage sind, mehrere Hilfssymbole **dadurch** auszuarbeiten, indem das Komplement des Werts des betrachteten Bit gebildet wird und den anderen Bits des gewählten Symbols alle möglichen Werte verliehen werden,

- erste Hilfsauswahleinrichtungen (SELX1), die in der Lage sind, jeweils die maximalen kumulierten Metriken auszuwählen, die mit den Gruppen von Übergängen verknüpft sind, zu welchen jeweils die Hilfssymbole gehören,

- zweite Hilfsauswahleinrichtungen (SELX2), die in der Lage sind, die größte der von den ersten Hilfsauswahleinrichtungen jeweils ausgewählten maximalen kumulierten Metriken auszuwählen, und

- einen Hilfssubtrahierer (STRX), der in der Lage ist, die Differenz zwischen der maximalen kumulierten Metrik, die mit der Gruppe von Übergängen verknüpft ist, zu welcher das gewählte Symbol gehört, und der von den zweiten Hilfsauswahleinrichtungen ausgewählten maximalen kumulierten Metrik zu bilden, wobei das Ergebnis dieser Differenz den Wert des Bit-Vertrauensindexes liefert.

31. Vorrichtung nach einem der Ansprüche 18 bis 30, **dadurch gekennzeichnet, daß** das Gitter ein reduziertes Gitter mit $M^k$ Zuständen ist, mit k kleiner als L-1.

32. Vorrichtung nach Anspruch 31, **dadurch gekennzeichnet, daß** die Zustände der aktuellen Stufe vom Rang n des Gitters Hypothesen über die k Symbole vom Rang n bis n-k+1 entsprechen, **dadurch**, daß die Entscheidungseinrichtungen in der Lage sind, eine einmalige Entscheidung über das Symbol vom Rang n-k zu treffen, **dadurch**, daß die Schätzeinrichtungen in der Lage sind, alle Zustände der aktuellen Stufe ($ETG_n$) des Gitters mit ein und demselben Etikett (EST) zu verknüpfen, das die Werte der Symbole vom Rang n-k bis n-L+2 enthält, die jeweils im Verlaufe der L-k-1 aufeinanderfolgenden, von den Entscheidungseinrichtungen bereitgestellten einmaligen Entscheidungen gewonnen worden sind, und **dadurch**, daß die Berechnungseinrichtungen (MCL) in der Lage sind, die kumulierte Metrik jedes Zustands der Stufe vom Rang n des Gitters aus

- der Übergangsmetrik, die mit dem Übergang verknüpft ist, der an dem betreffenden Zustand der Stufe vom Rang n endet und von dem Zustand der Stufe vom Rang n-1 ausgeht, der dem in dem Etikett enthaltenen Wert des Symbols vom Rang n-k entspricht, und

der kumulierten Metrik, die mit dem Zustand der Stufe vom Rang n-1 verknüpft ist, von wo der Übergang ausgeht, zu berechnen.

33. Vorrichtung nach Anspruch 32 in Kombination mit den Ansprüchen 19 und 23, **dadurch gekennzeichnet, daß** der Entzerrungsblock (BEQ) am Kopf ein an die Impulsantwort des Kanals angepaßtes Filter (FA) aufweist.

34. Empfänger digitaler Daten, insbesondere zellulares Mobiltelefon, **dadurch gekennzeichnet, daß** er/es eine Vorrichtung aufweist, wie sie in einem der Ansprüche 18 bis 33 definiert ist.

35. Auf einem in einem Prozessor verwendbaren Träger gespeichertes Computerprogrammprodukt mit Programmcodemitteln, die das Verfahren, wie es in einem der Ansprüche 1 bis 17 definiert ist, ausführen, wenn das Produkt in einem Prozessor abläuft.

## FIG.1

EP 1 213 884 B1

# FIG.2

EP 1 213 884 B1

FIG.3

BEQ

MEST

MCL

MPD

De CAN

MPT

MDT

MEB1

MM

BST

EP 1 213 884 B1

# FIG.4

EP 1 213 884 B1

## FIG.5

# FIG.6

EP 1 213 884 B1

# FIG.7

EP 1 213 884 B1

# FIG.8

```
┌─────────────────────────────┐
│   RECEPTION ECHANTILLON      │───80
│            n                 │
└─────────────────────────────┘
              │
              ▼
┌─────────────────────────────┐
│   PARTITION TRANSITIONS EN   │───81
│            M                 │
│         GROUPES              │
└─────────────────────────────┘
              │
      ┌───────┴───────┐
      ▼               ▼
   ╭────────╮      ╭────────╮
   │METRIQUE│      │METRIQUE│
   │   =    │      │   =    │
   │INFORMA-│      │INFORMA-│
   │ TION   │      │TION DE │
   │D'ERREUR│      │RESSEM- │
   │        │      │BLANCE  │
   ╰────────╯      ╰────────╯
```

|  |  |
|---|---|
| DETECTION M METRIQUES CUMULEES MINIMALES (82) | DETECTION M METRIQUES CUMULEES MAXIMALES (83) |
| DETECTION METRIQUE CUMULEE MAXIMALE LA PLUS FAIBLE (84) | DETECTION METRIQUE CUMULEE MAXIMALE LA PLUS GRANDE (85) |

```
┌─────────────────────────────┐
│          DECISION            │
│  VALEUR DU SYMBOLE n-L+1     │───86
│            +                 │
│        INDICE DE             │
│    CONFIANCE-SYMBOLE         │
└─────────────────────────────┘
```

# FIG.9

SIGNE
=
VALEUR DU SYMBOLE
n-L+1

|M0-M1|
=
INDICE DE
CONFIANCE-SYMBOLE

# FIG.10

# FIG.11

MAX (M0, M1,M2, M3) ~110

M2

DECISION
VALEUR DU SYMBOLE
n-L+1 ~111

MAX (M0, M1, M3) ~112

M0

+
−
~113

M2-M0
=
INDICE DE
CONFIANCE-SYMBOLE ~114

EP 1 213 884 B1

# FIG.12

SYMBOLE ELU
SEU

BIT CONSIDERE
DU SYMBOLE
ELU — 120

BIT CONSIDERE
COMPLEMENTE — 121

UNIQUE
SYMBOLE AUXILIAIRE
SAX — 121

METRIQUE
CUMULEE
MINIMALE

METRIQUE
CUMULEE MINIMALE — 122

- + — 124

INDICE DE
CONFIANCE-BIT

49

## FIG.13

SYMBOLE ELU
SEU

BIT CONSIDERE
DU SYMBOLE
ELU ⟍130

BIT CONSIDERE
COMPLEMENTE ⟍131

ENSEMBLE DE VALEURS
POSSIBLES
POUR LES AUTRES BITS ⟍132

ENSEMBLE DE
SYMBOLES AUXILIAIRES
SAXj

ENSEMBLE DE
METRIQUES
CUMULEES MINIMALES ⟍133

METRIQUE
CUMULEE
MINIMALE

METRIQUE
CUMULEE MINIMALE
LA PLUS FAIBLE ⟍134

− ( + ) + ⟍135

INDICE DE
CONFIANCE-BIT

# FIG.14

```
        ┌─────────────────┐
        │  SYMBOLE ELU    │
        │     SEU         │
        └─────────────────┘
                 │
                 ▼
        ┌─────────────────┐
        │ BIT CONSIDERE   │─── 140
        │  DU SYMBOLE     │
        │     ELU         │
        └─────────────────┘
                 │
                 ▼
        ┌─────────────────┐
        │ BIT CONSIDERE   │─── 141
        │  COMPLEMENTE    │
        └─────────────────┘
                 │
                 ▼
        ┌─────────────────┐
        │    UNIQUE       │
        │ SYMBOLE AUXILIAIRE │
        │      SAX        │
        └─────────────────┘
                 │
                 ▼
  ┌───────────┐  ┌─────────────────┐
  │ METRIQUE  │  │   METRIQUE      │─── 142
  │ CUMULEE   │  │ CUMULEE MAXIMALE│
  │ MAXIMALE  │  └─────────────────┘
  └───────────┘
        │            │
        │  +   ⊕   - │
        └─────── 144 ──┘
                 │
                 ▼
        ┌─────────────────┐
        │   INDICE DE     │
        │ CONFIANCE-BIT   │
        └─────────────────┘
```

## FIG.15

SYMBOLE ELU
SEU

BIT CONSIDERE
DU SYMBOLE
ELU —150

BIT CONSIDERE
COMPLEMENTE —151

-ENSEMBLE DE VALEURS
POSSIBLES
POUR LES AUTRES BITS —152

ENSEMBLE DE
SYMBOLES AUXILIAIRES
SAXj

ENSEMBLE DE
METRIQUES
CUMULEES MAXIMALES —153

METRIQUE
CUMULEE
MAXIMALE

METRIQUE
CUMULEE MAXIMALE
LA PLUS GRANDE —154

+ ⊕ -

—155

INDICE DE
CONFIANCE-BIT

# FIG.16

$s_{n-2}$    $s_{n-1}$

$nd_0$

0 0    0 0 •

0 0    0 1 •

0 0    1 0 •

0 0    1 1 •

0 1    0 0 •

0 1    0 1 •

0 1    1 0 •

0 1    1 1 •

1 0    0 0 •    } ETA

1 0    0 1 •

1 0    1 0 •

1 0    1 1 •

1 1    0 0 •

1 1    0 1 •

1 1    1 0 •

1 1    1 1 •    $nd_{15}$

ETG$_{n-1}$

$s_{n-1}$    $s_n$

$nd_0$

• 0 0    0 0

• 0 0    0 1

• 0 0    1 0

• 0 0    1 1

• 0 1    0 0

• 0 1    0 1

• 0 1    1 0

• 0 1    1 1

ETA {    • 1 0    0 0

• 1 0    0 1

• 1 0    1 0

• 1 0    1 1

• 1 1    0 0

• 1 1    0 1

• 1 1    1 0

• 1 1    1 1

$nd_{15}$

ETG$_n$

# FIG.17

FIG.18

# FIG.19

$s_{n-2}$  $s_{n-1}$                                                    $s_{n-1}$   $s_n$

GR1

| 0 0 | 0 0 | | | 0 0 | 0 0 |
| 0 0 | 0 1 | | | 0 0 | 0 1 |
| 0 0 | 1 0 | | | 0 0 | 1 0 |
| 0 0 | 1 1 | | | 0 0 | 1 1 |
| 0 1 | 0 0 | | | 0 1 | 0 0 |
| 0 1 | 0 1 | | | 0 1 | 0 1 |
| 0 1 | 1 0 | | | 0 1 | 1 0 |
| 0 1 | 1 1 | | | 0 1 | 1 1 |
| 1 0 | 0 0 | | | 1 0 | 0 0 |
| 1 0 | 0 1 | | | 1 0 | 0 1 |
| 1 0 | 1 0 | | | 1 0 | 1 0 |
| 1 0 | 1 1 | | | 1 0 | 1 1 |
| 1 1 | 0 0 | | | 1 1 | 0 0 |
| 1 1 | 0 1 | | | 1 1 | 0 1 |
| 1 1 | 1 0 | | | 1 1 | 1 0 |
| 1 1 | 1 1 | | | 1 1 | 1 1 |

$ETG_{n-1}$                                                              $ETG_n$

# FIG.20

# FIG.21

# FIG.22

## FIG.23

FIG.24

FIG.25

ETG<sub>n-1</sub>

ETG<sub>n</sub>

## FIG.26

# FIG.27

EP 1 213 884 B1

64

## FIG.28

## FIG.29

EP 1 213 884 B1

# FIG.30

# FIG.31